(19) Europäisches Patentamt
European Patent Office
Office européen des brevets

(11) **EP 2 310 925 B1**

(12) **FASCICULE DE BREVET EUROPEEN**

(45) Date de publication et mention
de la délivrance du brevet:
**22.01.2014   Bulletin 2014/04**

(21) Numéro de dépôt: **09737086.0**

(22) Date de dépôt: **20.07.2009**

(51) Int Cl.:
***G05D 11/13*** *(2006.01)*

(86) Numéro de dépôt international:
**PCT/FR2009/051443**

(87) Numéro de publication internationale:
**WO 2010/015766 (11.02.2010 Gazette 2010/06)**

(54) **PROCEDE ET DISPOSITIF D' ELABORATION D' UN MELANGE DE CONSTITUANTS AVEC CONTRAINTES, NOTAMMENT AVEC PRE-MELANGE**

VERFAHREN UND EINRICHTUNG ZUM AUSARBEITEN EINER MISCHUNG VON BESTANDTEILEN MIT BESCHRÄNKUNGEN, INSBESONDERE MIT VORMISCHUNG

METHOD AND DEVICE FOR PRODUCING A MIXTURE OF CONSTITUENTS WITH CONSTRAINTS, ESPECIALLY WITH PREMIXING

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **04.08.2008   FR 0804422**

(43) Date de publication de la demande:
**20.04.2011   Bulletin 2011/16**

(73) Titulaire: **Total Raffinage Marketing**
**92800 Puteaux (FR)**

(72) Inventeurs:
• **PETIT, Nicolas**
**92330 Sceaux (FR)**

• **CREFF, Yann**
**38138 Les Cotes D'arey (FR)**
• **CHEBRE, Mériam**
**38780 Septeme (FR)**

(74) Mandataire: **Radault, Gabrielle**
**Fédit-Loriot**
**38, avenue Hoche**
**75008 Paris (FR)**

(56) Documents cités:
**CA-A1- 2 221 032     FR-A- 2 901 894**
**US-A- 4 395 290     US-A- 6 120 173**
**US-A- 6 159 255     US-A1- 2004 221 889**

## Description

L'invention concerne un procédé et un dispositif de contrôle de l'élaboration d'un mélange de constituants, notamment d'un mélange avec volumes morts de pré-mélange.

Elle s'applique plus particulièrement à la régulation automatique des mélanges de constituants en ligne, tels que par exemple des mélanges de produits pétroliers, dans lesquels les mélanges élaborés sont conformes à un ensemble de spécifications ou de paramètres significatifs. Dans ces applications, chaque produit contenu dans le mélange agit sur l'ensemble des caractéristiques ou des paramètres du mélange final obtenu.

L'invention s'applique notamment à l'élaboration de mélanges dans lesquels les caractéristiques ou les paramètres des différents constituants sont mal connus ou peuvent évoluer pendant l'élaboration du mélange. Les mélanges de produits pétroliers en particulier, présentent ces aspects, mais le procédé et le dispositif de l'invention peuvent s'appliquer à des mélanges d'autres produits, par exemple tels que les ciments, les peintures, etc...

Dans tous les cas, il s'agit d'obtenir un mélange ayant un état ou présentant des paramètres de constitution définis à l'avance. Ces paramètres concernent les caractéristiques physico-chimiques des mélanges à obtenir. Pour un mélange de produits pétroliers, par exemple, ces paramètres pourront être la teneur en soufre du mélange, son indice d'octane, etc... Pour un mélange de ciments, les paramètres seront par exemple, la teneur en chaux, le module silicique, le module alumino-ferrique, etc...

Les procédés et dispositifs connus dans l'état de la technique permettent d'élaborer un mélange en ligne ou en boucle fermée, c'est-à-dire avec une rétroaction à partir d'informations mesurées en temps réel, en continu ou périodiquement, à partir d'appareils de mesure (analyseurs en ligne) disposés en aval de l'installation de mélange (mélangeuse). Ces procédés et dispositifs s'appliquent généralement sur des flux de constituants provenant de bacs de produits intermédiaires.

Une rétroaction typique utilise l'écart entre une consigne cible et la mesure. Il s'agit d'une rétroaction par retour de sortie.

Une autre rétroaction typique consiste à corriger les prédictions des caractéristiques ou paramètres du mélange, en leur ajoutant un terme qui est le résultat d'un filtrage au premier ordre de la différence entre la mesure et la prédiction sans correction.

Le document US 6 120 173 A décrit un système de contrôle des proportions d'un mélange pour la fabrication de ciment dont l'objectif est d'améliorer la convergence entre les propriétés du mélange et les propriétés cibles du mélange et de réduire les changements brusques de contrôle du mélange par rapport à des méthodes de contrôle en boucle fermée qui utilisent en entrée la déviation des propriétés du mélange par rapport aux propriétés cibles du mélange et génèrent de nouvelles propriétés cibles à atteindre à l'étape suivante. A cet effet, le document US 6 120 173 A décrit un système dans lequel un contrôleur utilise des valeurs cibles et la composition chimique des matériaux de base pour générer des actions de commande et changer en continu les proportions des matériaux de base. Dans le modèle décrit, les propriétés des constituants sont soit mesurées en ligne, soit considérées comme ne changeant pas au cours du mélange, alors que les valeurs des propriétés du mélange sont mesurées au cours d'une première étape au moyen d'un capteur, puis calculées. Ce document ne fait pas allusion à l'estimation des propriétés des constituants du mélange, ni aux problèmes liés à une mauvaise estimation des propriétés de ces constituants.

Le document US 2004/221889 A1 décrit un procédé et un système pour contrôler un mélange de fluides. L'objectif de ce document est de proposer une méthode d'optimisation simultanée de grandeurs dites quantitatives (type pression) et de grandeurs dites qualitatives (type propriétés d'un mélange) d'un processus de mélange de fluides, gaz ou liquides. Les valeurs courantes de quantités (associées aux constituants du mélange ou aux débits sortant du système de mélange) et de qualités (associées aux constituants du mélange) sont déterminées dans une première étape. Dans l'étape suivante, le contrôle est déterminé au moyen d'un processus de rétroaction. En particulier, un filtre de Kalman étendu permet de modifier les prédictions, faites par le modèle lors du calcul de la commande, en ajoutant à la sortie prédite l'intégrale de l'écart de prédiction. Dans ce procédé, les écarts mesurés sur les qualités du mélange ne sont pas imputés aux qualités des constituants.

Ces rétroactions typiques présentent l'inconvénient de s'appliquer sur le mélange en sortie mélangeuse, et non sur les caractéristiques des constituants en amont de la mélangeuse.

Les régulations utilisées prennent généralement en compte des contraintes de qualité de mélange à fabriquer, ainsi que des contraintes liées aux voies d'alimentation en constituants (par exemple limites liées aux contraintes hydrauliques telles que le dimensionnement des pompes, contraintes d'homogénéité sur les proportions calculées, dont la somme doit être égale à 1 sur l'ensemble des voies). Elles permettent également de piloter le débit total de production de mélange.

Les dispositifs et procédés connus présentent l'inconvénient d'assurer la tenue des différentes spécifications du mélange en fonction de propriétés de mélange intégrées (cumulées ou moyennées en volume) dans un bac de destination du mélange situé immédiatement en aval de la mélangeuse. La mesure des propriétés du mélange est en effet effectuée en général sur le mélange instantané en sortie de mélangeuse, en amont du bac de destination du mélange, ces mesures permettant d'obtenir une estimation de la qualité intégrée (coulée sortie mélangeuse ou dans le bac) qui est l'objet de la régulation en mode intégré mélange ou intégré sur bac (la définition de ces modes est donnée plus loin).

Si ces procédés et dispositifs fonctionnant en mesure intégrée sont bien adaptés à des aires de mélange traditionnelles, avec des bacs de constituants, en coulée-vidange éventuelle c'est-à-dire alimenté au fur et à mesure de leur consommation, et un bac de destination du mélange, ils sont insuffisants pour un fonctionnement avec un flux continu direct en amont des constituants, et éventuellement, une expédition directe en continu du mélange élaboré, sans passage par un bac de destination.

Ils sont en effet dépendants des qualités des constituants, qui peuvent varier, notamment lors d'un flux amont continu des constituants.

Par ailleurs, dans une configuration de flux aval continu direct du mélange, les proportions des constituants du mélange obtenu par les dispositifs connus sont corrigées en tenant compte du volume de mélange présent dans le bac de destination. Ainsi, au cours de l'élaboration d'un volume donné de mélange dans le bac de destination, les propriétés du mélange sont susceptibles de varier fortement, ce qui ne serait pas acceptable pour une expédition directe en continu du mélange.

Un autre inconvénient des dispositifs et procédés connus est qu'ils gèrent difficilement les infaisables par solution de compromis optimal. C'est-à-dire, lorsqu'une ou plusieurs contraintes ne peuvent être respectées, la solution obtenue conduit à un mélange dont on ne maîtrise pas correctement l'écart aux spécifications requises.

Les procédés de rétroaction traditionnels sont également insuffisants pour gérer une synchronisation des installations comprenant des pré-mélanges de constituants en amont, en particulier en cas de pré-mélanges multiples en série et/ou en parallèle. De tels pré-mélanges engendrent en effet un retard sur les flux de certains constituants qui nécessitent l'utilisation de marges de fabrication importantes afin de respecter les spécifications du mélange dans le bac de destination, mais qui induisent une sur qualité non nécessaire et coûteuse. En outre, ce défaut de synchronisation peut conduire à des pompages (oscillations) entraînant une sollicitation abusive des organes de commande pouvant conduire à leur usure prématurée.

Enfin, les procédés et dispositifs connus régulent généralement de façon indépendante d'une part la proportion des constituants, d'autre part l'injection d'additifs pour régler de façon découplée les spécifications du mélange. Cette indépendance de régulation ne permet pas d'économiser des injections coûteuses d'additifs.

Les procédés et dispositifs connus assurent également le pilotage du débit total de mélangeuse, en prenant en compte des contraintes de limite haute et basse, liées à des limitations hydrauliques (dimensionnement des pompes sur les voies choisies en amont et aval de mélangeuse) ainsi qu'à des limitations économiques (contraintes d'ordonnancement), et permettent notamment de maximiser le débit pour raccourcir les temps de fabrication, tout en réduisant automatiquement l'allure dans le cas d'une contrainte active d'applicabilité de la recette calculée.

L'objectif de la présente invention est de proposer un procédé de contrôle de l'élaboration d'un mélange, et un dispositif correspondant, remédiant à ces inconvénients.

Notamment, le procédé de contrôle selon l'invention assure une rétroaction de régulation multi variable par un observateur dynamique permettant une estimation en temps réel des propriétés des constituants du mélange, suffisante pour garantir l'efficacité de la boucle de rétroaction. Ainsi, les propriétés désirées du mélange sont garanties malgré des incertitudes importantes sur les propriétés des constituants d'une part, et une connaissance partielle du processus de mélange d'autre part.

Dans une précédente demande, FR 2901894, la Demanderesse a élaboré un procédé de contrôle de l'élaboration d'un mélange M de n constituants, ce procédé permettant de déterminer les proportions u des constituants entrant dans le mélange de manière à obtenir un nombre m de propriétés prédéterminées y du mélange dont les valeurs sont comprises entre des seuils minima et maxima prédéterminés et/ou sont sensiblement égales, pour m' d'entre elles ($m' \leq n$ -1), à des valeurs cibles prédéterminées, ledit procédé comprenant les étapes suivantes :

(i) à un instant t=0,

(1) on détermine une matrice B représentant un nombre m de propriétés y des n constituants;
(2) on détermine une recette de référence $\overline{u}$ à partir des seuils minima et maxima prédéterminés et/ou des valeurs cibles prédéterminées, telles que les propriétés $B\overline{u}$ du mélange soient comprises entre lesdits seuils prédéterminés, et/ou pour m' d'entre elles, égales aux dites valeurs cibles prédéterminées ; $\overline{u}$, étant un vecteur de dimension n, représentant les proportions des différents constituants entrant dans la composition du mélange, avec $\sum_{i=1}^{n} \overline{u}_i = 1$ ;

(3) on applique la recette $\overline{u}$ aux constituants afin d'élaborer un mélange M ;

(ii) à l'instant t' = t+Δt,

(1) on mesure les propriétés y mes du mélange M obtenu en appliquant la recette calculée à l'instant précédent,
(2) on en déduit une matrice corrigée $\hat{B}$ représentant l'estimée des propriétés des constituants,
(3) on détermine une nouvelle recette u, de sorte que les propriétés $\hat{B}u$ du mélange soient comprises entre lesdits seuils prédéterminés, et/ou pour m' d'entre elles, égales aux dites valeurs cibles prédéterminées,
(4) on applique cette nouvelle recette u aux constituants,

(iii) à l'instant t" = t' +Δt, on réitère les opérations (1) à (4) de l'étape (ii) précédente;
(iv) l'étape (iii) est réitérée pendant toute la durée de l'élaboration du mélange.

Ainsi, à l'instant initial t=0, une matrice $B_0$ est déterminée, par exemple à partir des données fournies par les fabricants des constituants, ou de mesures de laboratoires, puis mise à jour au fur et à mesure de l'élaboration du mélange.

On notera que les seuils minima et maxima prédéterminés, ainsi que les valeurs cibles prédéterminées, peuvent être modifiées au cours du mélange.

Ce procédé présente l'avantage de réactualiser l'estimation des propriétés des constituants, ce qui permet de tenir compte des variations de leurs propriétés au cours du temps afin de maintenir les spécifications souhaitées du mélange. Cette approche originale permet de s'affranchir des imprécisions et incertitudes des propriétés des constituants dues aux erreurs de mesure, aux défauts/pollutions, à une homogénéisation incomplète ou à une stratification des bacs, à la variabilité dans le temps des différents constituants. Ce procédé peut ainsi être utilisé avantageusement dans des installations avec un flux continu direct en amont des constituants.

Cependant, l'estimateur tel qu'il est revendiqué dans ce procédé présente des inconvénients notables comme par exemple d'estimer des propriétés des constituants qui sont parfois forts éloignés de la réalité. On observe notamment dans certains cas particuliers caractérisés par de mauvaises connaissances des constituants de mélange, des ralentissements du processus de convergence, voire pas de convergence du tout ce qui se traduit par l'obtention de caractéristiques estimées hors plage physique, nulles voire négatives (ce qui peut conduire à des variations de commande dans le sens contraire au sens attendu) ce qui ne correspond jamais à la réalité. De tels phénomènes sont souvent sporadiques et temporaires mais ont pour conséquence la fabrication de mélanges de mauvaise qualité ou qui prennent plus de temps que nécessaire et donc l'obligation de reprendre leur fabrication en raffinerie pour composer de nouveaux mélanges dont les caractéristiques sont compatibles avec les spécifications du produit attendu. C'est coûteux en temps et en disponibilité d'unités pour refaire ces mélanges.

La présente invention a pour objectif d'améliorer ce procédé, en améliorant d'une part l'aide au diagnostic et la maîtrise de l'estimation des propriétés afin de limiter les écarts par rapport à la qualité réelle des constituants du mélange et d'autre part en améliorant la rapidité de fabrication du mélange et la robustesse du procédé.

D'une part, le procédé selon l'invention permet en effet, non seulement d'assurer une boucle de rétro-action avec garantie de convergence entre la prédiction et la mesure, dans l'espace de qualité du mélange sortant, c'est-à-dire l'espace défini par les domaines de spécifications requises du mélange en sortie, assurant ainsi la réussite des mélanges réels.

D'autre part, le procédé selon l'invention permet d'accroître la robustesse aux dérives constatées en cas d'incertitude résiduelle sur les constituants (propriété variable, mauvaise homogénéisation de bac, ...). Ceci se traduit par une meilleure convergence dans certains cas difficiles de mélange, ou une convergence plus rapide, donc un temps de réalisation du mélange plus court et une plus grande disponibilité des équipements pour produire davantage de produits. Il est ainsi possible d'augmenter les volumes fabriqués ou d'améliorer la flexibilité de fabrication des mélanges.

A cet effet et selon les termes de la revendication 1, la Demanderesse a introduit dans l'étape (ii) une correction de la matrice $\hat{B}$ par au moins une opération de correction introduisant au moins une contrainte correspondant à des contraintes de bornes, de relation d'ordre et/ ou d'égalité.

Ces nouvelles contraintes, qui peuvent ne pas être définies lors du calcul de la recette de référence, sont indépendantes et distinctes des seuils minima et maxima pré-déterminés et des valeurs cibles prédéterminées définis au départ · pour les objectifs du mélange à fabriquer. Par exemple, les bornes peuvent être choisies soit à partir des dernières analyses de laboratoire disponibles sur les bases et constituants ou d'échelles connues a priori, saisies manuellement ou configurées pour une mélangeuse donnée. Les relations d'ordre peuvent être définies de façon conditionnelle en lien avec des éléments exogènes (de type présence ou non d'objectif de tendance d'incorporation de bases). Ces contraintes peuvent être définies ou non et donc rajoutées, propriété par propriété sur un mélange donné (l'affectation des contraintes pouvant être flexible et contextuelle sur le mélange considéré, elle ne sera généralement pas figée en configuration de réglage de la mélangeuse concernée). Ainsi, on peut définir des contraintes sur la teneur en soufre en spécifiant des bornes ou teneurs en soufre minimales et maximales pour l'ensemble des bases ou encore des relations d'ordre ou des égalités entre des bases selon leur teneur en soufre, cela permet de fixer un ordre de préférence pour l'utilisation d'une base par rapport à une ou plusieurs autres pour arriver au mélange dont la spécification doit être impérativement respectée. Ces contraintes de borne, d'égalité et/ou de relation d'ordre sont imposées de façon systématique sur l'ensemble des bases au cours du temps pour certaines mesures ou pour le choix équivalent ou préféré d'une ou plusieurs bases pour le mélange à fabriquer.

Grâce à l'introduction de ces nouvelles contraintes, les propriétés estimées peuvent être utilisées comme indication de l'évolution de la qualité des constituants (indépendamment du calcul de la recette qui leur est associée pour piloter le mélange). Les propriétés estimées des constituants peuvent être utilisées comme une information de diagnostic indépendante du contrôle de la mélangeuse, et permettent d'améliorer la connaissance des constituants utilisés (détection d'un constituant de qualité suspecte, ...).

Avantageusement, les propriétés y mes du mélange mesurées au cours de l'opération (1) de l'étape (ii) sont mesurées au moyen d'un processus continu de mesure sur le mélange élaboré. Par processus continu de mesure, on entend soit une mesure effectuée en continu lorsque sa nature le permet, soit une succession de prélèvements d'échantillon et de mesures de ces échantillons.

Ces mesures instantanées sur le mélange, dès sa formation, permettent d'utiliser le procédé pour une installation dont le mélange est distribué directement en continu. Le procédé est alors en mode instantané.

Le procédé selon l'invention présente l'avantage de pouvoir fonctionner en mode intégré, les mesures pouvant alors être cumulées ou moyennées en volume dans un bac de destination du mélange. On peut également prévoir de basculer du mode intégré au mode instantané (ou l'inverse) en cours d'élaboration du mélange.

Par exemple, ce basculement peut être réalisé manuellement par un opérateur afin de modifier en cours de mélange le mode de régulation requis.

Le basculement peut également être effectué automatiquement, sur séquence, par exemple en fin de mélange, au bout d'un volume écoulé atteint, et en tenant compte du volume restant à fabriquer. Cette configuration est utilisée notamment pour garantir une expédition directe par oléoduc, ou encore pour garantir la qualité de la totalité du produit résiduel sur les lignes, dans le cas de volumes de lignes importants entre une mélangeuse et un bac de stockage de produit fini situé sur une aire de stockage éloignée.

Avantageusement, à un instant prédéterminé au cours de l'élaboration du mélange, on mesure une ou plusieurs propriétés des constituants et l'on met à jour la matrice $\hat{B}$ représentant les propriétés des constituants. Il est ainsi possible, sans nécessiter de réinitialiser le procédé, de mettre à jour par une mesure une ou plusieurs propriétés d'un constituant, ce qui permet d'améliorer l'estimation de la ou des propriétés de ce constituant. La vitesse de mise à jour peut être réglable propriété par propriété pour chaque constituant.

Selon la présente invention, on peut corriger la matrice B par au moins une opération de correction pour introduire au moins une contrainte correspondant à des contraintes de bornes, de relation d'ordre et/ou d'égalité, sur au moins une des propriétés. Cette opération de correction consiste à modifier la valeur initiale de B qui est $B_0$, correspondant à l'équation (1) suivante

$$\frac{d\hat{B}_j^t}{dt} = -\beta_j Hu(y_j - y_j^{mes}) \quad (1)$$

dans laquelle

- $\beta_j$, réel strictement positif, est une constante de réglage du temps de convergence permettant de différencier la rapidité de convergence de l'estimation, propriété par propriété.
- la matrice H est une matrice symétrique définie positive ayant pour utilité d'assurer une normalisation de la prise en compte de l'écart mesure-prédiction permettant le calcul d'écart de prédiction de qualité des constituants, afin d'assurer les propriétés de convergence du procédé.

- $\hat{B}_j^t$ est la transposée de $\hat{B}_j$, avec j indice des propriétés du mélange,

la modification de $\hat{B}$ étant obtenue par substitution de l'équation (1) par une équation correspondant à une nouvelle loi d'adaptation et/ou par l'ajout d'un terme supplémentaire $\delta$.

Autrement dit, pour corriger la matrice $\hat{B}$, on modifie la valeur initiale de $\hat{B}$, soit $B_0$, en remplaçant l'équation (1) par une nouvelle équation différentielle correspondant à une nouvelle loi d'adaptation pour intégrer le respect asymptotique des contraintes visées et/ou en réalisant une opération d'ajout à la valeur de l'estimée $\hat{B}$ de valeur initiale $B_0$, estimée éventuellement modifiée par la précédente loi d'adaptation, d'un terme additif delta issu d'un calcul optimal pour le respect strict des contraintes visées.

Par loi d'adaptation, on entend l'équation différentielle (1) régissant l'estimation des propriétés des constituants.

La nouvelle loi d'adaptation selon l'invention consiste alors en une nouvelle équation différentielle remplaçant l'équation différentielle (1), ou en une modification du second membre de l'équation différentielle (1).

Dans une première forme de réalisation, la modification de la matrice $\hat{B}$ correspondant à la substitution de l'équation (1) par une équation correspondant à une nouvelle loi d'adaptation peut comprendre l'ajout d'une fonction complémentaire à l'équation (1) ou sa substitution par une autre équation indépendante.

Selon une première variante, la modification de la matrice $\hat{B}$ s'obtient en remplaçant l'équation (1) initiale par une équation comprenant l'ajout d'une fonction supplémentaire à l'équation (1) :

$$\frac{d\hat{B}'_j}{dt} = -\beta_j Hu(y_j - y_j^{mes}) + \lambda f(\hat{B}'_j) \quad (1.1)$$

dans laquelle

- f est une fonction non nulle, choisie selon un profil permettant d'introduire au moins une contrainte correspondant à des contraintes de bornes, de relation d'ordre et/ou d'égalité,
  $\lambda$ est un coefficient de pondération qui permet d'ajuster la rapidité de retour des propriétés estimées des constituants dans un domaine admissible défini par des bornes, et
- H est diagonale afin d'assurer les propriétés de convergence du procédé.

Différents choix de la matrice H, qui restera symétrique et définie positive, sont possibles pour assurer la convergence d'un tel système.

On peut par exemple utiliser la matrice H suivante, qui introduit un facteur de normalisation basé sur la recette initiale de référence :

$$\frac{1}{\|\bar{u}\|} \begin{pmatrix} \frac{1}{\bar{u}_1} & & \\ & \ddots & \\ & & \frac{1}{\bar{u}_n} \end{pmatrix}$$

La normalisation effectuée par la matrice H est particulièrement importante pour s'affranchir des effets d'échelles physiques d'une propriété à l'autre, et des sensibilités de variation différentes spécifiques à chaque propriété.

Cette normalisation permet ensuite de mieux moduler les écarts de prédiction calculés (après s'être affranchi des effets d'échelle), cette modulation pouvant se faire, par exemple, de façon proportionnelle à un terme lié à la recette courante, ramené à une recette de référence.

La constante $\beta_j$ permet de différencier la rapidité de convergence de l'estimation, propriété par propriété, et notamment, permet de pouvoir prendre en compte les spécificités de retard de mesure propre à chaque propriété.

A titre d'exemples de réglages de $\beta_j$, on pourra prendre des valeurs égales à deux à quatre fois le retard pur.

Par exemple, pour une propriété comme l'indice d'octane, associée à un retard de mesure de 10 minutes, $\beta$ sera réglée à 20 minutes.

Pour une propriété comme le pourcent distillé à 70°C, associée à un retard de mesure de 40 minutes (chromatographe en ligne), on pourra régler $\beta$ à 80 minutes.

La fonction f sera convenablement choisie pour conserver inchangées les propriétés de convergence du procédé, tout en introduisant des contraintes (de bornes, de relation d'ordre et/ou d'inégalités) à respecter sur les estimées résultantes. Elle assure ainsi une convergence asymptotique, garantissant le respect des contraintes en fin de convergence.

La fonction $f$, non nulle, peut être choisie selon un profil permettant d'orienter la convergence des propriétés estimées des constituants vers un ensemble de valeurs satisfaisant au moins une contrainte correspondant à des contraintes de bornes, de relation d'ordre et /ou d'égalité.

Cette fonction f peut être choisie selon un profil de type linéaire par morceaux ou logarithmique ou encore utilisant des calculs matriciels.

A titre d'exemple, les fonctions suivantes peuvent être mises en oeuvre.

Pour les contraintes de bornes, cette fonction f pourra ainsi prendre la forme suivante:

Soit un intervalle [$B_{min}$ , $B_{max}$] d'intérieur non vide contenant $B(i)$, $\forall i$,

$$f(y) = 0 \quad \text{si } y \in \left[ B_{\min}, B_{\max} \right]$$

$$f(y) \leq 0 \quad \text{si } y \geq B_{\max}$$

$$f(y) \geq 0 \quad \text{si } y \leq B_{\min}$$

Pour les contraintes de relation d'ordre, cette fonction f pourra ainsi prendre la forme suivante:

Soit m le nombre de bases soumises à la relation d'ordre : $B_j(1) \leq ... \leq B_j(m)$.

La loi d'adaptation pourra prendre la forme suivante:

$$\frac{d\hat{B}_j^t}{dt} = -\beta_j Hu\left(\hat{B}_j u - y_j^{mes}\right) + \lambda H \cdot f\left(\hat{B}_j\right) \quad (1.13)$$

où $\lambda \geq 0$.

Avec:

$$f\left(\hat{B}_j\right) = \begin{pmatrix} f_0(B_j^{\min} - \hat{B}_j(1)) \\ f_1\left(\hat{B}_j(1) - \hat{B}_j(2)\right) \\ \vdots \\ f_{m-2}\left(\hat{B}_j(m-2) - \hat{B}_j(m-1)\right) \\ f_{m-1}\left(\hat{B}_j(m-1) - \hat{B}_j(m)\right) \\ (0) \end{pmatrix} - \begin{pmatrix} f_1\left(\hat{B}_j(1) - \hat{B}_j(2)\right) \\ f_2\left(\hat{B}_j(2) - \hat{B}_j(3)\right) \\ \vdots \\ f_{m-1}\left(\hat{B}_j(m-1) - \hat{B}_j(m)\right) \\ f_m\left(\hat{B}_j(m) - B_j^{\max}\right) \\ (0) \end{pmatrix}$$

Et

$$\forall i \in \left[\!\left[ 1, m-1 \right]\!\right], f_i(y): \begin{cases} = 0 & \text{si } y \leq 0 \\ \geq 0 & \text{si } y \geq 0 \end{cases}$$

Pour les contraintes égalité, cette fonction f pourra ainsi prendre la forme suivante comme produit matriciel de H (normalisation), A (définie ci-après) et des estimées Bj:

$$\frac{d\hat{B}_j^t}{dt} = -\beta_j Hu\left(\hat{B}_j u - y_j^{mes}\right) + \lambda HA\hat{B}_j^t \quad (1.12)$$

On note m le nombre de sous-ensembles de constituants dont les propriétés j sont égales. On désigne un tel sous-ensemble un « jeu d'égalités ». On introduit la matrice A suivante, de taille n x n:

$$A = \begin{pmatrix} R_1 \\ \vdots \\ R_m \\ (0) \end{pmatrix}$$

où :

$$R_i = \begin{pmatrix} 1 & -1 & 0 & \cdots & & 0 \\ & 0 & \ddots & \ddots & (0) & \vdots \\ (0) & \vdots & (0) & \ddots & \ddots & 0 & (0) \\ & 0 & \cdots & 0 & 1 & -1 \\ & -1 & 0 & \cdots & 0 & 1 \end{pmatrix}$$

Selon une seconde variante, la modification de la matrice $\hat{B}$ s'obtient en remplaçant l'équation (1) initiale par une équation correspondant à la mise en oeuvre d'une nouvelle loi d'adaptation représentée par l'équation suivante :

$$\frac{d\hat{B}_j^t}{dt} = -\beta_j H \frac{1}{\delta t} \int_{t-\delta t}^{t} u\left(\hat{B}_j u - y_j^{mes}\right) ds \quad (1.2)$$

où $\delta t$ est la fenêtre temporelle d'intégration (i.e. la longueur de l'intervalle sur lequel on moyenne) et s la variable temporelle sous l'intégrale.

De préférence, $\delta t$ est inférieur à la fréquence de mise à jour des estimées.

La matrice corrigée $\hat{B}$ est ainsi déterminée en utilisant l'équation (1.2), qui permet d'exploiter une moyenne temporelle (fenêtre temporelle glissante) intégrant des commandes passées. Ce dispositif est utilisé de préférence dans le cas de mesures sporadiques des propriétés du produit résultant du mélange des constituants, non rafraîchies à chaque période de calcul.

Selon une troisième variante, la modification de la matrice $\hat{B}$ s'obtient en remplaçant l'équation (1) initiale par une équation correspondant à la mise en oeuvre d'une nouvelle loi d'adaptation. représentée par l'équation suivante :

$$\frac{d\hat{B}_j^t}{dt} = -\frac{\beta_j}{\delta t} H \int_{t-\Delta-\frac{\delta t}{2}}^{t-\Delta+\frac{\delta t}{2}} u(s)\left(\hat{B}_j u(s) - y_j^{mes}\right) ds \quad (1.3)$$

où $\delta t$ est la fenêtre temporelle d'intégration, $\Delta$ le retard de mesure et s la variable temporelle sous l'intégrale.

La variable temporelle s permet de travailler sur une fenêtre temporelle glissante autour du retard $\Delta$, fenêtre de largeur $\delta$.

Dans une deuxième forme de réalisation de l'invention, la modification de la matrice $\hat{B}$ s'obtient par ajout d'un terme supplémentaire $\delta$ à au moins une des équations (1), (1.1), (1.2) ou (1.3) et correspond au calcul suivant :

$$\hat{B}complète_j = (\hat{B}_j + \delta^t) \quad (1.4)$$

dans lequel le vecteur $\delta$ satisfait l'équation $\delta * u = 0$, afin que les prédictions soient inchangées (iso-prédiction) en vertu de l'équation :

$$y = \hat{B}_j * u = (\hat{B}_j + \delta^t) * u \quad (1.5)$$

$\hat{B}complète_j$ remplace alors la matrice corrigée $\hat{B}$ de l'étape (ii) de l'invention.

Le vecteur $\delta$ est déterminé de manière à assurer un respect des contraintes sur le mélange de façon systématique, à chaque instant. Il est défini propriété par propriété pour les estimées de chaque constituant. Ce vecteur permet notamment de répartir l'écart constaté en sortie du dispositif entre les mesures en laboratoire des propriétés des constituants et les propriétés estimées de ces constituants, cette répartition étant effectuée sur les constituants en entrée et étant orientée de façon préférentielle vers une direction choisie par exemple en fonction d'une nouvelle analyse en laboratoire, du bac en coulée vidange, ...), sans altération des propriétés de convergence du procédé.

Le calcul de $\delta$ peut faire l'objet d'un calcul algébrique direct ou d'une résolution par optimisation sous contraintes.

Suivant les choix qui sont faits pour le calculer, le vecteur $\delta$ permet d'orienter les propriétés estimées vers des directions particulières, comme par exemple la valeur d'une nouvelle analyse de laboratoire de constituant. Cette correction $\delta$ peut aussi être utilisée pour privilégier le confinement de certains constituants issus de bacs isolés, dont les propriétés estimées doivent rester proches de leur analyse laboratoire de référence, par rapport à ceux issus de bacs en coulée-vidange (bac de constituant alimenté en permanence), de propriétés variables dans le temps, assujetties à des perturbations et pour lesquelles on a intérêt à libérer le dispositif d'estimation.

Le calcul de $\delta$ peut, outre la contrainte d'iso-prédiction $\delta * u = 0$, prendre en compte d'autres contraintes portant sur les propriétés estimées des constituants : égalité de propriétés, bornes sur les propriétés, relations d'ordre total ou partiel. L'avantage de ce dispositif est le respect à tout instant, et non pas seulement asymptotiquement, ces différentes contraintes.

La valeur calculée de $\delta$ est ajoutée à la matrice des propriétés estimées des constituants suivant l'équation (1.4), soit de manière systématique à chaque itération, soit de manière conditionnelle.

Pour prendre en compte la ou les étapes de pré-mélange de constituants avant la constitution du mélange, la recette u déterminée au cours de l'opération (3) de l'étape (ii) du procédé selon l'invention prend en compte les retards dus aux volumes morts présents dans l'installation au niveau des zones de pré-mélange.

Cette synchronisation permet d'améliorer l'élaboration du mélange et le respect des consignes de propriétés du mélange. Elle permet également de réduire les marges de fabrication, et ainsi de contrôler plus précisément les flux de constituants, et d'éviter la sur qualité. Enfin, ce contrôle plus précis des flux de constituants limite les pompages, et par là même une sollicitation abusive des organes de commande de l'installation. Cette synchronisation permet également une meilleure robustesse lors des variations du débit total de la mélangeuse.

Avantageusement, au cours de l'opération de correction de la matrice $\hat{B}$, la variable u utilisée dans l'une des équations (1.1), (1.2), (1.3) et (1.4) mise en oeuvre est remplacée par une variable U définie par le vecteur recette U(t) prenant en compte les volumes morts à l'instant t tel que

$$U(t) = (U_1(t),...U_n(t))^t$$

Plus particulièrement, dans la première variante de la première forme de réalisation des modifications de la matrice $\hat{B}$, celle-ci est déterminée en utilisant l'équation suivante :

$$\frac{d\hat{B}_j^t}{dt} = -\beta_j HU(t)(y_j(t) - y_j^{mes}(t)) + \lambda f(\hat{B}_j^t), \quad (2.1)$$

avec $f$ et $\lambda$ tels que définis en référence à l'équation (1.1), et $y(t) = \sum_{i=1}^{n} U_i(t)b_i$, $b_i$ étant le vecteur des propriétés du constituant i.

Dans la deuxième variante de la première forme de réalisation des modifications de la matrice $\hat{B}$, celle-ci est déterminée en utilisant l'équation suivante :

$$\frac{d\hat{B}_j^t}{dt} = -\beta_j H \frac{1}{\delta t} \int_{t-\delta t}^{t} U\left(\hat{B}_j U - y_j^{mes}\right) ds \quad (2.2)$$

Dans la troisième variante de la première forme de réalisation des modifications de la matrice $\hat{B}$, celle-ci est déterminée en utilisant l'équation suivante :

$$\frac{d\hat{B}_j^t}{dt} = -\frac{\beta_j}{\delta t} H \int_{t-\Delta-\frac{\delta t}{2}}^{t-\Delta+\frac{\delta t}{2}} U(s)\left(\hat{B}_j U(s) - y_j^{mes}\right) ds \quad (2.3)$$

où $\delta t$ est la fenêtre temporelle d'intégration, $\Delta$ le retard de mesure et s la variable temporelle sous l'intégrale.

Dans la deuxième forme de réalisation des modifications de la matrice $\hat{B}$ le vecteur $\delta$ satisfait l'équation $\delta * U= 0$, afin que les prédictions soient inchangées (iso-prédiction) en vertu de l'équation :

$$y = \hat{B}_j^t * U = (\hat{B}_j^t + \delta) * U \quad (2.5)$$

Avantageusement, les grandeurs de commande et de sortie entrant dans cette équation sont synchronisées pour tenir compte du retard de pré-mélange et du retard de mesure.

Les zones de pré-mélange et les analyseurs induisent en effet des retards. Selon la propriété mesurée, les retards d'analyseurs peuvent être considérés comme constants ou variables en fonction de la valeur mesurée. Afin de compenser ces retards, le procédé selon l'invention utilise un dispositif de synchronisation qui prédit les valeurs futures des propriétés (à partir des caractéristiques des constituants et des derniers pourcentages calculés), sachant que la mesure correspondante qui sera fournie par l'analyseur ne sera pas encore disponible à ce moment là à cause du retard d'analyse (incluant le retard de la boucle d'échantillonnage et le retard d'analyseur).

Par exemple, dans le cas de retards de mesure variables, on utilise une table de correspondance permettant d'associer plusieurs valeurs de retards dans des intervalles de fonctionnement donnés : on obtient alors un profil de retard constant par morceaux, le niveau de retard variant automatiquement lorsque l'on change de plage de fonctionnement. Ce niveau de retard induit ensuite une nouvelle synchronisation des prédictions avec les mesures.

Avantageusement, dans le procédé de contrôle selon l'invention, la recette u déterminée à la fin de l'étape (ii) est obtenue au moyen d'un procédé d'optimisation comprenant des étapes séquentielles au cours desquelles la solution d'un problème minimal respectant un minimum de contraintes prioritaires est recherchée si un problème complet respectant la totalité des contraintes est infaisable, le nombre de contraintes prioritaires à respecter augmentant à chaque étape, jusqu'à obtenir une recette u respectant le maximum de contraintes prioritaires.

Ces étapes sont par exemple les suivantes :

(a) - déterminer la solution d'un problème de régulation complet P0, cette solution consistant en une recette u optimisée prenant en compte des contraintes sur les proportions des constituants et des contraintes sur les propriétés du mélange,

- si le problème de régulation complet P0 est solvable, on applique la recette u, solution de P0,

(b) - si le problème de régulation complet P0 n'est pas solvable, déterminer une recette u pour laquelle un problème de régulation minimal P1 est résolu, qui ne prend en compte que des contraintes du problème P0 définies comme prioritaires, ce problème P1 met en oeuvre une succession de problèmes d'optimisation, normalement faisables, dont les critères consistent à pénaliser la violation desdites contraintes prioritaires, afin de définir de nouvelles valeurs atteignables pour ces contraintes prioritaires,

(c) - si le problème de régulation minimal P1 est solvable, déterminer une recette u pour laquelle un problème de régulation P2 est résolu, qui prend en compte lesdites nouvelles valeurs atteignables des contraintes prioritaires du problème P0 ainsi que des contraintes non prioritaires du problème P0, ce problème P2 met en oeuvre un problème d'optimisation dont les critères consistent à pénaliser la violation desdites contraintes non prioritaires, afin de définir de nouvelles valeurs atteignables pour ces contraintes non prioritaires,

- si le problème de régulation minimal P1 n'est pas solvable, on applique la recette u actuelle (c'est-à-dire la recette appliquée avant l'optimisation de l'étape (ii)),

(d) - si le problème de régulation P2 est solvable, déterminer une recette u pour laquelle un problème de régulation P3 est résolu, qui prend en compte lesdites nouvelles valeurs atteignables des contraintes prioritaires du problème P0 obtenues à l'étape (b), lesdites nouvelles valeurs atteignables des contraintes non prioritaires obtenues à l'étape (c), ainsi que toutes les autres contraintes non prioritaires du problème P0 et non traitées par les problèmes P1 et P2, ce problème P3 met en oeuvre une succession de problèmes d'optimisation, normalement faisables, dont les critères consistent à pénaliser la violation desdites autres contraintes non prioritaires, afin de définir de nouvelles valeurs atteignables pour ces autres contraintes non prioritaires,

- si le problème de régulation P2 n'est pas solvable, on applique la recette obtenue par le problème P1,

(e) si le problème de régulation P3 est solvable, la recette appliquée est la solution du problème P3, sinon, la recette est la solution du problème P2.

Les séquences d'optimisation (a) à (e) assurent une gestion optimale des priorités qui permet de traiter les problèmes infaisables en les dégradant jusqu'à obtenir un ensemble de contraintes faisables. Ces séquences d'optimisation présentent l'originalité de chercher la solution d'un problème minimal si le problème complet est infaisable, puis d'augmenter progressivement le nombre de contraintes, au lieu de diminuer progressivement le nombre de contraintes, comme dans les séquences d'optimisation classiques. De cette manière, il est possible d'obtenir une recette u qui respecte toujours au mieux les contraintes définies comme prioritaires.

Avantageusement, les contraintes non prioritaires traitées par le problème P2 concernent les références, et sont dites "de régulation" correspondant aux équations de régulation sur consigne fixe.

Avantageusement, les étapes (b) et (d) sont elles-mêmes des séquences d'optimisation qui peuvent être découpées en étapes, tel que décrit ci-après.

L'étape (b) est de préférence constituée des étapes ($b_i$) où l'on traite successivement les contraintes dures (prioritaires) de rang décroissant. Au cours de chaque étape ($b_i$), on veut trouver une relaxation optimale fournissant la valeur de toutes les contraintes dures de même rang i, qui deviennent des contraintes atteignables, en prenant en compte les contraintes prioritaires sur les proportions des bases et les contraintes atteignables sur les propriétés du mélange de rang j>i, éventuellement relaxées aux étapes $b_j$ précédant l'étape courante $b_i$.

L'étape (d) est de préférence constituée des étapes ($d_i$) où l'on traite successivement les contraintes douces (non prioritaires) de rang décroissant. Au cours de chaque étape ($d_i$), on veut trouver une relaxation optimale fournissant la valeur de toutes les contraintes douces de même rang i, qui deviennent des contraintes atteignables, en prenant en compte les contraintes prioritaires sur les proportions des bases, les contraintes atteignables sur les propriétés du mélange de rang dur éventuellement relaxées aux étapes ($b_i$), les contraintes atteignables en terme de cible de régulation sur les propriétés régulées sur cible calculées à l'étape (c), et enfin, les contraintes douces atteignables sur les propriétés de rang j>i, éventuellement relaxées aux étapes $d_j$ précédent l'étape courante $d_i$.

Avantageusement, la séquence d'optimisation peut comprendre une étape supplémentaire au cours de laquelle, si le problème de régulation précédent P3 est solvable, on détermine une recette u pour laquelle le problème de régulation P0 est résolu en prenant en compte lesdites nouvelles valeurs atteignables déterminées lors des étapes (b), (c), (d).

Il est ainsi possible d'assurer une orientation optimisée de recette calculée, par exemple en maximisant ou minimisant certains constituants, de façon hiérarchisée, ou en minimisant l'écart entre la recette à calculer et la recette initiale de référence, dès que l'on dispose de suffisamment de degrés de liberté.

Cette étape supplémentaire permet, dans certains cas, d'obtenir quand même une orientation optimale de la recette sur la totalité des contraintes initiales partiellement dégradées alors que le problème complet initial était infaisable.

Avantageusement, les contraintes prioritaires prises en compte pour la résolution du problème P1 sont des contraintes sur les proportions des constituants et des contraintes sur les propriétés du mélange.

Les contraintes sur les proportions des constituants incluent notamment des bornes simples sur les proportions de constituants et une contrainte sur la somme des proportions des constituants. Les contraintes prioritaires sur les propriétés du mélange sont éventuellement relaxées lors des itérations précédentes de P1. La solution recherchée est une recette u permettant de prendre en compte les contraintes prioritaires éventuellement relaxées sur les propriétés de mélange.

Dans le cas où le procédé est destiné à une installation de préparation d'un mélange de n constituants et d'additifs, pour une propriété j du mélange sur laquelle influe l'additif, le modèle de commande prend en compte l'effet d de l'ajout d'additif au cours des opérations (2) et (3) de l'étape (ii) selon : $y_j = \hat{B}_j u + d.$

L'invention concerne également un dispositif d'élaboration et de contrôle d'un mélange de constituants, comprenant des voies de transport des constituants à mélanger vers une voie principale reliée à l'emplacement de réception du mélange, des moyens pour commander les débits des constituants sur chaque voie de transport, des moyens de mesure en continu sur la voie principale des paramètres représentatifs du mélange en cours d'élaboration, et des moyens de calcul des proportions des différents constituants entrant dans le mélange, un estimateur relié aux moyens de calcul, l'estimateur comprenant des moyens programmés pour produire une estimation des propriétés des constituants en utilisant les mesures des propriétés du mélange mesurées par les moyens de mesure, les moyens de calcul comprenant des moyens programmés pour calculer au moyen de cette estimation les proportions des différents constituants entrant dans le mélange afin d'obtenir un mélange comportant des propriétés prédéterminées, ce dispositif étant caractérisé en ce que l'estimateur comprend des moyens programmés pour introduire au moins une contrainte correspondant à des contraintes de bornes, de relation d'ordre et/ou d'égalité, sur au moins une des propriétés pour corriger la matrice $\hat{B}$ de l'étape (ii) du procédé selon l'invention.

Par des moyens de mesure en continu, on entend des moyens aptes à mettre en oeuvre un processus continu de mesure, tel que défini plus haut.

Avantageusement, l'estimateur comprend des moyens programmés pour mettre en oeuvre les étapes (i) et (ii) du procédé selon l'invention, intégrant des informations externes supplémentaires telles que les dernières analyses de laboratoire des bacs de constituants, les indicateurs de bac en coulée vidange, et les cibles d'utilisation de bac en termes de tendance (maximisation/minimisation d'incorporation dans le mélange) et en termes de priorités relatives d'application des cibles de tendances d'incorporation visées.

Avantageusement, l'estimateur comprend des moyens de synchronisation programmés pour prendre en compte les retards dus aux volumes morts au niveau de zones de pré-mélange d'au moins deux constituants du mélange.

En variante, l'estimateur comprend des moyens de synchronisation programmés pour prendre en compte les retards dus aux volumes morts au niveau de plusieurs étages, au moins un étage étant constitué d'une ou plusieurs zones de pré-mélange d'au moins deux constituants du mélange.

Autrement dit, un étage est situé entre une arrivée de constituants, mélangés ou non, et une sortie de constituants, mélangés et non mélangés, et comprend au moins un pré-mélange d'au moins deux constituants (chacun de ces constituants pouvant être lui-même un mélange de constituants) arrivants fournissant un prémélange de ces constituants en sortie.

De préférence, ces moyens de synchronisation sont programmés pour mettre en oeuvre l'équation (2) de l'opération (2) de l'étape (ii) du procédé selon l'invention pour l'élaboration d'un mélange de constituants, dans lequel au moins un pré-mélange d'au moins deux des constituants est réalisé avant la préparation du mélange.

Avantageusement, le dispositif comprend un optimiseur relié aux moyens de calcul et à un moyen de stockage d'objectifs de mélange, l'optimiseur comprenant des moyens programmés pour optimiser la recette u des proportions des constituants déterminée par les moyens de calcul en fonction d'objectifs de mélange stockés dans ledit moyen de stockage.

De préférence, l'optimiseur comprend alors des moyens programmés pour mettre en oeuvre le procédé d'optimisation du procédé d'élaboration décrit plus haut.

Avantageusement, le dispositif comprend au moins un bac d'additif relié par une voie de transport à la voie principale, en aval de la zone de mélange des constituants, un moyen de commande du débit d'additif associé au bac prévu sur la voie de transport, et un contrôleur d'injection d'additif relié audit moyen de commande, à l'optimiseur et au moyen de stockage d'objectifs de mélange, le contrôleur d'injection d'additif étant apte, pour une propriété j du mélange sur lequel influe un additif, à optimiser la proportion de l'additif afin de réguler ladite propriété j correspondante du mélange en tenant compte d'une cible fournie par le moyen de stockage d'objectifs de mélange.

L'invention est maintenant décrite au moyen d'exemples et en référence aux dessins annexés, non limitatifs, dans lesquels :

- la figure 1 est une représentation schématique d'un dispositif d'élaboration d'un mélange de produits conforme à l'invention ;
- la figure 2 est un exemple de topographie d'un mélange de 6 bases comportant trois pré-mélanges ;
- la figure 3 représente un exemple de séquencement des problèmes d'optimisation ;
- la figure 4 représente l'évolution en fonction du temps de la teneur en soufre du mélange de l'exemple 7 ;
- la figure 5 représente l'évolution en fonction du temps des proportions des bases du mélange de l'exemple 7 ;
- les figures 6a-6e représentent l'évolution en fonction du temps des proportions des bases (figure 6a), et des qualités du mélange essence de l'exemple 8, à savoir, régulations RVP (figure 6b) et RON (figure 6c) et surveillance de zone pour le pourcent de distillé (figure 6d) et pour la teneur en benzène (figure 6e) ;
- les figures 7a-7f représentent l'évolution en fonction du temps des paramètres suivants du mélange gazole avec régulation par injection d'additifs de l'exemple 9 :

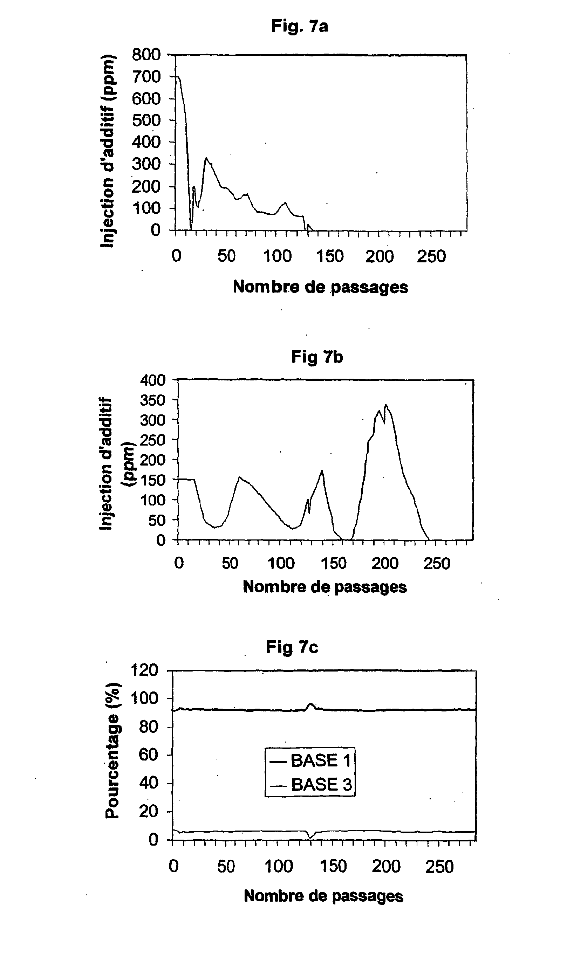

figure 7a : profil d'injection de dope influant sur l'indice de cétane
figure 7b : profil d'injection de dope influant sur la filtrabilité
figure 7c : ratio des bases 1 et 3 utilisées dans l'élaboration du mélange,

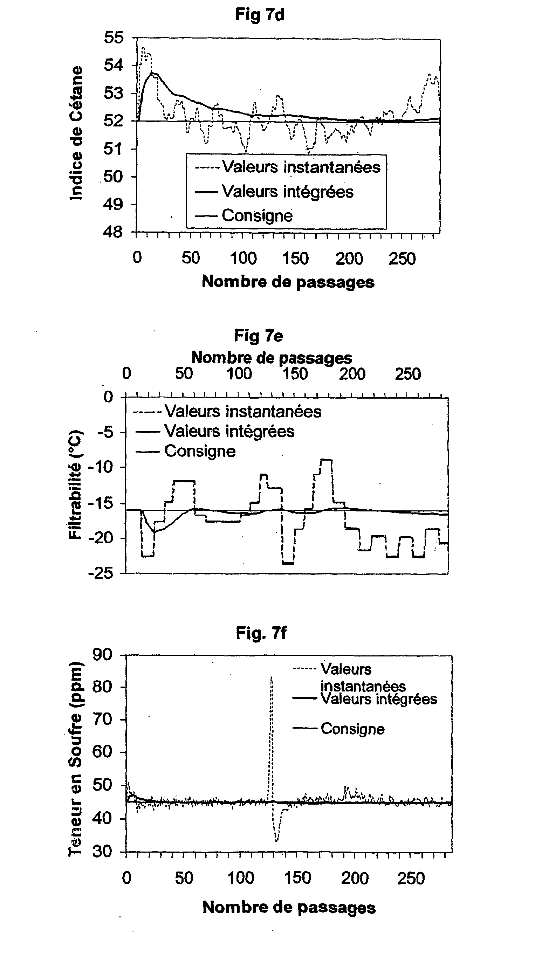

figure 7d : indice de cétane du mélange,
figure 7e : filtrabilité du mélange,
figure 7f : teneur en soufre du mélange.

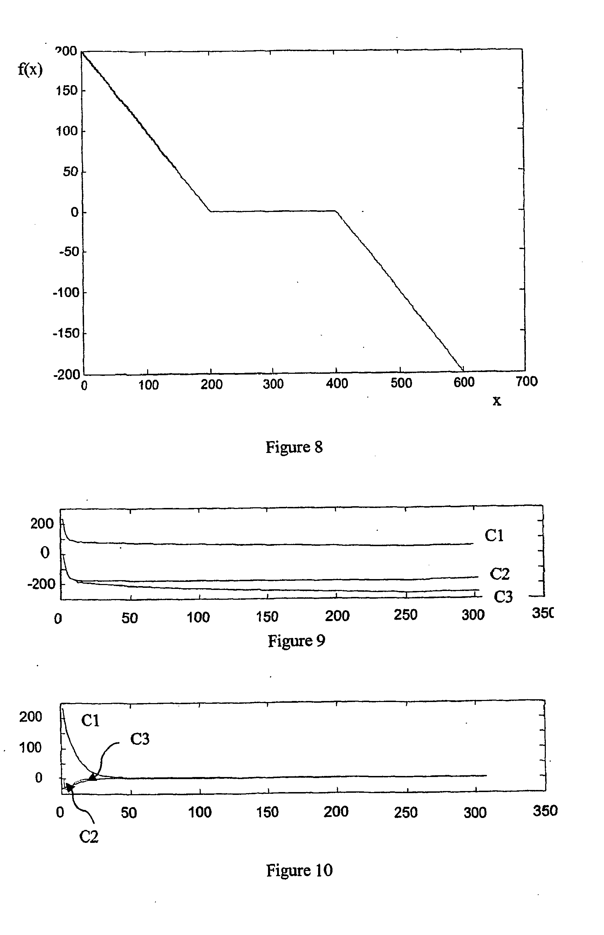

- La figure 8 représente le tracé de la fonction f décrite dans l'exemple 1.3.A.
- La figure 9 représente la propriété estimée du soufre utilisant un estimateur selon la précédente demande de la demanderesse
- La figure 10 représente la propriété estimée du soufre utilisant un estimateur corrigé selon la présente invention par un vecteur $\delta$.

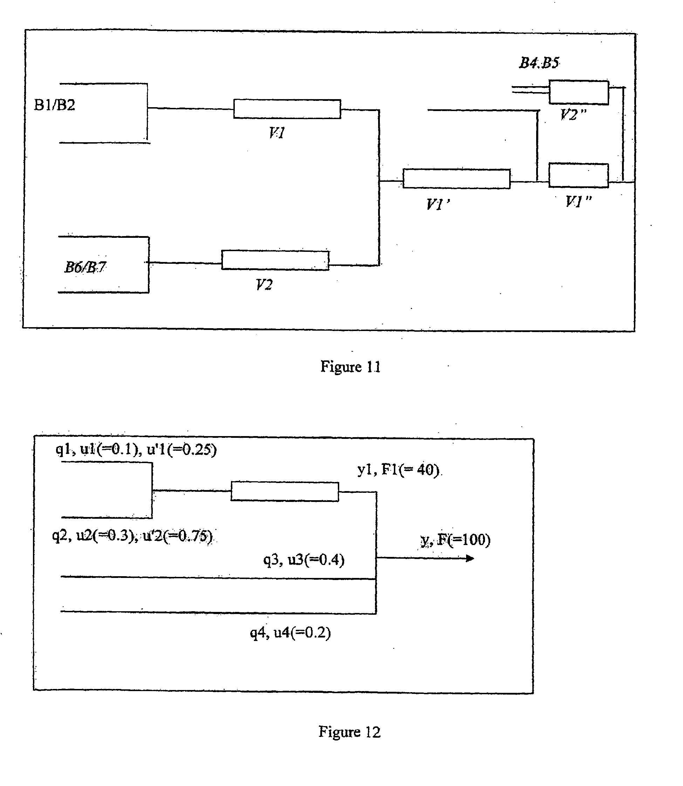

- Les figures 11 et 12 représentent des exemples de topologies utilisées dans l'exemple 2.1.

L'invention est décrite ci-après pour des installations pétrolières permettant d'élaborer des mélanges contenant des proportions déterminées de plusieurs constituants ou bases disponibles, afin que la combinaison des propriétés de ces bases confère au mélange les propriétés désirées respectant des extrema ou une valeur de consigne.

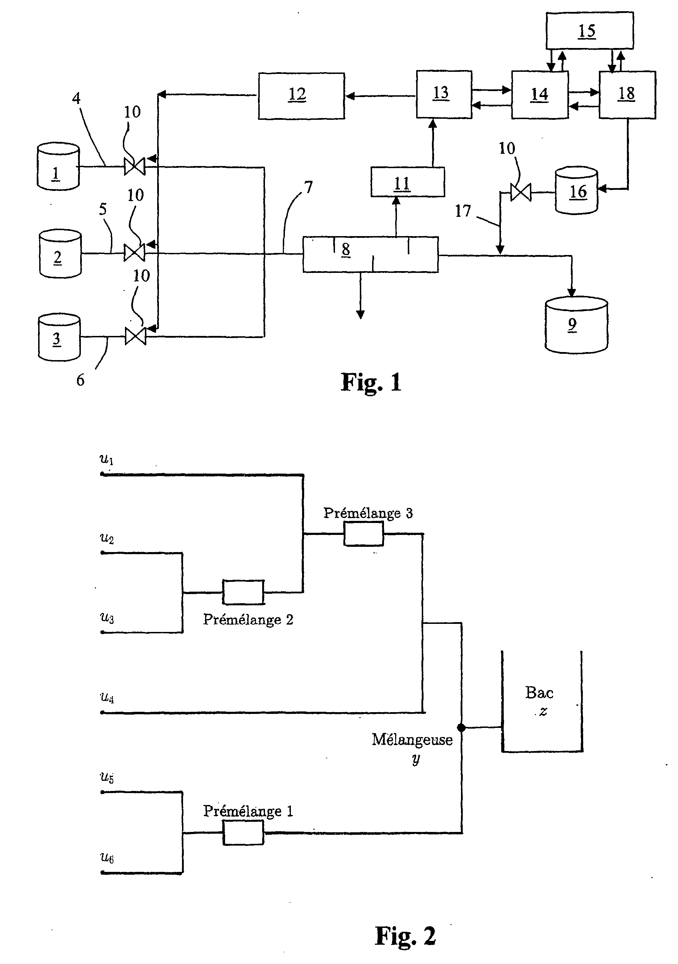

La figure 1 représente un schéma d'un dispositif de contrôle de l'élaboration d'un mélange de produits selon l'invention.

Les constituants ou bases, du mélange sont contenus dans des bacs 1, 2, 3, dont le nombre a été limité à trois pour des commodités de représentation. Les constituants à mélanger parcourent des voies de transport 4, 5, 6 vers une voie principale 7 pourvue d'une mélangeuse 8, la voie principale conduisant le mélange à un bac de destination 9. Des moyens désignés par la référence 10 sur la figure 1 permettent de commander les débits des bases sur chaque voie de transport. Il s'agit par exemple de régulateurs de débit commandant une vanne.

Des moyens d'analyse 11, ou moyens de mesure en continu, permettent de mesurer de manière répétitive les paramètres représentatifs du mélange au cours de son élaboration. Ces moyens 11 sont par exemple constitués par des analyseurs en ligne connectés à la mélangeuse 8 située sur la voie principale 7.

Dans le cas d'un mélange de produits pétroliers, ces analyseurs mesurent par exemple la teneur en soufre du mélange (sulfurimètre), l'indice d'octane (moteur octane), l'indice de cétane (moteur cétane)....

L'installation comprend également des moyens de calcul 12 des proportions (recette u) des bases entrant dans le mélange, un estimateur 13 et un optimiseur 14 permettant de déterminer une recette u des proportions des bases qui sera transmise aux moyens de commande 10.

Le rôle de l'estimateur 13 est d'estimer les propriétés des bases à partir des analyses des propriétés du mélange effectuées par les moyens d'analyse 11, les moyens de calcul 12 comprenant des moyens programmés pour calculer, au moyen de cette estimation et de valeurs de consigne de ces propriétés ou de valeurs de contraintes associées à ces propriétés, les proportions des différentes bases entrant dans le mélange afin d'obtenir un mélange comportant des propriétés prédéterminées. Les proportions des bases à appliquer sont calculées de manière répétitive, à des intervalles de temps prédéterminés, pas forcément égaux (par exemple de l'ordre de 5 minutes), permettant ainsi un contrôle précis des propriétés du mélange.

L'estimateur 13 comprend des moyens programmés pour mettre en oeuvre les opérations de détermination des propriétés des constituants faisant partie du procédé d'élaboration du mélange selon l'invention décrit plus haut.

Le rôle de l'optimiseur 14 est d'optimiser une recette u des proportions des bases à partir des propriétés estimées des bases, de contraintes sur la recette u et de contraintes sur les propriétés du mélange. La recette u ainsi optimisée sert à commander les moyens de commande 10.

L'optimiseur 14 comprend des moyens programmés pour mettre en oeuvre le procédé d'optimisation de la recette calculée pour la mise en oeuvre par l'estimateur du procédé de contrôle selon l'invention.

Le dispositif comprend en outre un moyen de stockage 15 d'objectifs de mélange. Ce moyen de stockage d'objectifs de mélange contient les différents objectifs fixés par l'utilisateur pour obtenir le mélange désiré. Il est relié à l'optimiseur 14 afin de transmettre les cibles souhaitées pour chaque mélange.

Dans l'exemple, il s'agit de la recette initiale de référence, des cibles de type consigne ou limites hautes et basses sur les propriétés, des contraintes mini/maxi sur les proportions de constituants, des orientations souhaitées mini/maxi sur les constituants, du volume à fabriquer et du mode de régulation choisi (instantané, intégré, intégré sur bac, tels que définis plus loin).

Le dispositif selon l'invention peut également comprendre un bac 16 d'additif relié par une voie de transport 17 à la voie principale 7, en aval de la mélangeuse 8. Un moyen de commande 10 du débit d'additif est également prévu sur la voie de transport 17. Ce moyen 10 est commandé par un contrôleur d'injection d'additif 18, reliée à l'optimiseur 14 et au moyen de stockage 15 d'objectifs de mélange.

Le rôle du contrôleur d'injection d'additif 18 est d'optimiser une recette d'injection de dopes du bac 16, afin de réguler une propriété donnée, parallèlement à l'optimisation de recette des constituants 1 à 3 opérée par l'optimiseur 14, sachant qu'en cas de saturation d'injection de dope (par exemple quand une limite de consommation pré-définie par les utilisateurs a été atteinte), une bascule automatique de la propriété régulée par dope s'opère sur la régulation multivariable par action sur les proportions de constituants, pilotée par l'optimiseur 14.

Bien entendu, plusieurs bacs 16 d'additifs peuvent être envisagés.

Le dispositif selon l'invention peut fonctionner suivant deux modes :

*- Contrôle en analyses intégrées (mode intégré).*

Ce contrôle est bien adapté au cas où le mélange coule dans un bac de produit fini (bac de destination) isolé. Dans ce cas, c'est la qualité moyenne intégrée sur l'ensemble du bac qui est contrôlée.

Les proportions des bases sont alors commandées de manière à modifier les propriétés instantanées du mélange afin de compenser les écarts de qualité constatés dans le passé du mélange, de manière à amener les propriétés de l'ensemble du mélange contenu dans le bac de destination aux valeurs de consigne, ou à l'intérieur des contraintes.

Les actions de commande des proportions des bases augmentent alors en même temps que le volume du mélange dans le bac de destination.

On distingue ici un mode "intégré mélange" et un mode "intégré bac". Ce dernier prend en compte le volume et la qualité du fond de bac initial avant mélange, alors que le mode "intégré mélange" opère sur le produit fabriqué, qui coule de la mélangeuse, les qualités de ce produit de mélange à contrôler étant intégrées, c'est-à-dire cumulées, moyennées depuis le début du mélange.

*- Contrôle en analyses instantanées (mode instantané)*

Ce contrôle est bien adapté dans le cas où le mélange coule directement dans un oléoduc, un bateau, un train ou un camion. Il est alors important de maintenir en permanence les valeurs instantanées des analyses proches des consignes ou à l'intérieur des contraintes. Dans ce cas, les actions de commande des proportions des bases sont indépendantes du volume de mélange écoulé.

Le fonctionnement de l'estimateur 13 de propriétés est indifférent du mode de régulation choisi, instantané ou intégré. Dans les deux modes, il assure de façon instantanée et synchrone le calcul d'une prédiction de propriétés qui peut ensuite être utilisée par l'optimiseur 14. Le procédé d'optimisation mis en oeuvre par l'optimiseur utilise des équations de régulation, détaillées plus loin, qui font intervenir soit une consigne correspondant directement à la cible recherchée en mode instantané, soit une référence calculée sur une trajectoire modulée par un horizon réglable en mode intégré.

Les exemples 1.1 à 1.5, 2.1, 2.2 et 3 à 5 décrivent des formules qui peuvent être utilisées pour mettre en oeuvre l'invention.

Ces exemples concernent respectivement : une rétro-action sans pré-mélange (exemples 1.1 à 1.5), une rétro-action avec pré-mélange (exemples 2.1 et 2.2), des séquences d'optimisation (exemple 3), une gestion en mode intégré (exemple 4), et une régulation par additifs (exemple 5).

La rétro-action décrite dans l'exemple 1.1 *[*permet la prise en compte des analyseurs en ligne, qui est à la base du principe de régulation. Elle permet notamment une estimation en temps réel des propriétés des constituants, selon un mécanisme de correction des propriétés des constituants suivant une orientation privilégiée (nouvelle analyse de laboratoire des propriétés des constituants) ou non.

Les exemples 1.1 à 1.5 permettent de décrire une famille de solutions de rétro-actions particulières introduisant des contraintes sur les propriétés estimées (exemples 1.2 à 1.5), suivant une orientation privilégiée sans altérer les propriétés de convergence de l'ensemble du dispositif.

Cette rétro-action est complétée dans l'exemple 2.1 de manière à permettre une synchronisation de la commande, dans le cas de multiples pré-mélanges, en parallèle (sur un même étage) ou en série (selon plusieurs étages successifs de pré-mélange). Ceci permet d'obtenir une commande plus robuste en pratique, car moins sujette aux oscillations consécutives à d'éventuels défauts de synchronisation entre mesure et prédiction, et d'en élargir l'utilisation pour les cas de pré-mélanges de constituants.

L'exemple 2.2 est similaire à l'exemple 2.1, mais correspond à une solution particulière de formalisation et d'implémentation d'une topologie générique avec multiples pré-mélanges en amont de mélangeuse.

Les rétro-actions présentées dans les exemples 1.1 à 1.5 ou 2.1, 2.2 sont utilisées pour le calcul des prédictions des propriétés du mélange. Ces prédictions sont utilisées comme équations de contraintes dans des séquences d'optimisation, telles que celles présentées dans l'exemple 3, et permettent le calcul de la commande appropriée pour atteindre les objectifs fixés de mélange.

Les exemples 1.1 à 1.5 ou 2.1, 2.2, et 3 décrivent donc un exemple de chaîne de traitement requise en mode instantané.

L'exemple 4 permet d'apporter un complément spécifique du traitement en mode intégré, qui utilise le schéma de fonctionnement du mode instantané présenté en référence aux exemples 1.1 à 1.5, 2.1, 2.2 et 3, moyennant des modifications sur les seuils (relaxations des valeurs des contraintes instantanées) et sur les références (consignes modifiées via trajectoires de références).

L'exemple 5 décrit une régulation par injection d'additif, qui vient s'ajouter aux mécanismes des exemples 1.1 à 1.5 ou 2.1, 2.2, et 3, et qui peut utiliser des mécanismes similaires à ceux du mode d'intégration décrit dans l'exemple 4. Un principe de bascule de régulation vers les bases y est mentionné, ce qui correspond à une passerelle du mécanisme décrit dans l'exemple 5 vers celui décrit dans les exemples 1 à 3.

L'exemple 6 décrit quant à lui différentes options d'optimisation de la recette.

Dans le cas d'un mélange de n bases (ou constituants), on utilise les notations suivantes :

- u, vecteur de dimension n, est la recette à calculer et $\bar{u}$ est la recette de référence. La recette représente les proportions des différentes n bases entrant dans le mélange : $u \in [0,1]^n$ et $\sum_{i=1}^{n} u_i = 1$.

- y, vecteur de dimension m, représente les m propriétés estimées du mélange pour la recette u.

- $y_j^{mes}$ représente la mesure de la propriété j, avec $y_j^{mes} = B_j u$, en supposant les lois de mélange linéaires.

On pourra noter ici que l'égalité y = Bu ne s'applique que dans le cas sans pré-mélange (dynamique ou stationnaire, c'est-à-dire en régime transitoire ou en régime établi) et dans le cas stationnaire s'il y a des pré-mélanges.

- B est la matrice m x n des propriétés des constituants du mélange,
- $\hat{B}$ est l'estimée de B utilisée dans les calculs, de telle sorte que y = Bu.

Les propriétés courantes y·du mélange en sortie de mélangeuse sont dites des propriétés instantanées. Elles sont mesurées par les analyseurs en ligne.

Les propriétés courantes du produit coulé, notées z, sont dites propriétés intégrées.

Les propriétés courantes d'un bac de destination du mélange, notées zfb, sont dites propriétés intégrées fond de bac.

### Exemple 1.1 : **Rétroaction sans pré-mélange, commande en mode instantané.**

Cet exemple vise à montrer comment l'équation (1), utilisée pour la mise en oeuvre de l'opération (2) de l'étape (ii) du procédé d'élaboration et de contrôle d'un mélange, permet de calculer une matrice d'estimation des propriétés des bases. Cet exemple correspond au cas dans lequel les bases sont mélangées directement pour élaborer le mélange, sans pré-mélange.

En définissant le système dynamique suivant pour la mise à jour de $\hat{B}_j$ à partir de u et de la mesure $y_j^{mes}$ :

$$\frac{d\hat{B}_j^t}{dt} = -\beta_j Hu(y_j - y_j^{mes}) \quad (1)$$

où

- la matrice H est une matrice symétrique définie positive et vaut dans cet exemple :

$$\frac{1}{\|\bar{u}\|} \begin{pmatrix} \frac{1}{\bar{u}_1} & & \\ & \ddots & \\ & & \frac{1}{\bar{u}_n} \end{pmatrix}$$

- $B_j^t$ est la transposée de $B_j$,
- $\beta_j$ est un réel strictement positif.

Il est possible de montrer que la fonction $\psi(\hat{B}_j) = \frac{1}{2}(\hat{B}_j - B_j)H^{-1}(\hat{B}_j - B_j)^t$ est une fonction de Lyapunov pour le système dynamique (1). En effet, elle est positive et sa dérivée en fonction du temps est négative :

$$\frac{d\psi}{dt} = -\beta_j(y_j - y_j^{mes})^2$$

Donc $\hat{B}_j^t$ tend vers le plus grand invariant par le système dynamique (1), inclus dans { $\hat{B}_j^t$ tel que $d\psi/dt = 0$}. Ainsi, $\hat{B}_j^t$ tend vers une valeur telle que $y_j = y_j^{mes}$, ce qui équivaut par définition à $\hat{B}_j u = B_j u$.. Pour autant, comme les valeurs de u sont liées par la n contrainte $\sum_{i=1}^{n} u_i = 1$, = 1, il n'est pas possible de conclure à l'égalité de $\hat{B}_j$ et de $B_j$.

Toutefois, quand un problème d'optimisation comprend une contrainte $\hat{B}_j u = y_j^{réf}$ et lorsqu'une solution existe, alors asymptotiquement, $y_j^{mes} = y_j^{réf}$. De manière analogue, les contraintes inégalités posées sur l'estimée $y_i$ sont respectées par la mesure $y_j^{mes}$.

L'utilisation du système dynamique (1) pour la mise à jour des propriétés du mélange constitue ainsi un système de rétroaction qui permet d'éviter, pour les sorties, les décalages entre estimations et mesures.

Une variante dans l'utilisation du système dynamique (1) serait d'utiliser un terme d'écart e à la recette initiale de référence et non un terme de recette u dans l'équation différentielle d'estimation.

Lorsque la mesure est retardée, et que le retard est connu, il suffit de synchroniser les grandeurs u, $y_j$ et $y_j^{mes}$ pour que les propriétés de convergence restent valides.

Outre les retards de mesure analyseurs, la synchronisation pourra prendre en compte le(s) retard(s) de constituants en amont de mélangeuse.

Un tel retard est par exemple observé en cas de pré-mélange de constituants, tel que décrit ci-après.

**Exemple 1.2** : **Rétroaction avec retour de l'estimée vers la dernière analyse de laboratoire**

A l'estimée $\hat{B}_j^t$ décrite dans l'exemple 1.1, on peut ajouter des termes correctifs $\delta$ n'affectant pas la valeur finale de la propriété prédite (iso prédiction). Ces corrections sont dans cet exemple introduites pour tenir compte des nouvelles mesures laboratoire.

Pour chaque propriété, on appelle $\overline{B}_j$ les nouvelles mesures laboratoire des bases. Pour calculer le terme correctif $\delta$, on considère le problème de minimisation sous contraintes suivant :

$$\boxed{\begin{array}{l} \min_{\delta} \dfrac{1}{2}\left\| \delta^t + \hat{B}_j - \overline{B}_j \right\|^2 \\ \delta^t u = 0 \end{array}}$$

L'unique contrainte garantit l'iso prédiction : $\hat{y}_j = \hat{B}_j u = (\hat{B}_j + \delta)u$. Ce problème de minimisation peut se résoudre explicitement à l'aide d'un Lagrangien. L'unique solution du problème est :

$$\delta^t{}_{sol} = \overline{B}_j - \hat{B}_j - \frac{\left(\overline{B}_j - \hat{B}_j\right)u}{\|u\|^2}u^T$$

C'est cette correction de la matrice des estimées des propriétés des constituants qui est appliquée de manière systématique à chaque itération ou de temps à autre selon des tests conditionnels.

**Exemple 1.3 : Rétroaction avec prise en compte des contraintes sur les estimées dans la loi d'adaptation**

**Sous exemple 1.3.A : gestion de bornes**

On considère ici un ensemble de contraintes inégalités de type minimum/maximum que l'on souhaite voir respectées de manière asymptotique par la matrice des estimées des propriétés des constituants. Pour chaque propriété j, on se donne un intervalle admissible $\left[B_j^{\min}, B_j^{\max}\right]$ d'intérieur non vide dont on suppose qu'il contient l'ensemble des valeurs réelles des propriétés des constituants : $\forall i \in$ {Espace des Bases}, $B_j(i) \in \left[B_j^{\min}, B_j^{\max}\right]$, où $B_j(i)$ désigne la i<sup>ème</sup> composante du vecteur $B_j$. On se donne aussi une fonction régulière $f_j$ qui à une valeur d'entrée x réelle fait correspondre une valeur de sortie fj(x) réelle ayant les caractéristiques suivantes :

$$f_j(x) = 0 \quad \text{si } x \in \left[B_j^{\min}, B_j^{\max}\right]$$

$$f_j(x) \le 0 \quad \text{si } x \ge B_j^{\max}$$

$$f_j(x) \ge 0 \quad \text{si } x \le B_j^{\min}$$

On considère alors l'équation différentielle (1.11)

$$\frac{d\hat{B}_j^t}{dt} = -\beta_j Hu\left(\hat{B}_j u - y_j^{mes}\right) + f\left(\hat{B}_j^t\right) \quad (1.11)$$

où $f$ est le vecteur colonne dont les coordonnées (ici la i-ème) s'écrivent $f(\hat{B}^t j)(i) = f_j(\hat{B}_j(i))$.

Cette équation (1.11) correspond à l'équation (1.1) décrite plus haut dans le cas où le facteur de pondération lambda est égal à 1.

Alors, pour toute condition initiale, la solution de l'équation différentielle (1.11) converge asymptotiquement en temps vers l'ensemble :

$$\left\{\hat{B}_j(i) \in \left[B_j^{\min}, B_j^{\max}\right], \forall i \in \{\text{Espace des Bases}\}, \hat{B}_j u = B_j u\right\}$$

La convergence est assurée par la fonction de Lyapunov suivante:

$$\Psi\left(\hat{B}_j\right) = \frac{1}{2}\left(\hat{B}_j - B_j\right)H^{-1}\left(\hat{B}_j - B_j\right)^T$$

- 

$$\Psi\left(B_j\right) = 0$$

- 

$$\Psi\left(\hat{B}_j\right) > 0, \text{ pour } \hat{B}_j \ne B_j$$

•

$$\frac{d\Psi}{dt} = -\beta_j \left(\hat{y}_j - y_j\right)^2 + \lambda\left(\hat{B}_j - B_j\right)H^{-1}\, \mathrm{f}\!\left(\hat{B}_j\right)^T \le 0$$

Par hypothèse, pour toutes les coordonnées i : $B_j(i) \in \left[B_j^{\min}, B_j^{\max}\right]$ et :

$$\left(\hat{B}_j(i) - B_j(i)\right)\mathrm{f}\!\left(\hat{B}_j(i)\right) = \begin{cases} 0 & \hat{B}_j(i) \in \left[B_j^{\min}, B_j^{\max}\right] \\ \le 0 & \hat{B}_j(i) < B_j^{\max} \\ \le 0 & \hat{B}_j(i) > B_j^{\min} \end{cases}$$

La matrice H étant diagonale définie positive, la solution de l'équation différentielle converge dans l'ensemble suivant :

$$\left\{ \hat{B}_j \,\middle|\, \frac{d\Psi}{dt} = 0 \right\} = \left\{ \hat{B}_j \,\middle|\, \hat{B}_j(i) \in \left[B_j^{\min}, B_j^{\max}\right] \forall i \in \{\text{Espace des Bases}\}, \hat{B}_j u = B_j u \right\}$$

**Sous exemple 1.3.B : gestion de contraintes égalité**

On considère ici un ensemble de contraintes égalité que l'on souhaite voir respectées de manière asymptotique par la matrice des estimées des propriétés des constituants.

*Ajout d'un terme supplémentaire dans l'équation différentielle*

L'équation différentielle (1.11) dans laquelle on aurait choisi *f* identiquement nulle ne permet pas d'assurer des évolutions identiques pour des bases égales.
Pour chaque propriété, pour le cas à deux bases initialement identiques, la solution repose sur

$$b_1 = b_2 \Leftrightarrow b_1 - b_2 = 0 \Leftrightarrow b_2 - b_1 \le 0 \text{ et } b_1 - b_2 \le 0$$

Alors

$$b_1 = b_2 \Leftrightarrow \begin{pmatrix} -1 & 1 & (0) \\ 1 & -1 & (0) \end{pmatrix}\begin{pmatrix} b_1 \\ b_2 \\ \vdots \end{pmatrix} \le 0$$

Avec trois bases, on obtient de la même façon :

$$b_1 = b_2 = b_3 \Leftrightarrow \begin{cases} b_1 - b_2 = 0 \\ b_2 - b_3 = 0 \end{cases} \Leftrightarrow \begin{pmatrix} -1 & 1 & 0 & (0) \\ 0 & -1 & 1 & (0) \\ 1 & 0 & -1 & (0) \end{pmatrix}\begin{pmatrix} b_1 \\ b_2 \\ b_3 \\ \vdots \end{pmatrix} = 0$$

De manière générale, on note m le nombre de sous-ensembles de constituants dont les propriétés j sont égales.

On désigne un tel sous-ensemble un « jeu d'égalités ». On appelle $n_i$ le nombre de constituants associées au jeu d'égalité $i$ et on note $N_i$ calculé comme suit $N_i = \sum_{k=1}^{i-1} n_k$ .

On introduit la matrice A suivante, de taille n x n: $A = \begin{pmatrix} R_1 \\ \vdots \\ R_m \\ (0) \end{pmatrix}$ où :

$$R_i = \begin{pmatrix} & 1 & -1 & 0 & \cdots & 0 & \\ & 0 & \ddots & \ddots & (0) & \vdots & \\ (0) & \vdots & (0) & \ddots & \ddots & 0 & (0) \\ & 0 & \cdots & 0 & 1 & -1 & \\ & -1 & 0 & \cdots & 0 & 1 & \end{pmatrix}$$

Chaque matrice $R_i$ est de dimension $n_i \times n$. A est une matrice diagonale par blocs.

On considère la nouvelle loi d'adaptation (1.12)-particulière :

$$\frac{d\hat{B}_j^t}{dt} = -\beta_j Hu\left(\hat{B}_j u - y_j^{mcs}\right) + \lambda HA\hat{B}_j^t \quad (1.12)$$

où $\lambda \geq 0$.

On considère un jeu d'égalité avec k bases égales (k > 1). Quitte à faire des permutations, on suppose que ce sont les $k$ premières bases. On introduit la matrice carrée $n$ x n $A_k$ définie à partir d'un bloc non nul de dimension k x k par :

$$A_k = \begin{pmatrix} -1 & 1 & 0 & \cdots & 0 & & \\ 0 & \ddots & \ddots & & (0) & & \\ \vdots & & \ddots & \ddots & & (0) & \\ 0 & (0) & & -1 & 1 & & \\ 1 & 0 & \cdots & 0 & -1 & & \\ & & (0) & & & (0) & \end{pmatrix}$$

On a alors l'égalité suivante :

$$\left(\hat{B}_j - B_j\right)A_k\hat{B}_j^T = -\frac{1}{2}\left[\sum_{i=1}^{k-1}\left(\hat{B}_j(i+1) - \hat{B}_j(i)\right)^2 + \left(\hat{B}_j(1) - \hat{B}_j(k)\right)^2\right] \quad (33)$$

On considère la fonction de Lyapunov

$$\Psi\left(\hat{B}_j\right) = \frac{1}{2}\left(\hat{B}_j - B_j\right)H^{-1}\left(\hat{B}_j - B_j\right)^T$$

- $$\Psi\left(B_j\right)=0$$

- $$\Psi\left(\hat{B}_j\right)>0,\ \text{pour}\ \hat{B}_j\neq B_j$$

- $$\frac{d\Psi}{dt}=-\beta_j\left(\hat{v}_j-y_j\right)^2+\lambda\left(\hat{B}_j-B_j\right)A\hat{B}_j^T\leq 0$$

Compte tenu de (33), on a :

$$\left(\hat{B}_j-B_j\right)A\hat{B}_j^T=\sum_{i=1}^{m}\left(\hat{B}_j-B_j\right)R_i\hat{B}_j^T$$

$$=-\frac{1}{2}\sum_{i=1}^{m}\left[\left(\sum_{k=1}^{n_i-1}\left(\hat{B}_j\left(N_i+k+1\right)-\hat{B}_j\left(N_i+k\right)\right)^2\right)+\left(\hat{B}_j\left(N_i+1\right)-\hat{B}_j\left(N_i+n_i\right)\right)^2\right]$$

La solution de l'équation différentielle converge donc dans l'ensemble suivant :

$$\left\{\hat{B}_j\left|\frac{d\Psi}{dt}=0\right.\right\}=\left\{\hat{B}_j\left|\hat{v}_j=y_j\ \text{et}\ \forall i\in\{1,\ldots,m\},\forall(k,l)\in\{N_i+1,\ldots,N_{i+1}\}^2,\hat{B}_j(k)=\hat{B}_j(l)\right.\right\}$$

**Sous exemple** 1.3.C : **gestion de relations d'ordre**

On considère ici un ensemble de relations d'ordre que l'on souhaite voir respectées de manière asymptotique par la matrice des estimées des propriétés des constituants.

Pour chaque propriété j, on considère une relation d'ordre, portant sans perte de généralité (à un réordonnement près) sur les m premières bases. Elle est partielle si $m < n$ et totale si $m = n$, $n$ étant le nombre de bases. Cela veut donc dire que : $B_j(1)\leq\ldots\leq B_j(m)$.

On se donne $m$-1 fonctions ayant les caractéristiques suivantes :

$$\forall i\in\{1,\ldots,m-1\},\ f_i(x):\begin{cases}=0 & \text{si}\ x\leq 0\\ \geq 0 & \text{si}\ x\geq 0\end{cases}$$

On note f la fonction vectorielle à $n$ composantes définie par :

$$f\left(\hat{B}_j\right)=\begin{pmatrix}0\\ f_1\left(\hat{B}_j(1)-\hat{B}_j(2)\right)\\ \vdots\\ f_{m-2}\left(\hat{B}_j(m-2)-\hat{B}_j(m-1)\right)\\ f_{m-1}\left(\hat{B}_j(m-1)-\hat{B}_j(m)\right)\\ (0)\end{pmatrix}-\begin{pmatrix}f_1\left(\hat{B}_j(1)-\hat{B}_j(2)\right)\\ f_2\left(\hat{B}_j(2)-\hat{B}_j(3)\right)\\ \vdots\\ f_{m-1}\left(\hat{B}_j(m-1)-\hat{B}_j(m)\right)\\ 0\\ (0)\end{pmatrix}$$

On considère alors l'équation différentielle (1.13) particulière

$$\frac{d\hat{B}_j^t}{dt} = -\beta_j Hu\left(\hat{B}_j u - y_j^{mes}\right) + \lambda H\, f\left(\hat{B}_j\right) \quad (1.13)$$

où $\lambda \geq 0$.

On peut introduire facilement les contraintes de bornes au sein de la relation d'ordre en rajoutant deux fonctions positives à valeurs réelles positives et nulles sinon, cela donne alors :

$$f\left(\hat{B}_j\right) = \begin{pmatrix} f_0\left(B_j^{min} - \hat{B}_j(1)\right) \\ f_1\left(\hat{B}_j(1) - \hat{B}_j(2)\right) \\ \vdots \\ f_{m-2}\left(\hat{B}_j(m-2) - \hat{B}_j(m-1)\right) \\ f_{m-1}\left(\hat{B}_j(m-1) - \hat{B}_j(m)\right) \\ (0) \end{pmatrix} - \begin{pmatrix} f_1\left(\hat{B}_j(1) - \hat{B}_j(2)\right) \\ f_2\left(\hat{B}_j(2) - \hat{B}_j(3)\right) \\ \vdots \\ f_{m-1}\left(\hat{B}_j(m-1) - \hat{B}_j(m)\right) \\ f_m\left(\hat{B}_j(m) - B_j^{max}\right) \\ (0) \end{pmatrix}$$

Si on ne considère que la relation d'ordre, cela revient à dire que :

$$B_j^{min} = -\infty \text{ et } B_j^{max} = +\infty$$

La convergence de ce nouvel estimateur est établie grâce à la fonction de Lyapunov suivante :

- 
$$\Psi\left(\hat{B}_j\right) = \frac{1}{2}\left(\hat{B}_j - B_j\right) H^{-1}\left(\hat{B}_j - B_j\right)^T$$

- 
$$\Psi\left(B_j\right) = 0$$

- 
$$\Psi\left(\hat{B}_j\right) > 0, \text{ pour } \hat{B}_j \neq B_j$$

- 
$$\frac{d\Psi}{dt} = -\beta_j\left(\hat{v}_j - y_j\right)^2 + \lambda\left(\hat{B}_j - B_j\right) f\left(\hat{B}_j\right)^T \leq 0$$

On explicite le second terme de la dérivée. Il vient

$$\left(\hat{B}_j - B_j\right) f\left(\hat{B}_j\right)^T = \sum_{i=1}^{m-1}\left(\left(B_j(i) - B_j(i+1)\right) + \left(\hat{B}_j(i+1) - \hat{B}_j(i)\right)\right) f_i\left(\hat{B}_j(i) - \hat{B}_j(i+1)\right)$$

$\forall i \in \{1,\ldots, m\text{-}1\}$, les termes de la somme s'écrivent :

$$\left(B_j(i) - B_j(i+1)\right) f_i\left(\hat{B}_j(i) - \hat{B}_j(i+1)\right) + \left(\hat{B}_j(i+1) - \hat{B}_j(i)\right) f_i\left(\hat{B}_j(i) - \hat{B}_j(i+1)\right)$$

Par hypothèse, le premier terme est toujours négatif car $B_j(1) \leq \ldots \leq B_j(m)$ et $f_i$ est positive. Le second terme de la somme est négatif ou nul :

$$\left(\hat{B}_j(i+1)-\hat{B}_j(i)\right)\mathrm{f}_i\left(\hat{B}_j(i)-\hat{B}_j(i+1)\right)\to \begin{cases} =0 & \text{si } \hat{B}_j(i+1)-\hat{B}_j(i)\geq 0 \\ \leq 0 & \text{si } \hat{B}_j(i+1)-\hat{B}_j(i)\leq 0 \end{cases}$$

La solution de l'équation différentielle converge donc dans un ensemble caractérisé par le principe d'invariance de LaSalle. Cet ensemble est le suivant :

$$\left\{\hat{B}_j \left| \frac{d\Psi}{dt}=0\right.\right\} = \left\{\hat{B}_j \left| \hat{y}_j = y_j \text{ et } \hat{B}_j(1)\leq\ldots\leq \hat{B}_j(m)\right.\right\}$$

**Remarques à propos des sous-exemples**

La formulation tenant compte des bornes donne plusieurs degrés de liberté : les valeurs des bornes, la fonction *f* et le facteur de pondération $\lambda$. Un exemple de choix de fonction pour le sous-exemple 1.3.A est donné par

$$\mathrm{f}\!\left(\hat{B}_j\right)=\max\!\left(0, B_{\min}-\hat{B}_j\right)+\min\!\left(0, B_{\max}-\hat{B}_j\right)$$

Le graphe de cette fonction est reproduit sur la figure 8 avec $B_{\min}$ = 200 et $B_{\max}$=400.

Le facteur de pondération $\lambda$ peut être choisi dans la liste suivante, selon la forme retenue pour la fonction *f* :

- Fonction linéaire de la forme $\mathrm{f}(\hat{B}_j)=\max(0,B_{\min}-\hat{B}_j)+\min(0,B_{\max}-\hat{B}_j)$ telle que représentée sur la Figure 8.

  - $$1/dt$$

  - $$\beta_j \frac{H}{\max(H)}\frac{1}{dt}$$

  - $$\frac{H}{\max(H)}\frac{1}{dt}$$

- Fonction logarithme de la forme $$\mathrm{f}\!\left(\hat{B}_j\right)=\ln\!\left(\frac{1+\max\!\left(0, B_{\min}-\hat{B}_j\right)}{1+\max\!\left(0, \hat{B}_j-B_{\max}\right)}\right)$$

- Fonction logarithme de la forme

  - $$1/dt$$

  - $$2/dt$$

  - $$\beta_j \frac{H}{\max(H)}\frac{1}{dt}$$

- 

$$2\beta_j \frac{H}{\max(H)} \frac{1}{dt}$$

*Application en raffinerie*

La figure 9 représente la quantité de soufre estimée (en ppm) en fonction du temps discrétisé, correspondant au nombre d'itérations de correction de recette depuis le début du mélange obtenue par la mise en oeuvre de l'équation (1).

Il s'agit d'une fabrication de fioul, avec un mélange à trois constituants pour réguler deux qualités et comme particularité le fait que l'un des constituants est associé à une valeur de qualité initiale erronée.

Sur cette figure :

- la courbe C1 représente l'estimée du soufre du constituant 1 du mélange (valeur initiale erronée)
- La courbe C2 représente l'estimée du soufre du constituant 2 du mélange
- La courbe C3 représente l'estimée du soufre du constituant 3 du mélange.

On constate ici que l'estimateur de l'équation (1) arrive à détecter la valeur erronée (sur-estimation) qui est corrigée à la baisse, mais cette correction est insuffisante et une repartition d'écart résiduel sur les autres qualités estimées conduit à obtenir des estimées négatives de teneur en soufre (qui doit par définition rester positive ou nulle).

La figure 10 représente la quantité de soufre estimée (en ppm) en fonction du temps discrétisé, correspondant au nombre d'itérations de correction de recette depuis le début du mélange) en utilisant la loi d'adaptation mise en oeuvre par l'équation (1.1) corrigée par le $\delta$ tel que défini par l'équation (1.4), définie plus haut, et plus précisément décrite dans le paragraphe 1.4 C de l'exemple 1.4 qui suit.

On constate ici que l'estimateur modifé arrive à corriger la valeur erronée (sur-estimation), tout en maintenant les autres qualités estimées positives.

On constate en définitive que l'ajout du terme $\delta$ assure la convergence des courbes C1 à C3.

**Exemple 1.4 : Rétroaction avec contraintes de répartition sur les propriétés estimées par delta correctif**

Cet exemple se rapporte au calcul, à iso-prédiction, d'un vecteur $\delta$, pour conférer aux estimées des propriétés certaines caractéristiques. Ce vecteur est ajouté à la matrice des propriétés estimées des constituants, soit de manière systématique à chaque itération, soit de manière conditionnelle.

**Sous-exemple 1.4.A : Gestion de contraintes égalité**

Pour une propriété considérée, qui a la même valeur pour deux bases ($b_1 = b_2$), la solution repose sur

$$b_1 = b_2 \Leftrightarrow b_1 - b_2 = 0 \Leftrightarrow \begin{pmatrix} 1 & -1 & (0) \end{pmatrix} \begin{pmatrix} b_1 \\ b_2 \\ \vdots \end{pmatrix} = 0$$

Avec trois bases, on obtient de la même façon :

$$b_1 = b_2 = b_3 \Leftrightarrow \begin{cases} b_1 - b_2 = 0 \\ b_2 - b_3 = 0 \end{cases} \Leftrightarrow \begin{pmatrix} 1 & -1 & 0 & (0) \\ 0 & 1 & -1 & (0) \end{pmatrix} \begin{pmatrix} b_1 \\ b_2 \\ b_3 \\ \vdots \end{pmatrix} = 0$$

Une matrice $A_j$ formée de 0, 1 et -1 est intégrée aux contraintes. L'indice j fait référence à la propriété j. Il n'y a pas de bouclage dans la séquence des égalités, pour éviter les redondances qui sont sources d'instabilités numériques et de perte de rang dans la matrice des contraintes. Cela veut dire, par exemple, qu'il n'y a pas de contrainte supplémentaire de type $b_3 - b_1 = 0$ pour le cas précédent à trois bases.

Il y a au plus n-1 lignes, n étant le nombre de bases. La nouvelle contrainte s'écrit donc de la manière suivante :

$$A_j\left(\hat{B}_j^T + \delta\ \right) = 0$$

En effet, les estimées après l'équation différentielle (1.1) étant différentes, les corrections apportées par $\delta$ permettent la conservation des égalités au cours du temps. Le problème modifié s'énonce alors :

$$\min_\delta \frac{1}{2}\left\|\delta - \Delta\right\|^2$$
$$\delta^t u = 0, \ A_j\left(\hat{B}_j^T + \delta\ \right) = 0$$

En l'absence de nouvelles analyses laboratoire $\overline{B}_j$ , $\Delta$ est nul. Sinon, il vaut $(\overline{B}_j - \hat{B}_j)^t$. Une matrice diagonale de pondération W peut éventuellement être ajoutée au critère.

La matrice globale des contraintes $\begin{pmatrix} u^T \\ A_j \end{pmatrix}$ est de rang plein car la première ligne est constituée de termes tous positifs alors que les autres contiennent uniquement un couple de 1 et -1. L'application linéaire associée à cette matrice est donc surjective, ce qui garantit l'existence d'au moins un point faisable. De plus, les contraintes formant un ensemble convexe et le critère étant une fonction convexe, il y a unicité et existence de la solution.

Cette solution peut s'écrire de manière explicite en introduisant le Lagrangien et en posant les conditions d'optimalité. Le Lagrangien s'écrit

$$L(\delta, \lambda, \mu) = \frac{1}{2}\left\|(\delta - \Delta)W\right\|^2 + \lambda\delta^t u + \mu^T A_j\left(\delta + \hat{B}_j^T\right)$$

Ses dérivées s'annulent pour la solution et on obtient l'expression explicite de $\delta$ :

$$\lambda = \frac{u^T \Delta^T - u^T W^{-1} A_j^T \left(A_j W^{-1} A_j^T\right)^{-1} A_j\left(B_j^T + \Delta^T\right)}{u^T W^{-1} u - u^T W^{-1} A_j^T \left(A_j W^{-1} A_j^T\right)^{-1} A_j u}$$
$$\mu = \left(A_j W^{-1} A_j^T\right)^{-1} A_j\left[\left(B_j^T + \Delta^T\right) - \lambda W^{-1} u\right]$$
$$\delta = W^{-1}\left(W\Delta^T - \lambda u - A_j^T \mu\right)^T$$

### Sous-exemple 1.4.B : Gestion de relation d'ordre total

Pour une propriété donnée, considérons par exemple un mélange à quatre bases ordonnées dans cet ordre : $b_2 \le b_3 \le b_1 \le b_4$. On peut écrire :

$$b_2 \le b_3 \le b_1 \le b_4 \Leftrightarrow \begin{cases} b_2 - b_3 \le 0 \\ b_3 - b_1 \le 0 \\ b_1 - b_4 \le 0 \end{cases} \Leftrightarrow \begin{pmatrix} 0 & 1 & -1 & 0 \\ -1 & 0 & 1 & 0 \\ 1 & 0 & 0 & -1 \end{pmatrix} \begin{pmatrix} b_1 \\ b_2 \\ b_3 \\ b_4 \end{pmatrix} \le 0$$

Le problème à résoudre est alors le suivant :

$$\min_{\delta} \frac{1}{2}\|\delta - \Delta\|^2$$
$$\delta^t u = 0,\ A_j\left(\hat{B}_j^T + \delta\right) \leq 0$$

A la différence du cas d'égalité, la matrice $A_j$ contient toujours n-1 lignes et fait intervenir toutes les paires de bases. L'existence d'un point faisable provient du résultat du cas égalité. En effet, on sait qu'il existe $\delta$ tel que $\begin{pmatrix} u^T \\ A_j \end{pmatrix}\delta = \begin{pmatrix} 0 \\ -A_j\hat{B}^t_j \end{pmatrix}$. La convexité donne l'unicité de la solution. Ce problème n'a en revanche pas de solution explicite et nécessite le recours à une routine d'optimisation numérique.

**Sous-exemple 1.4.C : Gestion de bornes**

Afin de conserver des échelles physiques aux estimées des propriétés de constituants calculées en ligne, de nouvelles contraintes peuvent être utilisées. L'ajout de bornes sur les propriétés estimées se fait dans l'espace de recherche des $\delta$ admissibles. Le problème est alors :

$$\min_{\delta} \frac{1}{2}\|\delta - \Delta\|^2$$
$$\delta^t u = 0,\ B_j^{\min} \leq \hat{B}_j + \delta^t \leq B_j^{\max}$$

On rappelle le lemme de Farkas, utile pour la démonstration de résultats d'existence de solutions aux différents problèmes posés.

<u>Lemme de Farkas :</u>

Une seule et uniquement une seule des deux propriétés suivantes peut être vraie :

- il existe un x qui vérifie $Ax \leq b$, ou
- il existe un $v \geq 0$ tel que vA = 0 et vb < 0.

A l'aide du lemme de Farkas, on peut montrer que le problème précédent a toujours une solution, sous réserve que $\hat{B}_j u \in \left[B_j^{\min}, B_j^{\max}\right]$.

**Sous-exemple 1.4.D : Gestion de contraintes égalité et de bornes**

Le problème se pose ainsi :

$$\min_{\delta} \frac{1}{2}\|\delta - \Delta\|^2$$
$$s.t.\begin{cases} \delta^t u = 0 \\ \text{jeux d'égalités} \\ \text{bornes} \end{cases}$$

A l'aide du lemme de Farkas, on peut montrer que le problème précédent a toujours une solution, sous réserve que $\hat{B}_j \bar{\mathrm{u}} \in \left[ B_j^{\min}, B_j^{\max} \right]$ .

**Sous-exemple 1.4.E : Gestion de bornes et de relations d'ordre total**

Le problème se pose de la manière suivante :

$$
\min_{\delta} \frac{1}{2} \left\| \delta - \Delta \right\|^2
$$
$$
\begin{cases}
\delta^t u = 0 \\
A_j \left( \hat{B}_j^{\,t} + \delta \right) \le 0 \\
B_j^{\min} \le \hat{B}_j^{\,t} + \delta \le B_j^{\max}
\end{cases}
$$

La matrice des contraintes n'est plus surjective. L'existence d'au moins un point faisable n'est donc plus acquise : l'ensemble des contraintes peut être infaisable.

A l'aide du lemme de Farkas, on peut montrer que le problème précédent a toujours une solution, sous réserve que $\hat{B}_j \bar{\mathrm{u}} \in \left[ B_j^{\min}, B_j^{\max} \right]$ .

**Sous-exemple 1.4.F : Gestion de bornes et de relations d'ordre partiel**

On considère $n$ bases au total. On appelle $m < n$ le nombre de bases soumises à la relation d'ordre et on suppose qu'elles sont les m premières et qu'elles sont ordonnées dans l'ordre croissant des indices. C'est toujours possible quitte à faire des permutations. Cela donne le problème suivant :

$$
\min_{\delta} \frac{1}{2} \left\| \delta - \Delta \right\|^2
$$
$$
s.t. \begin{cases}
\delta^t u = 0 \\
lb \le \hat{b}_1 + \delta_1 \le \ldots \le \hat{b}_m + \delta_m \le ub \\
lb \le \hat{b}_{m+1} + \delta_{m+1} \le ub \\
\vdots \\
lb \le \hat{b}_n + \delta_n \le ub
\end{cases}
$$

A l'aide du lemme de Farkas, on peut montrer que le problème précédent a toujours une solution, sous réserve que $\hat{B}_j \bar{\mathrm{u}} \in \left[ B_j^{\min}, B_j^{\max} \right]$ .

**Sous-exemple 1.4.G : Contraintes de répartition**

Le problème général permettant d'introduire les différents types de contraintes de répartition (égalité, bornes, relations d'ordre entre les estimées des propriétés de constituants) se pose de la manière suivante :

$$\min_{\delta} \frac{1}{2}\|\delta - \Delta\|^2$$

$$s.t. \begin{cases} \delta^t u = 0 \\ \text{jeux d'égalités} \\ \text{relation d'ordre partielle} \\ \text{bornes} \end{cases}$$

A l'aide du lemme de Farkas, on peut montrer que le problème précédent a toujours une solution, sous réserve que $\hat{B}_j \bar{\mathbf{u}} \in \left[\bar{B}_j^{\min}, \bar{B}_j^{\max}\right]$ .

Une illustration pratique de ce sous-exemple est fournie ici, pour un espace à dix bases. On se donne la recette et la valeur initiale de la matrice $\hat{B}$ suivantes, reportées dans le tableau 1.1 :

Tableau 1.1

| Base | 1 | 2 | 3 | 4 | 5 |
|------|------|------|------|------|------|
| U | 0.0542 | 0.1124 | 0.0577 | 0.1385 | 0.1354 |
| $\hat{B}$ | 3 | -5 | 8 | 12 | 50 |
| Base | 6 | 7 | 8 | 9 | 10 |
| U | 0.0386 | 0.1203 | 0.1601 | 0.0835 | 0.0993 |
| $\hat{B}$ | 40 | 45 | 16 | 10 | 100 |

On veut respecter :

$$\begin{cases} lb \le \hat{B}_1 \le \hat{B}_3 = \hat{B}_4 \le \hat{B}_8 \le \hat{B}_9 \le ub \\ lb \le \hat{B}_5 = \hat{B}_6 = \hat{B}_7 \le ub \\ lb \le \hat{B}_2 \le ub \\ lb \le \hat{B}_{10} \le ub \end{cases}$$

Les bornes sont les suivantes :

$$lb = 0 \text{ et } ub = 90$$

On vérifie que : $U'^*\hat{B} = 28.7783$ est compris entre les deux bornes.

La solution est calculée avec une fonction de résolution par moindres carrés. Les résultats sont reportés dans le tableau 1.2 :

Tableau 1.2

| Bases | Ega. | Inéga. | Bmin | Bmax | $\hat{B}$ | $\delta$ | $\hat{B} + \delta$ |
|-------|------|--------|------|------|-----|---------|----------|
| 1 | - | 1 | 0 | 90 | 3 | 0.8771 | 3.8771 |
| 2 | - | - | 0 | 90 | -5 | 5.0000 | 0 |
| 3 | 1 | 2 | 0 | 90 | 8 | 3.5876 | 11.5876 |
| 4 | 1 | 2 | 0 | 90 | 12 | -0.4124 | 11.5876 |
| 5 | 2 | - | 0 | 90 | 50 | -3.4124 | 46.5876 |
| 6 | 2 | - | 0 | 90 | 40 | 6.5876 | 46.5876 |

(suite)

| Bases | Ega. | Inéga. | Bmin | Bmax | $\hat{B}$ | $\delta$ | $\hat{B} + \delta$ |
|---|---|---|---|---|---|---|---|
| 7 | 2 | - | 0 | 90 | 45 | 1.5876 | 46.5876 |
| 8 | - | 3 | 0 | 90 | 16 | -1.0289 | 14.9711 |
| 9 | - | 4 | 0 | 90 | 10 | 4.9711 | 14.9711 |
| 10 | - | - | 0 | 90 | 100 | -10.0000 | 90.0000 |

L'estimée corrigée ($\hat{B} + \delta$) respecte les contraintes posées.

### Sous-exemple 1.4.H : Gestion de bacs en coulée-vidange

La correction par un vecteur $\delta$ est ici utilisée pour différencier les propriétés estimées des bacs en coulée-vidange de celles des bacs isolés. Les propriétés des bacs isolés ne varient pas au cours du mélange (sous réserve d'homogénéisation adéquate), contrairement à celles des bacs alimentés en continu, susceptibles d'évolution en cours de mélange.

Le problème s'énonce de la manière suivante

$$\min_{\delta} \frac{1}{2} \| \delta - \Delta \|^2$$
$$\delta^t u = 0$$

où

$$\Delta(i) = \overline{B}_j(i) - \hat{B}_j(i) = \begin{cases} 0 \\ B_0(i) - \hat{B}_j(i) \end{cases}.$$

On laisse les bacs en coulée vidange libres et on essaie de ramener les estimées des propriétés des autres bacs à leurs analyses laboratoire.

### Sous-exemple 1.4.I : Cas particulier des constituants avec objectifs d'incorporation (minimisation/maximisation)

On pourra avantageusement appliquer le respect d'une relation d'ordre partiel sur les propriétés des constituants associés par ailleurs à un objectif de tendance à la minimisation ou à la maximisation. L'ordre partiel des estimées concernées peut être respecté selon l'ordre défini au départ par les valeurs initiales de qualité de constituants (généralement fournies par analyse de laboratoire).

### Sous-exemple 1.4.J : Cas particulier d'estimées en saturation haute ou basse

Les bornes minimales et maximales utilisées dans la loi d'adaptation et éventuellement dans le calcul du vecteur de correction $\delta$, sont incertaines. Pour une propriété donnée, lorsque toutes les estimées se retrouvent saturées à la borne minimale ou maximale, on peut raisonnablement suspecter une valeur de borne erronée. Une phase de détection de telles situations est donc utile, pour ensuite relaxer les valeurs des bornes incriminées.

### *Détection*

Pour une borne maximale par exemple :

$$\forall i, \text{base active}, \hat{B}_j(i) = B_j^{\max}$$

$$\Downarrow$$

$$\sum_{\text{base active}} \hat{B}_j(i)u_i = B_j^{\max} \quad \sum_{\text{base active}} u_i = B_j^{\max}$$

On peut ici supposer que la valeur réelle de la propriété est supérieure à $B_j^{\max}$. . On peut aussi détecter cette situation en constatant que $B_j^{\max} \leq y_j^{mes}$. De manière similaire, on détecte une mauvaise borne minimale par $B_j^{\min} \geq y_j^{mes}$.

*Relaxation*

En cas de saturation détectée sur les estimées, il convient de relaxer les bornes. On définit la nouvelle borne d'une des deux manières suivantes :

Tableau 1.3

| borne minimale | borne maximale |
|---|---|

$$B_j^{\min} = \min_{i \text{ base active}} \left( \hat{B}_j(i) \right) - tol \qquad B_j^{\max} = \max_{i \text{ base active}} \left( \hat{B}_j(i) \right) + tol$$

$$B_j^{\min} = y_j^{mes} - tol \qquad\qquad B_j^{\max} = y_j^{mes} + tol$$

**Exemple 1.5 : Rétroaction avec valeurs moyennées de commande sur mesures sporadiques**

La matrice corrigée $\hat{B}$ peut être déterminée en utilisant l'équation suivante, qui permet d'exploiter une moyenne historique intégrant des commandes passées, dans le cas de mesure sporadique non rafraîchie à chaque période de calcul :

$$\frac{d\hat{B}_j^t}{dt} = -\beta_j H \frac{1}{\delta t} \int_{t-\delta t}^{t} u \left( \hat{B}_j u - y_j^{mes} \right) ds \quad (1.2)$$

La solution de cette équation converge et vérifie $\lim_{t \to +\infty} \left( \hat{B}_j u - y_j \right) = 0$.

On introduit la fonction suivante :

$$\Psi\left( \hat{B}_j \right) = \frac{1}{2} \left( \hat{B}_j - B_j \right) H^{-1} \left( \hat{B}_j - B_j \right)^T$$

Elle vérifie les propriétés suivantes :

- 

$$\Psi\left( B_j \right) = 0$$

- 

$$\Psi\left( \hat{B}_j \right) > 0, \text{ pour } \hat{B}_j \neq B_j$$

Sa dérivée vaut :

$$\frac{d\Psi}{dt} = -\frac{\beta_j}{\delta t}\left(\hat{B}_j - B_j\right)\int_{t-\delta t}^{t} u\left(\hat{B}_j u - y_j^{mes}\right)dt$$

Étant donné le choix de la longueur de l'intervalle, il n'y a pas de nouvelles estimées calculées dans l'intervalle de temps [$t$-$\delta t$,$t$]. On peut alors écrire :

$$\frac{d\Psi}{dt} = -\frac{\beta_j}{\delta t}\int_{t-\delta t}^{t}\left(\hat{B}_j u - y_j^{mes}\right)^2 dt$$

La dérivée temporelle de la fonction $\Psi$ est négative. La fonction introduite est donc bien une fonction de Lyapunov pour le système. La solution converge donc vers l'ensemble de Lasalle, ce qui démontre le résultat énoncé.

Dans le cas de mesures sporadiques, on peut avantageusement ne calculer une nouvelle estimée que lorsqu'une nouvelle mesure est disponible, et non systématiquement à chaque itération. On peut par ailleurs moyenner la commande autour du moment où l'échantillon est prélevé et mesuré. Ce calcul de moyenne permet de limiter les effets d'éventuelles imprécisions sur le retard de mesure. L'implémentation suivante est proposée :

$$\frac{d\hat{B}_j}{dt} = -\frac{\beta_j}{\delta t} H \int_{t-\Delta-\frac{\delta t}{2}}^{t-\Delta+\frac{\delta t}{2}} u(s)\left(\hat{B}_j u(s) - y_j^{mes}\right)ds \quad (1.3)$$

où $\Delta$ est le retard de mesure associé à la propriété j.

### *Paramétrage et implémentation*

Il faut choisir la longueur de la fenêtre glissante. Celle-ci doit dépendre du retard. Sur la base d'erreurs de datation de l'ordre de 20%, le paramétrage suivant est proposée :

$$\delta t = \frac{\Delta}{5}$$

### **Exemple 2.1 : Rétroaction avec pré-mélanges, commande en mode instantané.**

Cet exemple est similaire à l'exemple 1.1, mais correspond au cas où certaines bases sont pré-mélangées avant leur mélange à d'autres bases pour former le mélange désiré.

La figure 2 représente un exemple de topographie avec un mélange de 6 bases.

Considérons une installation comportant p pré-mélanges numérotés de 1 à p. Notons :

- $Q_i(t)$ le débit volumique de la base i au temps t, avec $i \in \{1,...n\}$ ;
- $Q_{n+i}(t)$ le débit volumique total traversant le volume mort associé au pré-mélange i au temps t, avec $i \in \{1,...p\}$ (le débit entrant est toujours égal au débit sortant) ;

-

Q(t) le débit volumique total de la mélangeuse au temps t, $Q(t) = \sum_{i=1}^{n} Q_i(t)$,

- $V_i$, le volume mort associé au pré-mélange i,
- $b_i$, le vecteur des propriétés de la base i, $b^E_j(t)$ (respectivement $b^S_j(t)$) le vecteur des propriétés à l'entrée (respectivement la sortie) du pré-mélange j au temps t. Par convention, pour une base $b_i$ : $b_j^E(t) = b_j^S(t)$ .

A toute base i, associons un chemin $\Pi_i$, défini par la suite des $p_i$ volumes morts traversés à partir de cette base pour atteindre la mélangeuse. Ce chemin est une suite de $p_i$ entiers différents qui se rapportent aux indices de numérotation des pré-mélanges, $\Pi_i = \left\{\pi_i^1, \pi_i^2, ..., \pi_i^{p_i}\right\}$, avec $\pi_i^j \in \left\{1, ..., p\right\}$ pour tout $j \in \{1, ..., p_i\}$. $\Pi_i = \emptyset$, $p_i = 0$, signifie que la base i est directement injectée dans la mélangeuse.

Dans le cas de la figure 2, nous avons :

$$\Pi_1 = \{3\}, p_1 = 1,$$

$$\Pi_2 = \{2,3\}, p_2 = 2$$

$$\Pi_3 = \{2;3\}, p_3 = 2$$

$$\Pi_4 = \emptyset, p_4 = 0$$

$$\Pi_5 = \{1\}, p_5 = 1$$

$$\Pi_6 = \{1\}, p_6 = 1$$

Pour tout pré-mélange i, définissons l'ensemble $\Gamma_i$ de ses $q_i$ débits entrants. C'est un ensemble de $q_i$ entiers différents qui se rapportent aux indices de numérotation des débits volumiques, $\Gamma_i = \left\{\gamma_i^1, \gamma_i^2, ..., \gamma_i^{q_i}\right\}$, avec $\gamma_i^j \in \left\{1, ..., n+p\right\}$, pour tout $j \in \{1, ..., q_i\}$.

Dans le cas de la figure 2, nous avons :

$$\Gamma_1 = \{5,6\}, q_1 = 2$$

$$\Gamma_2 = \{2,3\}, q_2 = 2$$

$$\Gamma_3 = \{1, 6+3\} = \{1,9\}, q_3 = 2 .$$

Pour $\Pi_i = \emptyset$, les propriétés $b_i$ interviennent sous la forme pondérée $Q_i(t) / Q(t)b_i$ dans l'expression des propriétés du mélange sous forme de combinaison linéaire des propriétés des bases.

Intéressons nous maintenant au cas $\Pi_i \neq \emptyset$.

Pour le pré-mélange $\pi_i^j$, le débit total est $Q_{\pi_i^j}(t) = \sum_{k \in \Gamma_{\pi_i^j}} Q_k(t)$. La propriété en entrée $b_{\pi_i^1}^E(t)$ s'écrit :

$$b_{\pi_i^1}^E(t) = \frac{\sum_{j \in \Gamma_{\pi_i^1}} b_j^E Q_j(t)}{\sum_{j \in \Gamma_{\pi_i^1}} Q_j(t)}$$

Dans cette entrée, le terme en $b_i$ intervient sous la forme :

$$\frac{Q_i(t)}{\sum_{j\in\Gamma_{\pi_i^1}} Q_j(t)} b_i = \frac{Q_i(t)}{Q_{\pi_i^1}(t)} b_i$$

En sortie, nous avons $b_{\pi_i^1}^S(t) = b_{\pi_i^1}^E(t - \delta_{\pi_i^1}(t))$, le retard pur $\delta_{\pi_i^1}(t)$ étant défini par :

$$V_{\pi_i^1} = \int_{t-\delta_{\pi_i^1}(t)}^{t} Q_{\pi_i^1}(\tau) d\tau.$$

Le terme en $b_i$ intervient donc dans $b_{\pi_i^1}^S(t)$ sous la forme

$$\frac{Q_i(t - \delta_{\pi_i^1}(t))}{Q_{\pi_i^1}(t - \delta_{\pi_i^1}(t))} b_i.$$

De manière similaire, nous avons pour le pré-mélange $\pi_i^2$ :

$$b_{\pi_i^2}^E(t) = \frac{\sum_{j\in\Gamma_{\pi_i^2}} b_j^E Q_j(t)}{\sum_{j\in\Gamma_{\pi_i^2}} Q_j(t)},$$

Soit, pour le terme en $b_i$ dans $b_{\pi_i^2}^S(t)$

$$\frac{Q_{\pi_i^1}(t)}{Q_{\pi_i^2}(t)} \frac{Q_i(t - \delta_{\pi_i^1}(t))}{Q_{\pi_i^1}(t - \delta_{\pi_i^1}(t))} b_i.$$

Pour $b_{\pi_i^2}^S(t) = b_{\pi_i^2}^E(t - \delta_{\pi_i^2}(t))$ le terme en $b_i$ intervient sous la forme :

$$\frac{Q_{\pi_i^1}(t - \delta_{\pi_i^2}(t))}{Q_{\pi_i^2}(t - \delta_{\pi_i^2}(t))} \frac{Q_i(t - \delta_{\pi_i^2}(t) - \delta_{\pi_i^1}(t - \delta_{\pi_i^2}(t)))}{Q_{\pi_i^1}(t - \delta_{\pi_i^2}(t) - \delta_{\pi_i^1}(t - \delta_{\pi_i^2}(t)))} b_i.$$

Nous voyons apparaitre des compositions de retards sur les chemins $\Pi_i$. Définissons les fonctions :

$\Delta_i^j(t) : t \mapsto t - \delta_{\pi_i^j}(t)$, pour tout $\pi_i^j$ dans $\Pi_i$. La composition de ces fonctions à $j$ fixé est définie par :

$$\Delta_i^{k,j}(t) \triangleq \Delta_i^k(\Delta_i^j(t)) : t \mapsto t - \delta_{\pi_i^j}(t) - \delta_{\pi_i^k}(t - \delta_{\pi_i^j}(t))$$

.

et

$$\Delta_i^{l,k,j}(t) \triangleq \Delta_i^l(\Delta_i^{k,j}(t)).$$

Avec ces définitions, la formule pour le terme $b_i$ dans $b_{\pi_i^2}^S(t)$ s'écrit

$$\frac{Q_{\pi_i^1}(\Delta_i^2(t))}{Q_{\pi_i^2}(\Delta_i^2(t))} \frac{Q_i(\Delta_i^{1,2}(t))}{Q_{\pi_i^1}(\Delta_i^{1,2}(t))} b_i.$$

A la sortie du dernier prémélange $\pi_i^{p_i}$, nous avons pour $b_{\pi_i^{p_i}}^S(t)$ en $b_i$

$$\frac{Q_{\pi_i^{p_i-1}}(\Delta_i^{p_i}(t))}{Q_{\pi_i^{p_i}}(\Delta_i^{p_i}(t))} \frac{Q_{\pi_i^{p_i-2}}(\Delta_i^{p_i-1,p_i}(t))}{Q_{\pi_i^{p_i-1}}(\Delta_i^{p_i-1,p_i}(t))} \cdots \frac{Q_{\pi_i^1}(\Delta_i^{2,\ldots,p_i}(t))}{Q_{\pi_i^2}(\Delta_i^{2,\ldots,p_i}(t))} \frac{Q_i(\Delta_i^{1,2,\ldots,p_i}(t))}{Q_{\pi_i^1}(\Delta_i^{1,2,\ldots,p_i}(t))}$$

et enfin dans le mélange, en notant $U_i(t)$ le terme en facteur de $b_i$

$$U_i(t) = \frac{Q_{\pi_i^{p_i}}(t)}{Q(t)} \frac{Q_{\pi_i^{p_i-1}}(\Delta_i^{p_i}(t))}{Q_{\pi_i^{p_i}}(\Delta_i^{p_i}(t))} \frac{Q_{\pi_i^{p_i-2}}(\Delta_i^{p_i-1,p_i}(t))}{Q_{\pi_i^{p_i-1}}(\Delta_i^{p_i-1,p_i}(t))} \cdots \frac{Q_{\pi_i^1}(\Delta_i^{2,\ldots,p_i}(t))}{Q_{\pi_i^2}(\Delta_i^{2,\ldots,p_i}(t))} \frac{Q_i(\Delta_i^{1,2,\ldots,p_i}(t))}{Q_{\pi_i^1}(\Delta_i^{1,2,\ldots,p_i}(t))}. \qquad (4)$$

Alors $U_i(t) = u_i(t) = Q_i(t) / Q(t)$ pour $\Pi_i \neq \emptyset$, et la sortie s'écrit :

$$y(t) = \sum_{i=1}^n U_i(t) b_i \quad (5)$$

Ainsi, pour les cas pré-mélangés, l'équation (1) du système dynamique devient :

$$\frac{d\hat{B}_j^t}{dt} = -\beta_j H U(t)(y_j(t) - y_j^{mes}(t)), \qquad (2)$$

Avec $U(t) = (U_1(t),\ldots,U_n(t))^t$, les $U_i(t)$ étant définis par l'équation (4) et $y(t) = (y_l(t),\ldots,y_m(t))^t$ par l'équation (5).
La fonction utilisée dans le cas sans pré-mélange reste une fonction de Lyapunov pour cette nouvelle dynamique et permet de montrer la convergence de $\hat{B}U$ vers $BU$.

**Exemple 2.2 : Rétroaction avec pré-mélanges, exemple de formalisation et d'implémentation**

Cet exemple est similaire à l'exemple 2.1, mais correspond à une solution générique particulière de formalisation et d'implémentation de la topologie avec multiples pré-mélanges en amont de mélangeuse.
On prendra la notation dV pour un retard de pré-mélange associé à une volume V de pré-mélange]

**A Matrice de topologie de pré-mélanges multiples**

Une matrice de description de topologie générique permet ici de définir les volumes morts associés à un vecteur de n bases maximum pour une série de k étages de pré-mélanges maximum en série possibles, sachant que pour un étage donné, plusieurs pré-mélanges en parallèles peuvent être définis.

Les dimensions maximales de la matrice de topologie (n bases et k étages) sont des paramètres modifiables par configuration.

Chaque ligne de la matrice correspond à une base de constituant donnée.

Chaque colonne de cette matrice comprend le descriptif d'un étage de pré-mélange, avec les volumes morts associés aux bases de constituants participant au pré-mélange considéré, ou aux regroupements de bases pré-mélangées, issues de pré-mélanges d'étages précédents.

Un exemple de topologie réelle comporte ici 3 étages de pré-mélange décrits de la façon suivante :

**Tableau 1.4 : Matrice de topologie multi pré-mélange**

| Bases | Etage 1 | Etage 2 | Etage 3 | Bacs |
|-------|---------|---------|---------|------|
| 1 | V1 | V1' | *V1"* | B1 |
| 2 | V1 | V1' | *V1"* | B2 |
| 3 | 0 | 0 | | |
| 4 | 0 | 0 | *V2"* | B4 |
| 5 | 0 | 0 | *V2"* | B5 |
| 6 | V2 | V1' | V1" | B6 |
| 7 | V2 | V1' | V1" | B7 |
| 8 | 0 | 0 | 0 | |
| 9 | 0 | 0 | 0 | |
| 10 | 0 | 0 | V1" | B10 |
| 11 | 0 | 0 | 0 | |

Cette matrice descriptive de la topologie multi-pré-mélanges, permet d'identifier les pré-mélanges en séries (sur plusieurs étages différents) et en parallèles (sur un même étage de pré-mélange), les bases concernées et les volumes morts associés.

Cette formulation a l'avantage d'être compacte, complète, claire et générique.

En fonction de la recette courante (avec tel ou tel bac, pour les cas où on bascule sur bac de secours...), la topologie de pré-mélange prise en compte saura s'adapter automatiquement compte-tenu de la recette.

L'exemple de matrice fourni plus haut est une illustration de la topologie représentée sur la figure 11.

Le premier étage comporte deux pré-mélanges en parallèle de volume mort V1 et V2.

Le second étage comprend un unique pré-mélange de volume mort V'.

Le troisième étage comprend deux pré-mélanges en parallèle de volumes morts respectifs V1" et V2".

La lecture de cette matrice de topologie se fait donc de gauche à droite.

Pour une ligne donnée (un constituant donné i), et pour un étage donné (colonne k),

Si tous les éléments de la ligne i d'indice<k (partie gauche de la ligne) sont nuls, alors la base considérée ne participe à aucun pré-mélange sur les étages précédents.

Si un des éléments de la ligne i d'indice <k (partie gauche de la ligne) est non nul alors la base considérée participe à un pré-mélange sur les étages précédents, elle est alors associée à un retard de pré-mélange associé à un volume mort correspondant à la valeur non nulle de l'élément considéré.

Dans ce cas, il faut remonter à l'ensemble des bases de constituants associés au même volume mort, pour l'étage considéré (sur la colonne considérée de la matrice) : ce sous-ensemble de constituants appartenant au même pré-mélange est un regroupement de bases pré-mélangées en entrée de l'étage considéré.

La seule restriction de cette description matricielle est la suivante : pour cette description, on ne peut pas avoir 2 pré-mélanges différents, en parallèle (au même étage), associé à une valeur de volume mort identique. Dans ce cas, on n'a aucun moyen de différencier les bases participant à chacun des deux pré-mélanges : Elles sont regroupées dans un même pré-mélange.

**B Unique Pré-mélange**

1/ Sans pré-mélange, le modèle linéaire en volume utilisé après transformation en indice des propriétés de constituants fournit la valeur de la propriété j du mélange:

$$y_j(t) = \sum_i bi * ui(t)$$

Cette équation permettant le calcul d'une prédiction de qualité de mélange $y_j$ à partir d'une matrice des qualités des constituants B (de composante vecteur ligne bi pour une propriété j) et d'un vecteur de commande U (composante ui, dépendante du temps t).

2/ Pour un unique pré-mélange, cette équation devient pour dV, retard de pré-mélange, la formule générale suivante notée [2.2B2]

$$y(t) = \sum_{i \in PM} bi * ui(t - dV) * (\sum_{j \in PM} uj(t)) / (\sum_{j \in PM} uj(t - dV)) + \sum_{i \notin PM} biui(t)$$

PM est le sous-ensemble des indices des constituants appartenant au pré-mélange.

Les constituants n'appartenant pas au pré-mélange sont incorporés directement à la mélangeuse.

Considérons l'exemple suivant, avec les bases 1 et 2 pré-mélangées et les bases 3 et 4 non pré-mélangées, dont la topologie est représentée sur la figure 12.

Le débit total F(t) en sortie de mélangeuse est la somme des débits partiels des voies en amont Fi(t) correspondant aux ratios ui(t).

Les constituants i du pré-mélange sont associés à des ratios u'i, correspondant aux débits partiels des voies pré-mélangées ramenés au débit total des voies pré-mélangées, ici F1(t).

Ce débit total des voies pré-mélangées est relatif à un produit de pré-mélange caractérisé par une valeur de propriété y1(t).

Le produit sortie mélangeuse est caractérisé par une valeur de propriété y.

Les constituants i en entrée ont une valeur de propriété qi.

dV est le retard du pré-mélange.

La qualité y(t) du produit vaut à l'instant t:

$$y(t) = (F1(t)/F(t))\ y1(t) + q3*u3 + q4*u4$$

On a aussi y1(t) = u'1(t-d)q1 + u'2(t-dV)q2.

Par ailleurs,

$$F1(t) = (u1(t)+u2(t))F(t)$$

et

$$u'i(t)\ F1(t) = ui(t)\ F(t),\ i = 1\ ou\ 2.$$

Donc

$$u'i(t-dV) = ui(t-dV)/(u1(t-dV)+u2(t-dV)).$$

Finalement,

$$y(t) = q1 * u1(t-dV) (u1(t)+u2(t))/(u1(t-dV)+u2(t-dV))$$

$$+ q2 * u2(t-dV) (u1(t)+u2(t))/(u1(t-dV)+u2(t-dV))$$

$$+ q3 *u3 + q4*u4$$

On retrouve ici une expression correspondant à la formule générale [2.2B2] pour un unique pré-mélange.

**C Pré-mélanges multiples en parallèle**

Pour plusieurs pré-mélanges en parallèle sur un unique étage, l'équation précédente devient :

$$y(t) = \sum_{k \in PM(e)} \left( \sum_{i \in PM(e,k)} bi * ui(t - dV(k,e)) * \left( \sum_{j \in PM(e,k)} uj(t) \right) / \left( \sum_{j \in PM(e,k)} uj(t - dV(k,e)) \right) + \sum_{i \in PM(e,k)} biui(t) \right) + \sum_{i \notin PM(e,k \forall kPM(e))} biui(t)$$

En effet, on suppose qu'une même base ne participe pas à 2 pré-mélanges différents en parallèle au même niveau : on a donc une juxtaposition des termes concernant les bases pré-mélangées pour les différents pré-mélanges successifs.

PM(e) est l'ensemble des indices k de pré-mélanges en parallèle pour l'étage considéré e.

PM(e,k) est l'ensemble des indice k' (désignés par i ou j dans les sommes) des bases appartenant au pré-mélange k de l'étage e courant.

dV = dV(k,e) est le retard, du pré-mélange courant k pour l'étage e considéré.

**D Pré-mélanges multiples en série et en parallèle**

Pour plusieurs pré-mélanges en série et en parallèle, nous allons procéder de façon progressive, étage par étage, en partant des bases de départ associées au vecteur de commande courante non retardée, et en calculant un vecteur de commande retardée en sortie de chaque étage et en propageant ce vecteur sur l'étage suivant.

Le vecteur de commande retardée en sortie du dernier étage sera le vecteur de commande retardée que l'on utilisera pour assurer une synchronisation des commandes dans l'équation d'estimation de propriété.

Pour notre exemple décrit au tableau 1.4,

Les bases ne participant à aucun pré-mélange au premier étage sont les bases 3, 4, 5, 8, 9 et 10.

La contribution pour ces bases est la suivante :

$$\sum_{i \notin PM(k) \forall k \in PM(1)} biui(t) = b3u3(t) + b4u4(t) + b5u5(t) + b8u8(t) + b9u9(t) + b10u10(t)$$

Les bases participant au pré-mélange prémél V1 sont: u1 et u2

Les bases participant au pré-mélange prémélV2 sont : u6 et u7

La contribution pour ces bases est la suivante :

$$\sum_{i \in prémélV1} bi * ui(t - dV1) * \left( \sum_{j \in prémélV1} uj(t) \right) / \left( \sum_{j \in prémélV1} uj(t - dV1) \right) +$$

$$\sum_{i \in prémélV2} bi * ui(t - dV2) * \left( \sum_{j \in prémélV2} uj(t) \right) / \left( \sum_{j \in prémélV2} uj(t - dV2) \right)$$

Pour ce premier étage, les retards de pré-mélange $\delta V1$ et $\delta V2$ sont associés respectivement aux volumes morts V1 et V2 des deux pré-mélanges à considérer respectivement sur les bases 1, 2 et sur les bases 6, 7.

Le vecteur de commande retardée VR(t) que l'on souhaite calculer sera de la forme suivante :

$$y_j(t) = \sum_i bi * VRi(t)$$

Le vecteur de commande retardée en sortie d'étage 1 sera alors explicité de la façon suivante :

Ce vecteur de commande retardée pour l'étage 1 est désigné par VR1.

Les composantes de ce vecteur, associées aux bases qui ne participent à aucun pré-mélange seront les composantes correspondantes du vecteur de commande actuelle inchangé : $VR1i(t) = ui(t)$

En revanche, les composantes de ce vecteur, associées aux bases qui participent à un pré-mélange « prémél » de retard dV , subiront un traitement de synchronisation du type :

$$VR\,1i(t) = ui(t - dV)*(\sum_{j \in \text{prémél}} uj(t)) / \sum_{j \in \text{prémél}} uj(t - dV))$$

Le calcul de VR1 utilise le vecteur de commande actuelle u(t). Pour l'exemple du tableau 1.4, VR1 sera donc défini par :

```
1 u1(t-dV1)*[U1+U2(t)]/[U1+U2(t-dV1)]
2 u2(t-dV1)*[U1+U2(t)]/[U1+U2(t-dV1)]
3 u3(t)
4 u4(t)
5 u5(t)
6 u6(t-dV2)*[U6+U7(t)]/[U6+U7(t-dV2)]
7 u7(t-dV2)*[U6+U7(t)]/[U6+U7(t-dV2)]
8 u8(t)
9 u9(t)
10 u10(t)
```

Le vecteur de commande retardée calculé pour l'étage 2 (désigné par VR2) utilisera en entrée d'étage comme commande actuelle le vecteur de commande retardée en sortie d'étage précédent (désigné par VR1, de composante VR1i=VR1(i)).

Ce deuxième étage est défini par un pré-mélange de volume mort V1' et de retard correspondant dV1' pour les bases 1, 2, 6 et 7.

VR2 sera donc défini par les composantes suivantes :

```
1 VR11(t-dV1')*[VR11+VR12(t)+VR16+VR17(t)]/[VR11+VR12+VR16+VR17(t-dV1')]
2 VR12(t-dV1')*[VR11+VR12(t)+VR16+VR17(t)]/[VR11+VR12+VR16+VR17(t-dV1')]
3 VR13(t)
4 VR14(t)
5 VR15(t)
6 VR16(t-dV1')*[VR11+VR12(t)+VR16+VR17(t)]/[VR11+VR12+VR16+VR17(t-dV1')]
7 VR17(t-dV1')*[VR11+VR12(t)+VR16+VR17(t)]/[VR11+VR12+VR16+VR17(t-dV1')]
8 VR18(t)
9 VR19(t)
10 VR110(t)
```

Le vecteur de commande retardée calculé pour l'étage 3 (désigné par VR3) utilisera en entrée d'étage comme commande actuelle le vecteur de commande retardée en sortie d'étage précédent (désigné par VR2, de composante VR2i=VR2(i)).

Ce troisième étage est défini par un pré-mélange de retard d$V1$" de volume mort $V1$" pour les bases 1, 2, 6, 7 et 10 d'une part et un deuxième pré-mélange de retard d $V2$" de volume mort V2" pour les bases 4, 5 d'autre part.

VR3 sera donc défini par :

```
1 VR21(t-dV1")*R21+VR22+VR26+VR27+VR210(t)]/ [VR21+VR22+VR26+VR27+VR210 (t-dV1")]
2 VR22(t-dV1')*[VR21+VR22+VR26+VR27+VR210(t)]/ [VR21+VR22+VR26+VR27+VR210 (t-dV1")]
3 VR23(t)
4 VR24(t-dV2")*[VR24+VR25(t)]/[VR24+VR25(t-dV2")]
```

5 VR25(t-d$V2$")*[VR24+VR25(t)]/[VR24+VR25(t-d$V2$")]
6 VR26(t-d$V1$")*[VR21+VR22+VR26+VR27+VR210(t)]/ [VR21+VR22+VR26+VR27+VR210 (t-d$V1$")]
7 VR27(t-dV1")*[VR21+VR22+VR26+VR27+VR210(t)]/ [VR21+VR22+VR26+VR27+VR210 (t-d$V1$")]
8 VR28(t)
9 VR29(t)
10 VR210(t- d$V1$")*[VR21+VR22+VR26+VR27+VR210(t)]/ [VR21+VR22+VR26+VR27+VR210 (t-d$V1$")]

Pour cette topologie à 3 étages, le vecteur retardé final utilisé ensuite dans la loi d'adaptation de la matrice B des constituants, sera celui calculé en sortie d'étage 3, c'est à dire VR3 défini ci-dessus.

### E Formulation générale récursive de la commande retardée

En sortie d'étage k, on obtient une formule récursive du vecteur de commande retardée de la forme : $VR_k = f(VR_{k-1})$, avec :

$VR_k$ vecteur retardé en sortie d'étage k
$VR_{k-1}$ vecteur retardé en sortie d'étage k-1.
$VR_k$ sera donc défini par :

$$
\begin{bmatrix}
VR_{(k-1)}i(t - dV(k, p_k))\,* \\
(\sum_{j \in PM(k, p_k)} VR_{(k-1)}j(t)) / \sum_{j \in PM(k, p_k)} VR_{(k-1)}j(t - dV(k, p_k))) \\
si \qquad i \in PM(k, p_k) \\[2em]
VR_{(k-1)}i(t) \\
\qquad si \qquad i \notin PM(k, p_k) \qquad \forall p_k \in Pk
\end{bmatrix}
$$

$dV(k, p_k)$ est le retard de pré-mélange pour le pré-mélange $p_k$, parmi les Pk pré-mélanges de l'étage k, avec un total de K étages à considérer pour la topologie à traiter.
$PM(k, p_k)$ est le sous-ensemble des bases du pré-mélange $p_k$ de l'étage k.

### F Utilisation implicite du retard variable

Le retard variable : $dV(k, p_k)$ est calculé à partir du volume mort associé au pré-mélange $p_k$ de l'étage k et du débit.
Pour la gestion de retard variable, une formule implicite permettant d'obtenir par interpolation la valeur de commande retardée (et non le retard) associée à un volume mort donné à l'horizon peut être ici avantageusement utilisée.
L'expression récursive de la commande retardée pour des cascades de pré-mélanges série/parallèle, induit que ce retard variable est une composition de retards liés aux volumes morts des différents pré-mélanges des étages « antérieurs » compte-tenu de la topologie définie.

### G Topologies équivalentes

La topologie proposée ici avec pré-mélange V2" à l'étage 3 est équivalente si on déplace ce pré-mélange à l'étage 1 (V3) ou à l'étage 2 (V2') :

**Tableau 1.5 : Matrice avec V2" :**

| Bases | Etage 1 | Etage 2 | Etage 3 | Bacs |
|-------|---------|---------|---------|------|
| 1 | V1 | V1' | *V1"* | B1 |
| 2 | V1 | V1' | *V1"* | B2 |

(suite)

| Bases | Etage 1 | Etage 2 | Etage 3 | Bacs |
|---|---|---|---|---|
| 3 | 0 | 0 | | |
| 4 | 0 | 0 | *V2"* | B3 |
| 5 | 0 | 0 | *V2"* | B4 |
| 6 | V2 | V1' | V1" | B5 |
| 7 | V2 | V1' | V1" | B6 |
| 8 | 0 | 0 | 0 | |
| 9 | 0 | 0 | 0 | |
| 10 | 0 | 0 | V1" | B7 |
| 11 | 0 | 0 | 0 | |

**Matrice équivalente avec V3 (= V2") :**

La topologie réelle comporte 3 étages de pré-mélange :

Tableau 1.6

| Bases | Etage 1 | Etage 2 | Etage 3 | Bacs |
|---|---|---|---|---|
| 1 | V1 | V1' | *V1"* | B1 |
| 2 | V1 | V1' | *V1"* | B2 |
| 3 | 0 | 0 | | |
| 4 | V3 | 0 | *0* | B4 |
| 5 | V3 | 0 | *0* | B5 |
| 6 | V2 | V1' | V1" | B6 |
| 7 | V2 | V1' | V1" | B7 |
| 8 | 0 | 0 | 0 | |
| 9 | 0 | 0 | 0 | |
| 10 | 0 | 0 | V1" | B10 |
| 11 | 0 | 0 | 0 | |

**Matrice équivalente avec V2' (=V3= V2") :**

La topologie réelle comporte 3 étages de pré-mélange :

Tableau 1.7

| Bases | Etage 1 | Etage 2 | Etage 3 | Bacs |
|---|---|---|---|---|
| 1 | V1 | V1' | V1" | B1 |
| 2 | V1 | V1' | V1" | B2 |
| 3 | 0 | 0 | | |
| 4 | 0 | V2' | 0 | B4 |
| 5 | 0 | V2' | 0 | B5 |
| 6 | V2 | V1' | V1" | B6 |
| 7 | V2 | V1' | V1" | B7 |

(suite)

| Bases | Etage 1 | Etage 2 | Etage 3 | Bacs |
|-------|---------|---------|---------|------|
| 8 | 0 | 0 | 0 | |
| 9 | 0 | 0 | 0 | |
| 10 | 0 | 0 | V1" | B10 |
| 11 | 0 | 0 | 0 | |

**Exemple 3 : séquences d'optimisation**

Le procédé de contrôle selon l'invention utilise un procédé d'optimisation pour déterminer la recette u lors de la sous étape (3) de l'étape (ii). Ce procédé d'optimisation comprend les étapes (a) à (d) énoncées plus haut. Le procédé d'optimisation est mis en oeuvre par l'optimiseur 14 et fournit une recette u optimisée à l'estimateur 13 pour la détermination de la recette à appliquer aux moyens de commande 10 du dispositif.

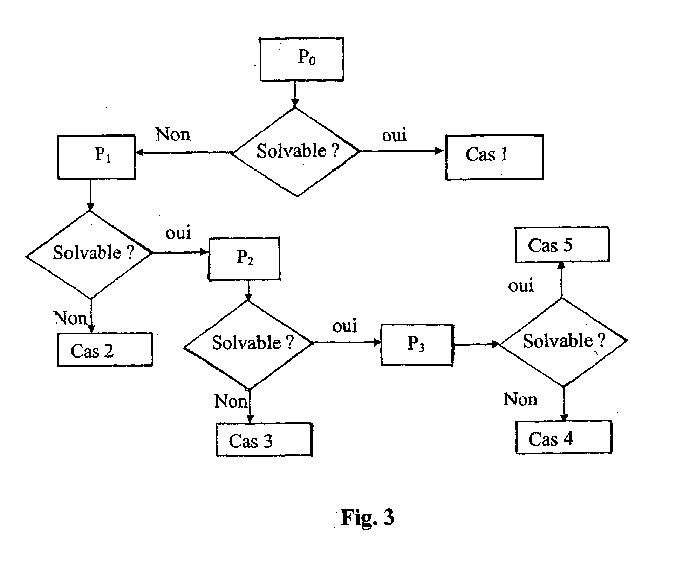

Un exemple de fonctionnement du procédé d'optimisation utilisé pour optimiser la recette u est décrit ci-après, en référence à la figure 3.

Notations : On considère les sous-ensembles suivants de $M = \{1,2,...,m\}$, ensemble des indices attribués aux sorties :

- R, le sous-ensemble des indices de sortie pour lesquelles sont spécifiées des références calculées en mode intégré ou des consignes en mode instantané,
- $H_m$, le sous-ensemble des indices de sortie pour lesquelles sont spécifiées des bornes minimales dites "dures", c'est-à-dire qui doivent être respectées en priorité,
- $H_M$, le sous-ensemble des indices de sortie pour lesquelles sont spécifiées des bornes maximales dures,
- $S_m$, le sous-ensemble des indices de sortie pour lesquelles sont spécifiées des bornes minimales dites "douces", c'est-à-dire non prioritaires,
- $S_M$, le sous-ensemble des indices de sortie pour lesquelles sont spécifiées des bornes maximales douces.

A chaque sortie, sont supposées pouvoir être associées au plus une référence (ou consigne), une borne minimale (dure ou douce) et une borne maximale (dure ou douce). Implicitement donc, $H_m \cap S_m = \varnothing$ et $H_M \cap S_M = \varnothing$.

Par ailleurs, les effets estimés des additifs sont supposés pris en compte dans la valeur des références et des contraintes.

Les égalités devant être prises en compte pour les références $y_i^{réf}$ sont :

$$y = y_i^{réf}, \forall i \in R.$$

Soit $\hat{B}_R$ la matrice extraite de $\hat{B}$ en ne conservant que les lignes qui correspondent aux indices appartenant à R. En introduisant les vecteurs $y_R$ et $y_R^{réf}$, cet ensemble d'inégalités se réécrit $y_R = \hat{B}_R u = y_R^{réf}$. C'est une contrainte sur l'inconnue u.

L'ensemble des contraintes sur les sorties s'écrit :

$$\begin{cases} y_i & \geq & y_i^{\min} & \forall i \in H_m \\ y_i & \leq & y_i^{\max} & \forall i \in H_M \\ y_i & \geq & y_i^{\min} & \forall i \in S_m \\ y_i & \leq & y_i^{\max} & \forall i \in S_M \end{cases}$$

Soit $\hat{B}_{Hm}$ la matrice extraite de $\hat{B}$ en ne conservant que les lignes relatives aux indices appartenant à $H_m$. En introduisant les vecteurs $y_{H_m}$ et $y_{H_m}^{\min}$, le premier ensemble d'inégalités se réécrit $y_{H_m} = \hat{B}_{H_m} u \geq y_{H_m}^{\min}$. C'est une contrainte sur l'inconnue u. Via des notations similaires,

$$\begin{cases} \hat{B}_{H_m} u &\geq y_{H_m}^{\min} \\ \hat{B}_{H_M} u &\leq y_{H_M}^{\max} \\ \hat{B}_{S_m} u &\geq y_{S_m}^{\min} \\ \hat{B}_{S_M} u &\leq y_{S_M}^{\max} \end{cases}$$

Cet ensemble d'inégalités est bien entendu équivalent à

$$\begin{cases} -\hat{B}_{H_m} u &\leq -y_{H_m}^{\min} \\ \hat{B}_{H_M} u &\leq y_{H_M}^{\max} \\ -\hat{B}_{S_m} u &\leq -y_{S_m}^{\min} \\ \hat{B}_{S_M} u &\leq y_{S_M}^{\max} \end{cases}$$

Notons :

$$B_H = \begin{pmatrix} -B_{H_m} \\ B_{H_M} \end{pmatrix} \quad B_S = \begin{pmatrix} -B_{S_m} \\ B_{S_M} \end{pmatrix} \quad y_H^{\max} = \begin{pmatrix} -y_{H_m}^{\min} \\ y_{H_M}^{\max} \end{pmatrix} \quad y_S^{\max} = \begin{pmatrix} -y_{S_m}^{\min} \\ y_{S_M}^{\max} \end{pmatrix}$$

L'ensemble d'inégalités s'écrit finalement :

$$\begin{cases} \hat{B}_H u &\leq y_H^{\max} \\ \hat{B}_S u &\leq y_S^{\max} \end{cases}$$

Par la suite, conformément aux notations énoncées plus haut, sont utilisées, pour un ensemble quelconque P d'indices associés à ces sorties, les notations $y_p = \hat{B}_p u \leq y_P^{Max}$ . Pour une unique sortie d'indice j, la notation est simplement $y_j = \hat{B}_j u$.

Le problème d'optimisation initial P0 (problème complet), consiste à trouver la recette u la plus proche d'une recette de référence $\bar{u}$, tout en respectant l'ensemble des contraintes sur u. Ce problème n'a pas forcément de solution. S'il n'en n'a pas, il faut quand même produire une nouvelle recette, qui est obtenue selon l'invention en résolvant séquentiellement plusieurs problèmes d'optimisation successifs :

- dans un premier temps, (problème P1), on cherche les valeurs admissibles pour les contraintes dures sur les sorties, en procédant de manière itérative des contraintes dures les plus prioritaires vers les contraintes dures les moins prioritaires ;
- dans un second temps (problème P2), on cherche les valeurs admissibles pour les références ;
- enfin, (problème P3), on cherche les valeurs admissibles pour les contraintes douces sur les sorties, en procédant de manière itérative des contraintes douces les plus prioritaires vers les contraintes douces les moins prioritaires.

Le tableau 1 décrit un exemple des séquences d'optimisation.

## Tableau 1 : séquences d'optimisation P0 à P3

| | | P0 | P1 | P2 | P3 |
|---|---|---|---|---|---|
| Optimisation de la recette | | critère | | | |
| Min / Max analyseur | Doux | contrainte | | | critère |
| | Dur | contrainte | Critère | contrainte atteignable | contrainte atteignable |
| Consignes analyseurs | | contrainte | | Critère | référence atteignable |
| Vitesse / Min / Max Bases | | contrainte | contrainte | contrainte | contrainte |
| Somme voies = 100% | | contrainte | contrainte | contrainte | contrainte |

Les minima/maxima des bases utilisées comme contraintes prioritaires permanentes sont ramenées à des valeurs en proportions, sachant que les minima/maxima hydrauliques sont exprimés en m$^3$/h, en utilisant le débit total de la mélangeuse.

Les vitesses d'évolution (ROC) sont de l'ordre typiquement de 25%.

Pour la réalisation d'un mélange de type essence, les minima durs sont typiquement la densité, l'indice d'octane, les pourcents distillés, tandis que les maxima durs sont typiquement la teneur en soufre, la densité, la tension de vapeur, la volatilité, la teneur en benzène, la teneur en oléfines et la teneur en aromatiques. Et inversement pour les minima et maxima doux, sauf pour la densité qui voit son seuil minimum et maximum comme des seuils durs.

Pour la réalisation d'un mélange de type gazole, les minima doux sont typiquement la teneur en soufre, la densité, la filtrabilité et le point de trouble, et les maxima doux sont typiquement le point d'éclair, l'indice de cétane et le pourcent distillé. Et inversement pour les minima et maxima durs.

Pour la réalisation d'un mélange de type fioul, les minima durs sont typiquement la viscosité, et les maxima durs sont typiquement, la viscosité, la teneur en soufre, et la densité.

Les différents problèmes successifs détaillés ci-après peuvent être utilisés.

**Problème initial P0**

Le problème initial P0 est utilisé dans la mise en oeuvre de l'étape (a) du procédé d'optimisation décrit précédemment. La solution de ce problème de régulation complet P0, consiste en une recette u optimisée prenant en compte des contraintes sur les proportions des constituants et des contraintes sur les propriétés du mélange.

Ce problème consiste à respecter l'ensemble des contraintes sur la recette et sur les sorties, ainsi que les références sur les sorties, tout en s'éloignant le moins possible de la recette de référence, au sens des moindres carrés.

Le problème à résoudre est ainsi :

$$\min_u \|u - \bar{u}\|^2$$

$$\begin{cases} u^{min} \leq u \leq u^{max} \\ \sum_{i=1}^{n} u_i = 1 \\ \hat{B}_R u = y_R^{ref} \\ \hat{B}_H u \leq y_H^{max} \\ \hat{B}_S u \leq y_S^{max} \end{cases}$$

Le problème d'optimisation formulé ici fait apparaître comme variable d'optimisation un vecteur u de recette que l'on souhaite calculer.

Une alternative consiste à poser un problème d'optimisation similaire, avec comme variable d'optimisation un vecteur d'écart e entre la recette initiale de référence et la recette u des proportions des constituants.

Lorsque ce problème possède une solution u*, elle est appliquée. Dans le cas contraire, les trois problèmes P1 à P3 décrits ci-après sont résolus successivement.

Pour ce problème P0, les contraintes à respecter sont :

(1) des contraintes sur les proportions des bases :

○ contraintes hydrauliques (inégalités) : chaque voie i peut fournir un débit compris entre $F_i^{min}$ et $F_i^{max}$. Pour un débit d'allure courant F, il faut, pour chaque base :

$$u_i^{p,min} = \frac{F_i^{min}}{F} \leq u_i \leq u_i^{p,max} = \frac{F_i^{max}}{F}$$

○ contraintes d'ordonnancement (inégalités) : elles correspondent aux incorporations minimales et maximales pour chaque base (proportions dont la somme est égale à 1). Pour le mode instantané, ceci se traduit par des contraintes minimales $u_i^{0,min}$ et maximales $u_i^{0,max}$.

○ contraintes de variation d'incorporation (inégalités) : la proportion de chaque base i ne peut pas évoluer en proportion de plus de $\delta u_i^b$ à la baisse et de plus de $\delta u_i^h$ à la hausse. Ainsi, si la proportion à l'appel précédent valait $u_i$, la commande courante doit être supérieure à $u_i^{\delta,min} = u_i(1 - \delta u_i^b)$ et inférieure à $u_i^{\delta,max} = u_i(1 - \delta u_i^h)$.

○ contrainte égalité de débit total constant (la somme des proportions des bases doit être égale à 1).

(2) des contraintes sur les propriétés du mélange :

○ contraintes inégalités associées aux équations de régulation exprimant que la valeur y mesurée doit rejoindre sa consigne $y_{sp}$ (pouvant éventuellement se formuler sous la forme de contraintes inégalités moyennant l'introduction de tolérances, une formulation de type contrainte égalité est requise, si on n'a pas recours à ces tolérances).

○ Contraintes inégalités pour maintenir les valeurs des propriétés mesurées à l'intérieur d'une fourchette minimale/maximale, afin de respecter les spécifications et limiter la sur-spécification.

Dans ce problème, le critère visé peut s'exprimer comme un écart à la recette initiale que l'on cherchera à minimiser tout en s'assurant que toutes les contraintes précisées ci-dessus ont été respectées.

Lorsque le problème P0 n'est pas solvable, (infaisabilité du mélange pour tenir l'ensemble des spécifications demandées), une séquence d'optimisation en trois étapes P1, P2, P3 se déclenche.

**Problème P1 : gestion des contraintes dures**

Le problème P1 est mis en oeuvre au cours de l'étape (b) du procédé d'optimisation décrit précédemment.

On détermine ainsi une recette u pour laquelle le problème de régulation minimal P1 est résolu, qui ne prend en compte que des contraintes du problème P0 définies comme prioritaires. Ce problème P1 met en oeuvre une succession de problèmes d'optimisation, normalement faisables, dont les critères consistent à pénaliser la violation desdites contraintes prioritaires, afin de définir de nouvelles valeurs atteignables pour ces contraintes prioritaires.

Ces critères correspondent à des contraintes hiérarchisées prioritaires de type inégalités sur les propriétés surveillées, de préférence des contraintes hiérarchisées de rang dur, prioritaire par rapport aux objectifs de régulation, et induisant des coûts de non respect des spécifications de qualité.

Ce problème P1 concerne la gestion des contraintes dures (contraintes sur les proportions des bases et contraintes prioritaires sur les propriétés du mélange), de manière itérative, par priorités décroissantes. Plusieurs contraintes pouvant avoir la même priorité, la gestion itérative travaille par ensemble de contraintes d'égales priorités.

A chaque contrainte est associé un rang. Par convention, plus le rang associé à la contrainte est faible, moins la contrainte est prioritaire. Les rangs dits positifs sont associés à des contraintes prioritaires, tandis que les rangs dits négatifs sont associés à des contraintes non prioritaires.

Soit une partition de $H = Hm \cup HM$ en p sous ensemble $H_i$ tous non vides, regroupant chacun des indices correspondant à des sorties sujettes à des contraintes dures d'égales priorités. Par construction, $p \leq card(H), U_{i=1}^{p} H_i = H$ et $H_i \cap H_j = \varnothing, \forall j \neq i$. Les contraintes relatives à $H_j$ sont moins prioritaires que celles relatives à $H_i$ dès que i<j. On note aussi $H_{1j} = U_{i=1}^{j} H_j$.

_Itération 1 :_ traitement des contraintes les plus prioritaires, associées à $H_1$.

Il faut résoudre :

$$\min_{u, \varsigma} \left\| \hat{B}_{H_1} u + \varsigma - y_{H_1}^{max} \right\|^2$$

$$\begin{cases} u^{min} \leq u \leq u^{max} \\ \varsigma \geq 0 \\ \sum_{i=1}^{n} u_i = 1 \end{cases}$$

avec $\zeta$, vecteur de variable d'écart (vecteur "slack") qui permet d'augmenter la dimension du vecteur d'optimisation (u, $\zeta$) et de calculer un dépassement optimal, correspondant aux relaxations de contraintes.

Ce problème a une solution quand la valeur initiale de u satisfait les bornes et la contrainte égalité sur la somme de ses éléments, ce qui est toujours le cas.

La solution (u*, $\zeta$*) permet de relaxer le problème d'optimisation le cas échéant.

En itérant sur les card($H_1$) éléments de $\zeta$, les valeurs atteignables $y_{H_1}^{max,att}$ sont définies de la manière suivante :

- si $\zeta_j$>0, alors la valeur atteignable est la valeur initiale de la contrainte,
- si $\zeta_j$=0, alors la valeur atteignable est $\hat{B}_j u$*.

Itération k+1 :

A la (k+1)$^{ième}$ itération, le problème suivant est résolu :

$$\min_{u, \varsigma} \left\| \hat{B}_{H_{k+1}} u + \varsigma - y_{H_{k+1}}^{max} \right\|^2$$

$$\begin{cases} u^{min} \leq u \leq u^{max} \\ \varsigma \geq 0 \\ \sum_{i=1}^{n} u_i = 1 \\ \hat{B}_{H_{1k}} u \leq y_{H_{1k}}^{max,att} \end{cases}$$

Ce problème a toujours une solution, puisque des valeurs atteignables ont été définies aux k itérations précédentes pour les contraintes relatives aux ensembles $H_l$ à $H_k$.

Comme aux itérations précédentes, la solution $(u^*, \zeta^*)$ permet de relaxer le problème d'optimisation le cas échéant. En itérant sur les card$(H_{k+1})$ éléments $\zeta_j$ de $\zeta$, les valeurs atteignables $y_{H_{k+l}}^{max,att}$ sont définies de la manière suivante :

- si $\zeta_j > 0$, alors la valeur atteignable est la valeur initiale de la contrainte,
- si $\zeta_j = 0$, alors la valeur atteignable est $\hat{B}_j u^*$.

Le problème est entièrement résolu lorsque les p sous ensembles de contraintes de priorités décroissantes ont été abordés lors de p itérations.

Ainsi, la séquence P1 permet, par optimisations successives, de résoudre les contraintes dures (contraintes sur les proportions des bases et contraintes de rang positif sur les propriétés du mélange). En cas d'infaisabilité, les contraintes de rang les moins prioritaires sont relaxées. Les rangs sont utilisés lorsqu'on ne peut pas satisfaire tout ce qui est demandé. Les contraintes dures ont un poids plus important que les objectifs de régulation sur consigne fixe. Les contraintes douces de rang négatif sont ignorées. L'optimisation de recette reste inactive dans cette séquence.

**Problème P2 : gestion des références**

Le problème P2 est mis en oeuvre au cours de l'étape (c) du procédé d'optimisation décrit précédemment.

On détermine ainsi une recétte u pour laquelle le problème de régulation P2 est résolu, qui prend en compte lesdites nouvelles valeurs atteignables des contraintes prioritaires du problème P0 ainsi que des contraintes non prioritaires du problème P0. Ce problème P2 met en oeuvre un problème d'optimisation dont les critères consistent à pénaliser la violation desdites contraintes non prioritaires, afin de définir de nouvelles valeurs atteignable pour ces contraintes non prioritaires.

Ces critères correspondent à des contraintes égalités sur les propriétés régulées sur consigne fixe, de préférence des contraintes de rang doux non prioritaire par rapport aux objectifs de régulation, mais induisant une surqualité.

Cette séquence comporte l'ensemble des contraintes dures, avec des bornes dont la valeur a été éventuellement relaxée lors de la séquence P1. Le problème P2 cherche à satisfaire au mieux les équations de la régulation, quitte, le cas échéant, à relaxer la consigne en consigne atteignable. Ces équations sont toutes traitées simultanément (cette séquence P2 n'est pas itérative).

Une orientation des relaxations est néanmoins possible, en introduisant dans le critère un vecteur de pondération utilisant des poids relatifs caractéristiques de l'importance relative des propriétés, afin de relaxer de façon préférentielle les propriétés les moins importantes.

Les contraintes douces de rang négatif sont ignorées, et l'optimisation de la recette reste inactive.

Il s'agit de résoudre :

$$\min_{u} \| \hat{B}_R u - y_R^{ref} \|^2$$

$$\begin{cases} u^{min} \leq u \leq u^{max} \\ \sum_{i=1}^{n} u_i = 1 \\ \hat{B}_H u \leq y_H^{max,att} \end{cases}$$

Ce problème a toujours une solution u* puisque toutes les contraintes dures ont été relaxées lors de la résolution du problème P1. Les références atteignables sont calculées comme $y_R^{\text{réf,att}} = \hat{B}_R u^*$.

**Problème P3 : Gestion des contraintes douces**

Le problème P3 est mis en oeuvre au cours de l'étape (d) du procédé d'optimisation décrit précédemment.

On détermine une recette u pour laquelle un problème de régulation P3 est résolu, qui prend en compte lesdites nouvelles valeurs atteignables des contraintes prioritaires du problème P0 obtenues à l'étape (b), lesdites nouvelles valeurs atteignables des contraintes non prioritaires obtenues à l'étape (c), ainsi que toutes les autres contraintes non prioritaires du problème P0 et non traitées par les problèmes P1 et P2. Ce problème P3 met en oeuvre une succession de problèmes d'optimisation, normalement faisables, dont les critères consistent à pénaliser la violation desdites autres contraintes non prioritaires, afin de définir de nouvelles valeurs atteignables pour ces autres contraintes non prioritaires.

Ces critères correspondent à des contraintes hiérarchisées non prioritaires de type inégalité sur les propriétés surveillées.

Ce problème concerne la gestion des contraintes douces de manière itérative, il s'agit d'une gestion séquentielle par paquets de contraintes de priorités décroissantes. De manière analogue au problème P1, les sous-ensembles $S_i$ de $S = S_m \cup S_M$ sont introduits.

_Itération 1 :_ traitement des contraintes les plus prioritaires, associées à $S_1$.

Il faut résoudre

$$\min_{u,\varsigma} \left\| \hat{B}_{S_1} u + \varsigma - y_{S_1}^{\max} \right\|^2$$

$$\begin{cases} u^{\min} \le u \le u^{\max} \\ \varsigma \ge 0 \\ \sum_{i=1}^{n} u_i = 1 \\ \hat{B}_H u \le y_H^{\max,\text{att}} \\ \hat{B}_R u = y_R^{\text{Réf,att}} \end{cases}$$

La solution $(u^*, \zeta^*)$ permet de relaxer le problème d'optimisation le cas échéant. En itérant sur les $\text{card}(S_1)$ élément $\zeta_j$ de $\zeta$, les valeurs atteignables $y_{S_1}^{\max,\text{att}}$ sont définies de la manière suivante :

- si $\zeta_j > 0$, alors la valeur atteignable est la valeur initiale de la contrainte,
- si $\zeta_j = 0$, alors la valeur atteignable est $\hat{B}_j u^*$.

_Itération k+1 :_

à la $(k+1)^{\text{ième}}$ itération, le problème suivant est résolu :

$$\min_{u,\varsigma} \left\| \hat{B}_{S_{k+1}} u + \varsigma - y_{S_{k+1}}^{\max} \right\|^2$$

$$\begin{cases} u^{min} \le u \le u^{max} \\ \varsigma \ge 0 \\ \sum_{i=1}^{n} u_i = 1 \\ \hat{B}_H u \le y_H^{max,att} \\ \hat{B}_R u = y_R^{Réf,att} \\ \hat{B}_{S_{1k}} u \le y_{S_{1k}}^{max,att} \end{cases}$$

Comme aux itérations précédentes, la solution (u\*, $\zeta$\*) permet de relaxer le problème d'optimisation le cas échéant. En itérant sur les card($S_{k+1}$) éléments $\varsigma_j$ de $\zeta$, les valeurs atteignables $y_{S_{k+1}}^{max,att}$ sont définies de la manière suivante :

- si $\varsigma_j > 0$, alors la valeur atteignable est la valeur initiale de la contrainte,
- si $\varsigma_j = 0$, alors la valeur atteignable est $\hat{B}_j u$\*.

Le problème est entièrement résolu lorsque les sous ensembles de contraintes de priorités décroissantes ont tous été abordés.

Cette séquence P3 permet de prendre en compte, si possible, les contraintes douces, selon leur rang, tout en respectant les équations de régulation (éventuellement relaxées), sous contraintes sur les proportions des bases et contraintes dures éventuellement relaxées sur les propriétés du mélange.

Les contraintes de rang identique sont traitées simultanément dans les séquences d'optimisations. L'optimisation de recette reste inactive.

La résolution globale du problème d'optimisation est terminée après la dernière itération du problème P3, dont la partie u\* de la solution est la commande calculée, à appliquer sur la mélangeuse.

De préférence, pour chaque problème, sont garanties la non-violation des contraintes sur les proportions des bases ainsi que la non-violation de la contrainte sur la somme des proportions des bases, qui doit valoir 1. Ces contraintes sont alors toujours prises en compte.

La figure 3 représente le séquencement des problèmes d'optimisation P0 à P3 définis ci-dessus.

Si la résolution numérique du problème initial P0 n'a pas fourni de solution, la résolution séquentielle des problèmes P1, P2 et P3 est lancée. Bien que ces problèmes aient théoriquement toujours une solution, leur résolution numérique peut échouer. La recette appliquée sur le procédé en fonction des échecs de résolution est la suivante (voir figure 3) :

Cas 1 : la recette appliquée est le résultat du problème d'optimisation initial,
Cas 2 : la recette appliquée est la recette actuelle,
Cas 3 : la recette appliquée est le résultat de calcul de P1
Cas 4 : la recette appliquée est le résultat de calcul de P2
Cas 5 : la recette appliquée est le résultat de calcul de P3

Lors d'un échec de la résolution numérique pour les problèmes P1 à P3, et lors d'une relaxation persistante de contrainte dure lors de la solution du problème P1, une surveillance des sorties est activée. Cette surveillance consiste à vérifier que :

-

les sorties $y_i$ associées à une consigne $y^c i$ restent dans la zone comprise entre $y_i^c - t^c$ et $y_i^c + t^c$, où $t^c$ est une tolérance définie par l'utilisateur,
- les sorties uniquement associées à des bornes minimale $y^{min}$ et/ou maximale $y^{max}$ ne dépassent pas les valeurs $y^{min} - t^{min}$ et/ou $y^{max} + t^{max}$, où $t^{min}$ et $t^{max}$ sont des seuils définis par l'utilisateur.

Si un seuil est franchi, la commande du mélange est arrêtée.

On remarquera, que les problèmes d'optimisation sont codés en utilisant l'écart e par rapport à la recette initiale $u^0$, et non directement dans la variable u.

En revanche l'estimateur de propriété est lui codé en utilisant un codage en u et non en écart e, ce qui permet de s'affranchir du recours aux mesures initiales de début de mélange, souvent sujette à des imprécisions.

De plus, le codage dans la variable u selon l'invention est parfaitement compatible avec la rétroaction selon l'invention décrite plus haut.

On notera qu'une mise à l'échelle des équations intervenant dans les problèmes d'optimisation posés permet de s'affranchir de problèmes de conditionnement numérique, compte tenu d'ordres de grandeur éventuellement différents des propriétés considérées.

Cette mise à l'échelle consiste à utiliser un facteur d'échelle multiplicatif appliqué sur les membres de droite et de gauche des différentes contraintes.

Ce facteur est ajusté en fonction de la propriété considérée :

Cette mise à l'échelle s'opère en effet en utilisant comme valeur de normalisation une moyenne entre les valeurs extrêmes (minimales et maximales) des qualités des constituants, (lorsque la propriété n'est pas associée à une valeur de consigne).

On utilisera en outre comme valeur de normalisation une moyenne entre la moyenne des valeurs extrêmes (minimales et maximales) des qualités des constituants, d'une part et une valeur de consigne éventuelle (lorsque la propriété est associée à une valeur de consigne).

En outre, une normalisation est également appliquée dans les critères d'optimisation P1, P2, P3.

La norme utilisée correspond à une forme quadratique définie par une matrice diagonale, dont les termes diagonaux sont les carrés des inverses des facteurs d'échelles calculés.

**Exemple 4 : optimisation en mode intégré**

**a.** Contraintes sur les propriétés du mélange

Lorsque le mode de commande est le mode instantané, les contraintes définies sur les propriétés du mélange par l'utilisateur sont celles utilisées pour l'optimisation, notamment les objectifs sont directement des consignes fournies par l'utilisateur.

En mode de commande intégré, l'utilisateur peut considérer que ce qui compte est la gestion des contraintes non pas sur les caractéristiques du mélange instantané, mais sur les caractéristiques du volume total coulé dans le bac depuis le début du mélange en mode intégré mélange, et sur les caractéristiques du volume total du bac en mode intégré sur bac. Ceci laisse de la latitude sur la définition des contraintes instantanées utilisées pour l'optimisation.

Il est évidemment possible de prendre les valeurs définies par l'utilisateur pour les contraintes associées au volume total coulé, mais celles-ci peuvent être relaxées, comme le détaillent les lignes qui suivent.

Si la valeur intégrée courante de la propriété du mélange est notée $z^k$, et celle à l'itération k+1, $z^{k+1}$, pour un volume courant $V^k$, un débit courant $F^k$ et une période de passage T (ou plusieurs périodes assimilées à un horizon glissant), la valeur courante $y^k$ de la propriété en sortie de mélangeuse permet de relier $z^k$ à $z^{k+1}$ selon :

$$V^k z^k + F^k T y^k = (V^k + F^k T) z^{k+1}$$

Si la contrainte fournie par l'utilisateur est $z^{max}$ ((le traitement décrit est similaire pour les contraintes minimales), il faut qu'à l'itération courante :

$$y^k \ \leq \ \frac{(V^k \ + \ F^k T) z^{max} \ - \ V^k z^k}{F^k T}$$

Le second membre de cette inégalité fournit une borne maximale pour $y^k$ qui peut être très différente de $z^{max}$, mais peut toutefois servir pour éviter de sur-contraindre la commande instantanée en choisissant $y^{max} = z^{max}$. Par contre, il n'est pas souhaitable d'appliquer cette borne lorsqu'elle est trop différente de $z^{max}$ : une relaxation de $y^{max}$ plus grande que $z^{max} + t$ n'est pas autorisée, $z^{max}$ étant la contrainte saisie par l'utilisateur et t une tolérance définie aussi par l'utilisateur.

**b.** Gestion des références

En mode instantané, les propriétés régulées sont les propriétés en sortie de mélangeuse. Dans ce cas les références utilisées durant l'optimisation sont égales aux consignes définies par l'utilisateur.

En mode intégré fond de bac, les propriétés régulées sont les propriétés du bac de destination dans lequel coule le mélange. Les consignes définies par l'utilisateur se rapportent aux propriétés du bac. Pour l'optimisation, les références sont calculées à partir de ces consignes.

Il est également possible de réguler certaines propriétés en mode instantané et d'autres en mode intégré.

- Cas où le bac de destination du mélange est vide en début de mélange (ou mode intégré "mélange", par distinction du "mode intégré sur bac").

Notations :

- $y_j(t)$, valeur de la propriété j en sortie de mélangeuse au temps t ;
- $z_j(t)$, valeur de la propriété j intégrée du volume coulé, correspondant ici à la propriété j intégrée du mélange au temps t ;
- $V(t)$, volume coulé depuis le début du mélange, correspondant ici au volume du mélange au temps t ;
- $F(t)$, débit volumique total de la mélangeuse au temps t.

Par simple bilan de matière,

$$\frac{dV(t)}{dt} = F(t) \text{ et } \frac{d(V(t)z_j(t))}{dt} = F(t)y_j(t)$$

Soient les temps to et $t_1$, $t_1 \geq t_0$, si $y_j$ et F sont constants entre $t_0$ et $t_1$, alors :

$$V(t_1) = V(t_0) + F(t_0)(t_1 - t_0),$$

et

$$F(t_0)(t_1 - t_0)\, y_j(t_0) + V(t_0)\, z_j(t_0) = (V(t_0) + F(t_0)(t_1 - t_0))\, z_j(t_1)$$

Définir une référence revient à calculer la valeur constante $y_j^{réf}$ que doit prendre la propriété en sortie de mélangeuse, pour qu'au bout du temps H (horizon glissant choisi par l'utilisateur) à partir du temps courant t, la propriété intégrée $z_j$ passe de sa valeur courante $z_j(t)$ à sa valeur de consigne $z_j^c$.

Ainsi, il faut que

$$F(t)Hy_j^{réf} + V(t)z_j(t) = (V(t) + F(t)H)z_j^c$$

Soit

$$y_j^{réf} = z_j^c + \frac{V(t)}{F(t)H}(z_j^c - z_j(t))$$

A chaque itération, la référence est remise à jour à partir de cette formule (horizon glissant).

- Cas où le bac de destination du mélange n'est pas vide en début de mélange.

Le calcul des trajectoires doit être modifié.

Soit $V_0$, le volume initial, et $z_{j0}$, la valeur initiale de la propriété j dans le bac, alors :

$$F(t)Hy_j^{\text{réf}} \; + \; V(t)z_j(t) \; + \; V_0 z_{jo} \; = \; (V_0 \; + \; V(t) \; + \; F(t)H)z_j^{\text{c}}$$

où V(t) est le volume coulé depuis le début du mélange, correspondant ici au volume du mélange au temps t.

Afin d'éviter un saut de la référence, il préférable de prendre en compte progressivement, et non en une seule fois, le volume du fond de bac.

Pour cela, on définit une consigne virtuelle $z_j^{\text{cv}}$, telle que :

$$z_j^{\text{cv}} \; = \; z_j^{\text{c}} \; + \; a \; \frac{V_0}{V(t) \; + \; F(t)H} \; (z_j^{\text{c}} \; - \; z_{jO})$$

Lorsque a vaut 0, il n'y a pas de fond de bac.
Lorsque a vaut 1, l'ensemble du fond de bac est pris en compte. Il suffit donc de faire passer a de 0 à 1 suivant une certaine trajectoire, pré-définie, pour prendre en compte progressivement le fond de bac.

**Exemple 5 : gestion des additifs**.

Les additifs (ou dopes), injectés en faible quantité, agissent essentiellement, mais fortement, sur une des propriétés du mélange. Quand il n'y a pas de contrainte sur le débit d'additif, la propriété dopée peut être complètement écartée du problème de commande multivariable des séquences d'optimisation. Un régulateur monovariable agissant sur le débit de l'additif est alors utilisé pour réguler cette propriété. Il s'agit par exemple du contrôleur d'injection d'additif 18 du dispositif décrit plus haut. Le fonctionnement d'un tel régulateur est décrit ci-après.
Les remarques préliminaires suivantes sont à noter :

- l'effet sur la propriété affectée de l'injection d'un dope est considéré comme instantané. Cependant, pour toute propriété il existe un retard de mesure, qui peut dépendre de la valeur mesurée. On supposera, ce qui est le cas en pratique, qu'il est possible de lier le retard de mesure à la valeur mesurée,
- l'effet d'un dope sur une propriété est assez mal quantifié. Il est variable en fonction de la valeur courante de la propriété dopée. On supposera qu'il est possible de lier, même de manière peu précise et pour chaque valeur prise par la propriété dopée, la variation du débit de dope à la variation de la valeur de la propriété dopée.

Le modèle utilisé s'écrit :

$$\frac{dy}{dt} \; = \; K(y) \frac{dv}{dt},$$

où

- y est la valeur mesurée de la propriété dopée
- v est le débit de dope,
- K est un gain qui dépend de la valeur courante de la propriété dopée. On supposera disposer d'une fonction de y constante par morceaux pour décrire ce gain.

D'un point de vue discret, à l'itération k :

$$\Delta y^k \; = \; K(y^k)\Delta v^k.$$

Pour que la sortie, dont la valeur courante est $y^k$, tende vers sa valeur de référence $y^{\text{réf},r}$, il suffit que $\Delta v^k = (y^{\text{réf},r} - y^k)/K(y^k)$. Cependant la valeur de la sortie disponible en k n'est pas la valeur courante, en raison du retard de mesure. Il faut alors se baser pour le calcul de la commande sur une estimation $\hat{y}^k$ de la sortie, et calculer la commande par :

$$\Delta v^k \; = \; (y^{\text{réf},r} \; - \; \hat{y}^k) \; / \; K(\hat{y}^k)$$

L'estimation $\hat{y}^k$ est la somme de deux termes :

- une estimation en boucle ouverte K. $\hat{x}^k$ (qui utilise $K(\hat{y}^k)$),
- un biais filtré $\bar{b}^k$, résultat du filtrage au premier ordre d'un biais instantané, écart synchronisé entre mesure et prédiction boucle ouverte.

A toute mesure $y^k$ correspond un retard de mesure $\delta T$, où T est la période d'échantillonnage de la commande. On suppose qu'une fonction de y constante par morceaux décrit ce retard. La mesure $y^k$ correspond ainsi à une prédiction en boucle ouverte $\hat{x}^{k-\delta}$, qui permet de calculer le biais instantané $b^k = y^k - \hat{x}^{k-\delta}$. Le coefficient de filtrage est fixé de manière automatique en fonction du retard de mesure.

Pour la commande, les contraintes suivantes sont gérées :

- variation maximale de l'injection par passage, à la hausse ou à la baisse,
- injections minimale et maximale.

En régulation de valeur instantanée, il n'est pas possible de saisir une consigne à l'extérieur des extrema fixés par l'utilisateur.

En régulation de la valeur intégrée, la trajectoire de référence, qui inclue éventuellement la prise en compte des fonds de bacs, est calculée de manière analogue à celles mises en oeuvre pour la commande multivariable. En particulier, la référence instantanée calculée à partir de la consigne ne peut pas sortir des extrema fixés par l'utilisateur. En pratique, ceci permet de respecter les contraintes fixées sur la propriété régulée.

Il est possible, lorsque le débit de dope est saturé (lorsque la commande reste égale au minimum ou au maximum pendant un temps prédéterminé), de basculer vers une régulation de la propriété dopée par les bases.

Dans ce cas, le débit de dope reste égal à la valeur prise avant le basculement.

Pour une sortie dopée, l'effet cumulé dû au dope entre le temps 0 de début de mélange et le temps t, s'écrit :

$$d = \int_0^t K(\hat{y}(\tau)) \frac{dv}{d\tau}(\tau)d\tau$$

Soit, d'un point de vue discret,

$$d^k = d^{k-1} + K(\hat{y}^k)\Delta v^k$$

Lors du basculement vers une régulation de la propriété j par les bases, le modèle de commande prend en compte cet effet et s'écrit :

$$y_j = \hat{B}_j u + d$$

Cette expression est utilisée à la fois dans les optimisations successives et dans la dynamique de $\hat{B}_j$ du système de rétroaction.

**Exemple 6 :** optimisation de la recette

Lorsqu'il reste des degrés de liberté dans la résolution des équations utilisées dans l'optimisation, il est possible d'optimiser la préparation du mélange en modifiant la recette, c'est-à-dire les proportions respectives de chaque base. Différentes options d'optimisation de la recette sont décrites dans cet exemple, pour les séquences d'optimisation décrites dans l'exemple 3.

Dans le problème d'optimisation initial P0 décrit dans l'exemple 3, il est question de minimiser le terme $\|u - \bar{u}\|^2$.

La valeur de la recette de référence $\bar{u}$ dans cette expression dépend du mode d'optimisation choisi par l'utilisateur.

(a) <u>En absence d'optimisation</u>

$\overline{u}$ est simplement égale à la valeur initiale, c'est-à-dire la recette fournie par l'utilisateur pour le début du mélange.

$\overline{u}$ peut également être définie comme une recette "suiveuse", sa valeur est alors égale à la valeur moyenne de u depuis le début du mélange.

(b) <u>Optimisation de l'incorporation de certaines bases</u>

Il est possible de maximiser ou de minimiser l'incorporation de certaines bases, en excès ou au contraire peu disponibles sur le site de production. Dans ce cas, il faut associer à la recette u un vecteur $\pi$ de priorités.

Celui-ci comporte des entrées positives pour les bases à maximiser et des entrées négatives pour les bases à minimiser. Les bases pour lesquelles il n'est pas souhaitable de maximiser ou minimiser l'incorporation ont une priorité nulle.

Soit donc $\pi = (\pi_1,..., \pi_n)^t$ et $|\pi_j| = \max_{i=1,n}|\pi_i|$, supposé non nul.

En notant $u^f$ la valeur filtrée de u, nous utilisons $\overline{u} = u^f + \pi'^f$, $\pi'^f$ étant la valeur filtrée de :

$$\pi' \;=\; (\pi_1 / |\pi_j|, ..., \pi_n / |\pi_j|)^t$$

Ce filtre de $\pi'$ permet de prendre en compte de manière progressive les variations de recette pendant le mélange.

(c) <u>Optimisation du coût du mélange</u>

On associe à u un vecteur de prix, $\xi = (\xi_1,...., \xi_n)^t$. A chaque passage est défini un coût de la recette, à partir de la recette filtrée $u^f$ : $c = \xi^t u^f$.

Ensuite, (c : non nul) un vecteur $\xi'$ est définit par :

$$\xi' \;=\; ((1 - \xi_1/c), ..., (1 - \xi_n/c))^t .$$

Ainsi $\xi'_i$, défini par $\xi_i' = (1 - \xi_i/c)$, est positif si le coût de la base est inférieur au coût de la recette filtrée courante : dans ce cas, il faut chercher à incorporer cette base pour limiter le coût de la recette. Inversement, $\xi'_i$ est négatif si le coût de la base est supérieur au coût de la recette.

Pour l'optimisation, $\overline{u} = u^f + \xi'$.

(d) <u>Saturation des spécifications sur les sorties</u>

Dans ce cas, $\delta$ est égal à la recette initiale, mais en fait n'a que peu d'importance. En effet, si le problème initial P0 a une solution, alors est lancé le problème itératif décrit ci-dessous.

Considérons M={1, 2, ..., m}, l'ensemble des indices attribués aux sorties et P, le sous-ensemble des indices indiquant les sorties impliquées dans le processus d'optimisation.

A chaque élément j de P sont associés :

- un élément de H, autrement dit :

  soit une valeur maximale à ne pas dépasser,
  soit une valeur minimale à ne pas dépasser.

- un seuil $d_j$ par rapport à la contrainte.

Soit une partition de P en p sous-ensembles $P_i$ tous non vides, regroupant chacun des indices correspondants à des sorties sujettes à des besoins d'optimisation d'égales priorités. Par construction, $p \le \text{card}(P)$, $\bigcup_{i=1}^{p} P_i \;=\; P$ et $P_i \cap P_j = \varnothing, \forall j \ne i$.

Les optimisations relatives à Pj sont moins prioritaires que celles relatives à $P_i$ dès que i<j. Notons aussi

$$P_{1j} \; = \; \bigcup_{i=1}^{j} H_j \, .$$

Itération 1

A la première itération, on cherche à rapprocher les sorties correspondant à $P_1$ de leurs contraintes :

$$\min_{u}\|\hat{B}_{P_1}u - y_{P_1}^{\max} + d_{P_1}\|^2$$

$$\left\{ \begin{array}{l} u^{\min} \leq u \leq u^{\max} \\ \sum_{i=1}^{n} u_i = 1 \\ \hat{B}_R u = y_R^{\mathrm{ref}} \\ \hat{B}_H u \leq y_H^{\max} \\ \hat{B}_S u \leq y_S^{\max} \end{array} \right.$$

La solution u* permet de calculer $y_{P_1}^{\min} \; = \; \hat{B}_{P_1} u^{*}$ .

Itération k+ 1

A la (k+1)ème itération, le problème suivant est résolu :

$$\min_{u}\|\hat{B}_{P_{k+1}}u - y_{P_{k+1}}^{\max} + d_{P_{k+1}}\|^2$$

$$\left\{ \begin{array}{l} u^{\min} \leq u \leq u^{\max} \\ \sum_{i=1}^{n} u_i = 1 \\ \hat{B}_R u = y_R^{\mathrm{ref}} \\ \hat{B}_H u \leq y_H^{\max} \\ \hat{B}_S u \leq y_S^{\max} \\ \hat{B}_{P_{1k}} u \geq y_{P_{1k}}^{\min} \end{array} \right.$$

Le problème est entièrement résolu lorsque les p sous-ensembles de contraintes de priorités décroissantes ont été abordés lors de p itérations. Alors, les sorties sont les plus proches possibles de leurs contraintes.

**Exemple 7 :** Pilotage de mélangeuse de charge d'hydrodésulfurisation en continu

L'exemple 7 montre la régulation de la valeur instantanée de teneur en soufre pour un mélange élaboré à partir de plusieurs bases.
On pourra ici noter que cette régulation du soufre s'accompagne en parallèle de la régulation et de la surveillance en zone d'autres propriétés de mélange, dans un contexte de commande multivariable.
Cet exemple illustre la capacité du dispositif à assurer un contrôle en instantané et en continu, pour agir sur la composition de charge d'une unité d'hydro-désulfuration des gazoles, afin de piloter les propriétés du mélange en sortie d'unité.
Il illustre également la capacité du dispositif à gérer des schémas amont mélangeuses complexes, avec plusieurs pré-mélanges des constituants.
Les éléments suivants sont pris en compte :

- retards analyseurs : 5 minutes pour la densité, la teneur en soufre (estimateur recalé sur l'analyseur correspondant), le pourcent distillé (calculé), 10 minutes pour le point d'éclair et 15 minutes pour le point de trouble.

- Volumes morts de transit d'unité : 96 m3,
- Volumes morts de pré-mélange : 16,8 m$^3$ et 10,9 m$^3$ au premier étage, 4,5 m$^3$ au second étage, 10,8 m$^3$ et 1,4 m$^3$ au troisième étage de pré-mélange.

Les constituants de charge sont les suivants :

Base 1 : Kerosène
Base 2 : Kérosène basse teneur en soufre
Base 3 : gazole léger basse et haute teneur en soufre, provenant d'une distillation atmosphérique
Base 4 : gazole moyen provenant de distillations atmosphérique et sous vide
Base 5 : base oléfinique LLCO de FCC, provenant d'un bac intermédiaire
Base 6 : essence lourde de FCC

D'autres bases sont susceptibles d'intervenir en charge de l'unité : jets directs LLCO, HLCO, HCCS de FCC, jet direct de gazole de viscoréduction GOSV (flux direct d'unité), recycle de l'unité.

Les caractéristiques mesurées en laboratoire des bases 1 à 5 sont données dans le tableau 2 suivant :

**Tableau 2 :** caractéristiques des bases de l'exemple 7

|  | Base 1 | Base 2 | Base 3 | Base 4 | Base 5 |
|---|---|---|---|---|---|
| **Densité (à 15°C)** | 0,7995 | 0,8279 | 0,8558 | 0,883 | 0,835 |
| **Point d'éclair (°C)** | 42,5 | 66 | 77 | 52,5 | 50 |
| **Point de Trouble (°C)** | -48,09 | -19,9 | 8,401 | -29,96 | -30,97 |
| **Indice de Cétane** | 45,97 | 54,8 | 57,77 | 25,3 | 23,5 |
| **Pourcent distillé (à 360°C) (%)** | 100 | 100 | 89,8 | 100 | 100 |
| **Teneur en soufre (ppm)** | -19,39 | 54,9 | 99,71 | 40,08 | 30,03 |

Les seuils minima sont doux pour l'ensemble des propriétés sauf pour le point d'éclair et l'indice de cétane.

Les seuils maxima sont durs pour l'ensemble des propriétés, sauf pour l'indice de cétane, le point d'éclair et le pourcent distillé.

Les valeurs de ces seuils maximum et minimum utilisés pour les différentes propriétés sont les suivantes :

**Tableau 3 :** valeurs des seuils maximum et minimum des propriétés du mélange de l'exemple 7 :

| Propriété : | Seuil maximum | Seuil minimum |
|---|---|---|
| Densité | 0.844 | 0.82 |
| Point d'éclair (°C) | 65 | 57 |
| Point de Trouble (°C) | -6 | -15 |
| Indice de cétane | 53 | 46.5 |
| Pourcent distillé (%) | 100 | 95 |
| Teneur en Soufre (ppm) | 48 | 30 |

Les horizons de trajectoire de référence utilisés sont définis comme étant égaux à deux fois le retard analyseur, augmenté de valeurs paramétrables appelées des horizons réduits. Les horizons réduits utilisés sont les suivants : 10 minutes pour la densité, l'indice de cétane, la teneur en soufre, et le pourcent distillé, 20 minutes pour le point d'éclair, et 30 minutes pour le point de trouble.

Les coefficients de filtrage utilisés pour le réglage de l'estimateur sont les suivantes : 15 minutes pour la densité, l'indice de cétane, le pourcent distillé et la teneur en soufre, 30 minutes pour le point d'éclair, et 45 minutes pour le point de trouble. Ces coefficients de filtrage, (inverses des $\beta_i$ apparaissant dans les formules (1) et (2) définies plus haut), correspondent aux paramètres composantes du vecteur $\beta$ utilisés dans les équations différentielles de l'estimateur, permettant de piloter la dynamique de convergence (plus ou moins rapide), propriété par propriété.

Des objectifs d'optimisation de recette sont également utilisés pour maximiser l'utilisation des bases 1 (kérosène) et 4 (gazole moyen de distillation).

Au début du mélange, les valeurs minimale et maximale de la teneur en soufre sont respectivement de 30 et 48 ppm. Les seuils sont ensuite modifiés et passent respectivement à 2 et 8 ppm. Le soufre est régulé "en zone" à l'intérieur de ses bornes minimale et maximale. C'est ce passage des seuils de [30, 48] à [2, 8] qui permet la bascule de la marche de 50 ppm (on vise ici une teneur en soufre proche de 48 ppm pour avoir une marge de fabrication de 2 ppm) vers la marche de 10 ppm (on vise ici une teneur en soufre proche de 8 ppm pour avoir une marge de fabrication de 2 ppm).

La topologie du mélange est précisée dans le tableau 4.

**Tableau 4 :** topologie du mélange de l'exemple 7 :

| Base 1 (75) | Mélange A = bases 1 + 2 | | Mélange final = A + C + Base 6 |
|---|---|---|---|
| Base 2 (121) | | | |
| Base 3 (79) | Mélange B = bases 3 + 4 | Mélange C = B + base 5 | |
| Base 4 (74) | | | |
| Base 5 (63) | | | |
| Base 6 (8) | | | |

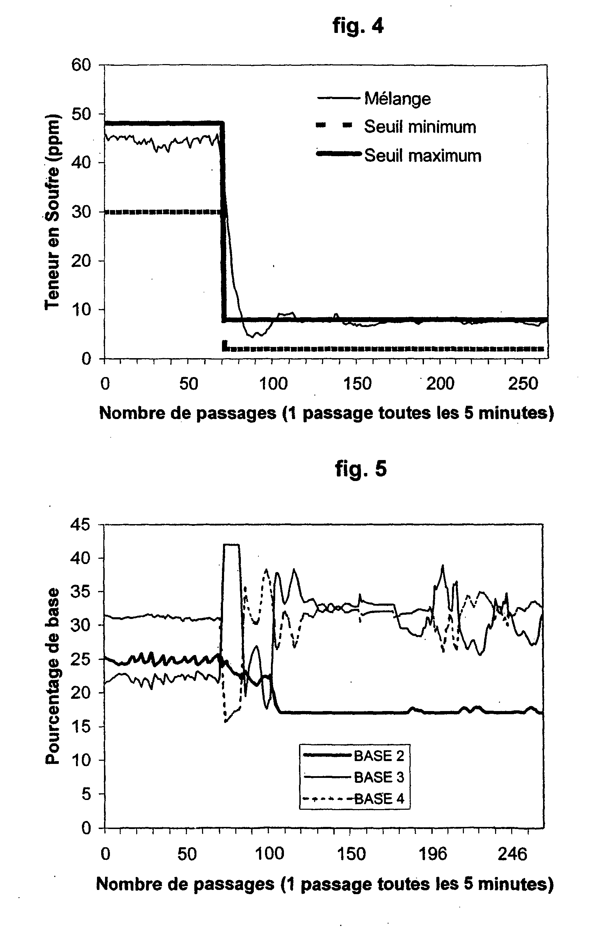

La figure 4 montre l'évolution de la teneur en soufre du mélange lors d'une transition rapide de marche de 50 ppm à 10 ppm en fonction d'un nombre de passages, chaque passage correspondant à 5 minutes. Chaque passage correspond à un nouveau lancement du dispositif selon l'invention (et donc à une nouvelle itération du procédé de contrôle selon l'invention), et notamment à l'émission d'une nouvelle recette calculée par le dispositif et appliquée sur les équipements.

Cette transition de consigne est en fait assurée par la modification des seuils, minimum et maximum, sachant que la régulation du soufre s'opère ici en zone, c'est-à-dire entre son minimum et son maximum : cette qualité de teneur en soufre n'a donc pas de cible fixe de type consigne, mais ce sont les contraintes de limites hautes et basses sur cette qualité de teneur en soufre qui sont ici prises en compte par l'optimiseur, et qui définissent un domaine d'évolution cible pour cette qualité.

On constatera que la teneur en soufre du mélange reste à tout moment proche de la valeur souhaitée, et suit rapidement la commande de diminution de la consigne, sans subir de grands écarts brusques de valeur.

L'estimateur selon l'invention permet d'assurer non seulement la régulation du soufre en sortie d'unité, mais également la régulation en zone de la densité, du point d'éclair, du trouble, du cétane, pourcent distillé (le point d'éclair est en contrainte minimale, le soufre et le trouble sont en contraintes maximales).

La figure 5 montre quant à elle l'évolution de la consommation des bases 2 à 4 utilisées au cours de la modification de la commande de teneur en soufre, les bases 1, 5 et 6 n'étant pas injectées pour la réalisation du mélange. Les profils de proportion calculés sur les constituants qui sont représentés sur la figure permettent d'obtenir les résultats souhaités sur les propriétés en sortie d'unité.

**Exemple 8 : Mélange essence en mode intégré avec fond de bac (sans pré-mélange)**

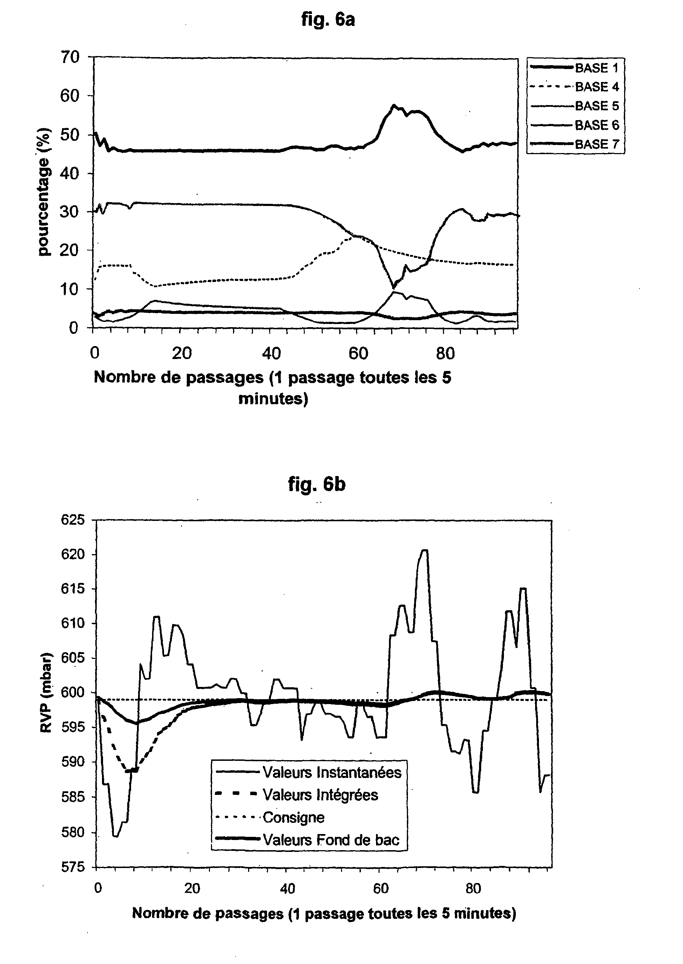

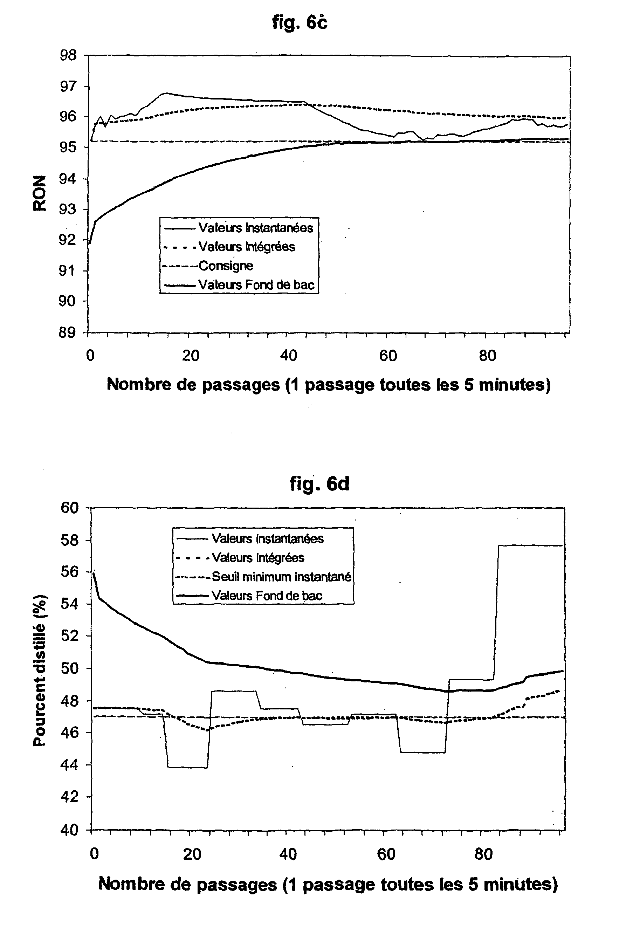

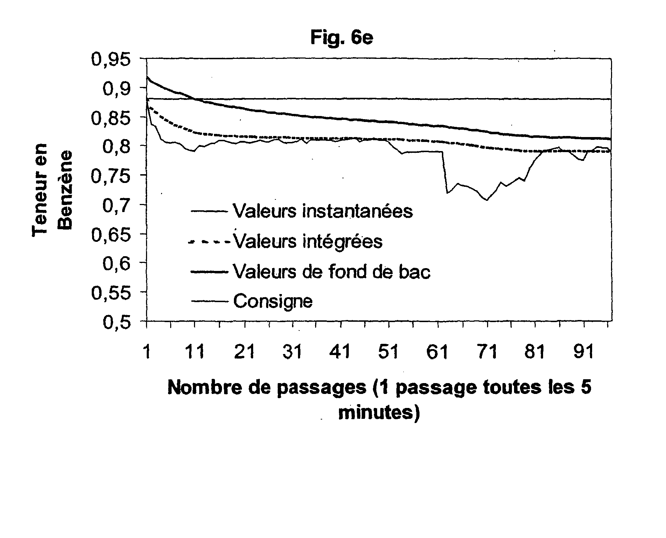

Les figures 6a-e montrent l'évolution dans le temps des ratio des bases (figure 6a), des régulations sur l'Indice d'octane Recherche (RON : Research Octane Number) et sur la tension de vapeur (RVP : Reid Vapor Pressure) (figures 6b et 6c respectivement), et de la surveillance en zone du pourcent distillé à 100°C (figure 6d) et de la teneur en benzène (figure 6e).

Sur les figures 6a à 6c, sont représentés les valeurs intégrées dans le bac, les valeurs instantanées, ainsi que les consignes.

Les valeurs relatives à la teneur en benzène, au pourcent distillé à 100°C, à l'indice d'octane moteur (MON), à l'indice d'octane Recherche (RON) et à la tension de vapeur (RVP) sont reportées dans le tableau suivant pour les différentes bases de constituant :

**Tableau 5 :** valeurs des propriétés des bases de l'exemple 8

| | Base 1 | Base 4 | Base 5 | Base 6 | Base 7 |
|---|---|---|---|---|---|
| **Teneur en Benzène** (%) | 1,050 | 0 | 1,130 | 0 | 0 |

(suite)

|  | Base 1 | Base 4 | Base 5 | Base 6 | Base 7 |
|---|---|---|---|---|---|
| **Pourcent distillé à 100°C** (%) | 64,9 | 29,6 | 6,9 | 100,0 | 125,0 |
| **MON** | 80,0 | 93,0 | 91,5 | 101,0 | 86,0 |
| **RON** | 89,90 | 95,10 | 102,40 | 113,00 | 96,00 |
| **RVP** (mbar) | 565,89 | 454,00 | 186,37 | 551,90 | 4000,59 |

Cet exemple met en évidence le fonctionnement de la régulation avec compensation de fond de bac : Il y a convergence de deux qualités tension vapeur et indice d'octane, et maintien de deux autres qualités : pourcent distillé à 100°C et teneur en benzène, à l'intérieur de leur domaine admissible.

Les valeurs minimales et maximales des qualités régulées et surveillées sont fournies sous la forme [mini, maxi] et sont les suivantes :

Teneur en Benzène (%) : [0, 0.95],
Pourcent distillé à 100°C (%) : [47,70]
RON : [95.199,96.50] avec comme consigne la valeur minimale 95.199
RVP (mbar): [459.99, 599.86] avec une consigne égale à 598.86.

On peut constater vers le passage 70 dans la deuxième moitié du mélange une activité accrue sur les bases, car la qualité du pourcent distillé à 100°C ayant atteint sa borne basse (mini), la recette est automatiquement modifiée pour faire remonter sa valeur et la maintenir au dessus de son seuil minimum, tout en maintenant les autres propriétés régulées et surveillées à leur cible.

Cet exemple illustre la capacité du dispositif à assurer un contrôle du mélange en mode intégré avec compensation de fond de bac, permettant de piloter à la fois des qualités régulées sur consigne fixe et des qualités surveillées dans leur zone minima/ maxima.

**Exemple 9: Mélange gazole, régulation des dopes (sans pré-mélange)**

Figure 7

Cet exemple met en évidence le fonctionnement de la régulation par injection d'additifs ou dopes.

Deux propriétés : indice de cétane et filtrabilité sont ici régulées par dopes. Une troisième propriété (teneur en soufre) est régulée parallèlement par le mélange de deux bases, une troisième base étant bloquée sur un ratio fixe.

Le tableau suivant fournit les valeurs relatives à la teneur en soufre, la filtrabilité et l'indice de cétane des trois bases.

**Tableau 6 :** propriétés des bases de l'exemple 9

|  | Base 1 | Base 3 | Base bloquée |
|---|---|---|---|
| **Teneur en soufre (ppm)** | 30 | 246 | 3 |
| **Filtrabilité (°C)** | 0 | -30 | -12 |
| **Indice de cétane** | 52 | 52 | $-1e^{+6}$ |

La base dite "bloquée" est injectée à un ratio constant de 1,5%.

La teneur en soufre est régulée sur une consigne à 45 ppm, la filtrabilité sur une consigne à -16°C et l'indice de cétane à 52.

Tel que représenté sur les figures 7a-f :

La figure 7a montre qu'on baisse l'injection de pro-cétane, jusqu'à couper cette injection en milieu de mélange, pour faire baisser l'intégré cétane (figure 7d), qui rejoint doucement sa consigne et s'y maintient.

La figure 7b montre les injections de dope de filtrabilité, avec 3 pics correspondant aux petites oscillations sur la filtrabilité intégrée, constatées sur la figure 7e, ce qui dénote d'une régulation réglée de façon réactive.

La figure 7c donne les profils des bases utilisées pour la régulation du soufre: Ces profils sont assez stables, hormis un pic en milieu de mélange consécutif au pic constaté sur la mesure instantanée du soufre sur la figure 7f, lié à une perturbation ponctuelle.

Le soufre intégré est confondu avec sa consigne sur la figure 7f et n'a pas été affecté par la perturbation ponctuelle de milieu de mélange.

Cet exemple illustre la capacité du dispositif à assurer un contrôle en intégré mélange, simultané par les constituants de mélange et par injection de plusieurs additifs pour piloter différentes propriétés de mélange.

**Revendications**

**1.** Procédé de contrôle de l'élaboration d'un mélange M de n constituants, comprenant :

à un temps t=0 une étape (i) d'estimation d'une recette de référence $\bar{u}$ à partir des propriétés des n constituants rassemblés dans une matrice $\hat{B}$ de valeur initiale Bo utilisant une loi d'adaptation correspondant à l'équation (1) suivante

$$\frac{d\hat{B}_j^t}{dt} = -\beta_j Hu(y_j - y_j^{mes}), \quad (1),$$

avec j, indice des propriétés du mélange allant de 1 à m dans laquelle

- $\beta_j$, réel strictement positif, est une constante de réglage du temps de convergence permettant de différencier la rapidité de convergence de l'estimation, propriété par propriété,
- la matrice H est une matrice symétrique définie positive ayant pour utilité d'assurer une normalisation de la prise en compte de l'écart mesure-prédiction permettant le calcul d'écart de prédiction de qualité des constituants, afin d'assurer les propriétés de convergence du procédé,

- $\hat{B}_j^t$ est la transposée de $\hat{B}_j$, avec j indice des propriétés du mélange,

et telle que les propriétés $\hat{B}\bar{u}$ du mélange soient comprises entre des seuils minima et maxima prédéterminés, et/ou pour au moins une partie d'entre elles égales à des valeurs cibles prédéterminées, et l'application de celle-ci à un mélange réel des constituants,
à un temps t' = t+$\Delta$t, $\Delta$t étant la période de passage entre deux itérations de calcul consécutives, une étape (ii) de correction de la matrice B à partir des propriétés mesurées $y_{mes}$ du mélange M fabriqué pour établir le calcul d'une nouvelle recette u correspondant à la matrice corrigée B des propriétés estimées des constituants du mélange, puis d'application de cette nouvelle recette u aux constituants pour la fabrication du mélange M, cette étape (ii) comprend les opérations suivantes

(1) on mesure les propriétés $y_{mes}$ du mélange M obtenu en appliquant la recette calculée à l'instant précédent,
(2) on établit une matrice corrigée $\hat{B}$ à partir des propriétés $y_{mes}$ de (1), cette matrice représentant l'estimée des propriétés des constituants telle que dans (i),
(3) on détermine une nouvelle recette u à partir de la matrice $\hat{B}$ établie dans l'étape (2), de sorte que les propriétés $\hat{B}u$ du mélange soient comprises entre lesdits seuils prédéterminés, et/ou pour m' d'entre elles, égales aux dites valeurs cibles prédéterminées,
(4) on applique cette nouvelle recette u aux constituants, à un temps t"= t' +$\Delta$t une étape (iii) identique à l'étape (ii), cette étape (ii) étant renouvelée à l'identique pendant toute la durée de l'élaboration de mélanges des constituants,

le procédé étant **caractérisé en ce qu'**on corrige la matrice B de l'étape (ii) par au moins une opération de correction supplémentaire introduisant au moins une contrainte correspondant à des contraintes de bornes, de relation d'ordre et /ou d'égalité sur au moins une des propriétés des constituants.

**2.** Procédé selon la revendication 1, **caractérisé en ce que** pour corriger la matrice $\hat{B}$, on modifie la valeur initiale de $\hat{B}$ soit $B_0$, en remplaçant l'équation (1) par une équation correspondant à une nouvelle loi d'adaptation et/ou par l'ajout d'un terme supplémentaire $\delta$.

**3.** Procédé selon la revendication 1 ou 2, **caractérisé en ce que** la modification de la matrice $\hat{B}$ s'obtient en remplaçant l'équation (1) initiale par une équation comprenant l'ajout d'une fonction supplémentaire à l'équation (I) selon :

$$\frac{d\hat{B}_j^t}{dt} = -\beta_j Hu(y_j - y_j^{mes}) + \lambda f(\hat{B}_j^t) \, , \, (1.1)$$

avec j, indice des propriétés du mélange allant de 1 à m dans laquelle

    • f est une fonction non nulle, choisie selon un profil permettant d'introduire au moins une contrainte correspondant à des contraintes de bornes, de relation d'ordre et/ou d'égalité.
    • λ est un coefficient de pondération qui permet d'ajuster la rapidité de retour des propriétés estimées des constituants dans un domaine admissible défini par des bornes, et
    • H est diagonale afin d'assurer les propriétés de convergence du procédé.

**4.** Procédé selon la revendication 1 ou 2, **caractérisé en ce que** la modification de la matrice $\hat{B}$ s'obtient en remplaçant l'équation (1) initiale par une équation correspondant à la loi d'adaptation selon l'équation suivante:

$$\boxed{\frac{d\hat{B}_j^t}{dt} = -\beta_j H \frac{1}{\delta t} \int_{t-\delta t}^{t} u\left(\hat{B}_j u - y_j^{mes}\right) ds} \quad (1.2)$$

avec j, indice des propriétés du mélange allant de 1 à m
où $\delta t$ est la fenêtre temporelle d'intégration et s la variable temporelle sous l'intégrale.

**5.** Procédé selon la revendication 1 ou 2, **caractérisé en ce que** la modification de la matrice $\hat{B}$ s'obtient en remplaçant l'équation (1) initiale par une équation correspondant à la loi d'adaptation selon l'équation suivante:

$$\boxed{\frac{d\hat{B}_j^t}{dt} = -\frac{\beta_j}{\delta t} H \int_{t-\Delta-\frac{\delta t}{2}}^{t-\Delta+\frac{\delta t}{2}} u(s)\left(\hat{B}_j u(s) - y_j^{mes}\right) ds} \quad (1.3)$$

avec j, indice des propriétés du mélange allant de 1 à m dans laquelle $\delta t$ est la fenêtre temporelle d'intégration et $\Delta$ le retard de mesure et s la variable temporelle sous l'intégrale.

**6.** Procédé selon l'une quelconque des revendications précédentes, **caractérisé en ce que** la modification de la matrice $\hat{B}$ s'obtient par ajout d'un terme supplémentaire δ à au moins une des équations (1), (1.1), (1.2) ou (1.3) et correspond au calcul suivant :

$$\hat{B}complète_j = (\hat{B}_j + \delta^t)(1.4)$$

dans lequel le vecteur $\delta$ satisfait l'équation $\delta^t * u = 0$, afin que les prédictions soient inchangées (iso-prédiction) en vertu de l'équation :

$$y = \hat{B}_j * u = (\hat{B}_j + \delta^t) * u \quad (1.5).$$

**7.** Procédé selon la revendication 6, **caractérisé en ce que** le vecteur $\delta$ est défini soit par un calcul algébrique direct soit par optimisation séquentielle sous contrainte.

**8.** Procédé selon l'une quelconque des revendications précédentes, dans lequel les propriétés y $_{mes}$ du mélange mesurées au cours de l'étape (ii) sont mesurées au moyen d'un processus continu de mesure sur le mélange élaboré.

9. Procédé de contrôle selon l'une quelconque des revendications 1 à 8, **caractérisé en ce que** lorsqu'il y a au moins un pré-mélange d'au moins deux des constituants avant la préparation du mélange, on modifie la variable u déterminée au cours de l'opération (3) de l'étape (ii) pour prendre en compte les retards dus aux volumes morts présents dans l'installation au niveau des zones de pré-mélange.

10. Procédé de contrôle selon la revendication 9, **caractérisé en ce qu'**en corrigeant la matrice $\hat{B}$ au cours de l'étape (ii), la variable u utilisée pour la mise en oeuvre de la loi d'adaptation selon l'une des équations (1.1), (1.2), (1.3) et (1.4) est remplacée par une variable U avec $U(t) = (U_1(t),...U_n(t))^t$, à l'instant t, vecteur recette prenant en compte les volumes morts.

11. Procédé de contrôle selon l'une quelconque des revendications 1 à 10, **caractérisé en ce que** la recette u déterminée à la fin de l'étape (ii) est obtenue au moyen d'un procédé d'optimisation comprenant des étapes séquentielles au cours desquelles la solution d'un problème minimal respectant un minimum de contraintes prioritaires est recherchée si un problème complet respectant la totalité des contraintes est infaisable, le nombre de contraintes prioritaires à respecter augmentant à chaque étape, jusqu'à obtenir une recette u respectant le maximum de contraintes prioritaires

12. Procédé de contrôle selon l'une quelconque des revendications 1 à 11, destiné à une installation de préparation d'un mélange de n constituants et d'additifs, **caractérisé en ce que**, pour une propriété j du mélange sur lequel influe l'additif, le modèle de commande prend en compte l'effet d de l'ajout d'additif au cours des opérations (2) et (3) de l'étape (ii) selon : $y_j = \hat{B}_j u + d$.

13. Dispositif d'élaboration et de contrôle d'un mélange de constituants, comprenant des voies de transport (4, 5, 6) des constituants (1, 2, 3) à mélanger vers une voie principale (7) reliée à l'emplacement (9) de réception du mélange, des moyens (10) pour commander les débits des constituants sur chaque voie de transport, des moyens (11) de mesure en continu sur la voie principale des paramètres représentatifs du mélange en cours d'élaboration, et des moyens de calcul (12) des proportions des différents constituants entrant dans le mélange, un estimateur (13) relié aux moyens de calcul, l'estimateur comprenant des moyens programmés pour produire une estimation des propriétés des constituants en utilisant les mesures des propriétés du mélange mesurées par les moyens de mesure (11), les moyens de calcul comprenant des moyens programmés pour calculer au moyen de cette estimation les proportions des différents constituants entrant dans le mélange afin d'obtenir un mélange comportant des propriétés prédéterminées, ce dispositif étant **caractérisé en ce que** l'estimateur (13) comprend des moyens programmés pour introduire au moins une contrainte correspondant à des contraintes de bornes, de relation d'ordre et/ou d'égalité, sur au moins une des propriétés des constituants pour corriger la matrice $\hat{B}$ de l'étape (ii) du procédé selon l'une quelconque des revendications 1 à 12.

14. Dispositif selon la revendication 13, **caractérisé en ce que** l'estimateur (13) comprend des moyens de synchronisation programmés pour prendre en compte les retards dus aux volumes morts au niveau de zones de pré-mélange, lesdits moyens de synchronisation étant programmés pour mettre en oeuvre l'équation (2)

$$\frac{d\hat{B}_j^t}{dt} = -\beta_j HU(t)\big(y_j(t) - y_j^{mes}(t)\big)$$ avec $U(t)=(U_1(t),...,U_n(t))^t$, de l'opération (3) de l'étape (ii) du dit procédé.

15. Dispositif selon la revendication 13 ou 14, **caractérisé en ce qu'**il comprend un optimiseur (14) relié aux moyens de calcul (12) et à un moyen de stockage (15) d'objectifs de mélange, l'optimiseur comprenant des moyens programmés pour optimiser la recette u des proportions des constituants déterminée par les moyens de calcul (12) en fonction d'objectifs de mélange stockés dans ledit moyen de stockage (15).

16. Dispositif selon la revendication 15, **caractérisé en ce qu'**il comprend au moins un bac (16) d'additif relié par une voie de transport (17) à la voie principale (7), en aval de la zone de mélange des constituants (1, 2, 3), un moyen de commande (10) du débit d'additif associé au bac (16) prévu sur la voie de transport (17), et un contrôleur d'injection d'additif (18) relié audit moyen de commande (10), à l'optimiseur (14) et au moyen de stockage d'objectifs de mélange (15), le contrôleur d'injection d'additif (18) étant apte, pour une propriété j du mélange sur lequel influe un additif, à optimiser la proportion de l'additif afin de réguler ladite propriété j correspondante du mélange en tenant compte d'une cible fournie par le moyen de stockage d'objectifs de mélange.

**Patentansprüche**

1. Verfahren zum Steuern der Entwicklung eines Gemisches M aus n Konstituenten, das Folgendes umfasst:

zu einer Zeit t = 0 einen Schritt (i) des Schätzens einer Referenzrezeptur $\overline{u}$ anhand von Eigenschaften der n Konstituenten, die in einer Matrix B mit Anfangswert Bo zusammengefasst sind, wobei ein Adaptionsgesetz entsprechend der folgenden Gleichung (1) verwendet wird:

$$\frac{d\hat{B}_j^t}{dt} = -\beta_j Hu(y_j - y_j^{mes}), \quad (1)$$

wobei j, der Index der Eigenschaften des Gemisches, von 1 bis m läuft, wobei

· $\beta_j$ streng positiv und reell ist und eine Konstante für die Regulierung der Konvergenzzeit ist, die ermöglicht, die Schnelligkeit der Konvergenz der Schätzung Eigenschaft für Eigenschaft zu unterscheiden,
· die Matrix H eine symmetrische Matrix ist, die positiv definiert ist und den Zweck hat, eine Normierung der Berücksichtigung des Mess-Vorhersage-Abstands sicherzustellen, was die Berechnung des Abstands der Vorhersage der Qualität der Konstituenten ermöglicht, um die Konvergenzeigenschaften des Verfahrens sicherzustellen,

- $\hat{B}_j^t$ die Transponierte von $\hat{B}_j$ ist, wobei j der Index der Eigenschaften des Gemisches ist,

und derart, dass die Eigenschaften $\hat{B}\overline{u}$ des Gemisches zwischen vorgegebenen minimalen und maximalen Schwellenwerten liegen und/oder für wenigstens einen Teil von ihnen gleich vorgegebenen Sollwerten sind, und des Anwendens der Schätzung auf ein wirkliches Gemisch von Konstituenten
zu einer Zeit t' - t + $\Delta$t, wobei $\Delta$t die Periode des Übergangs zwischen zwei aufeinander folgenden Recheniterationen ist, einen Schritt (ii) des Korrigierens der Matrix $\hat{B}$ anhand der gemessenen Eigenschaften $y_{mes}$ des hergestellten Gemisches M, um die Berechnung einer neuen Rezeptur u zu bewerkstelligen, das der korrigierten Matrix B der geschätzten Eigenschaften der Konstituenten des Gemisches entspricht, und dann des Anwendens dieser neuen Rezeptur u auf die Konstituenten für die Herstellung des Gemisches M, wobei dieser Schritt (ii) die folgenden Operationen umfasst:

(1) Messen der Eigenschaften $y_{mes}$ des Gemisches M, das bei Anwendung der zum vorhergehenden Zeitpunkt berechneten Rezeptur erhalten wird,
(2) Bilden einer korrigierten Matrix $\hat{B}$ anhand der Eigenschaften $y_{mes}$ aus (1), wobei diese Matrix die Schätzung der Eigenschaften der Konstituenten wie in (i) gegeben darstellt,
(3) Bestimmen einer neuen Rezeptur u anhand der im Schritt (2) gebildeten Matrix B, derart, dass die Eigenschaften $\hat{B}u$ des Gemisches zwischen den vorgegebenen Schwellenwerten liegen und/oder dass sie für m' von innen gleich den vorgegebenen Sollwerten sind,
(4) Anwenden dieser neuen Rezeptur u auf die Konstituenten zu einer Zeit t" = t' + $\Delta$t in einem Schritt (iii), der mit dem Schritt (ii) übereinstimmt, wobei der Schritt (ii) während der gesamten Dauer der Entwicklung von Gemischen aus Konstituenten identisch wiederholt wird,

wobei das Verfahren **dadurch gekennzeichnet ist, dass** die Matrix B des Schrittes (ii) durch wenigstens eine zusätzliche Korrekturoperation korrigiert wird, die wenigstens eine Beschränkung einführt, die Beschränkungen von Anschlüssen, einer Ordnungsbeziehung und/oder der Gleichheit bei wenigstens einer der Eigenschaften der Konstituenten entspricht.

2. Verfahren nach Anspruch 1, **dadurch gekennzeichnet, dass** zum Korrigieren der Matrix B der Anfangswert von B, nämlich $B_0$, modifiziert wird, indem die Gleichung (1) durch eine Gleichung ersetzt wird, die einem neuen Adaptionsgesetz entspricht, und/oder indem ein zusätzlicher Term $\delta$ hinzugefügt wird.

3. Verfahren nach Anspruch 1 oder 2, **dadurch gekennzeichnet, dass** die Modifikation der Matrix B dadurch erhalten wird, dass die anfängliche Gleichung (1) durch eine Gleichung ersetzt wird, die umfasst, dass zu der Gleichung (1) eine zusätzliche Funktion hinzugefügt ist, nämlich:

$$\frac{d\hat{B}_j^t}{dt} = -\beta_j Hu(y_j - y_j^{mes}) + \lambda f(\hat{B}_j^t) \,, \ (1.1)$$

wobei j, der Index der Eigenschaften des Gemisches, von 1 bis m läuft, wobei

· f eine von null verschiedene Funktion ist, die entsprechend einem Profil gewählt ist, das ermöglicht, wenigstens eine Beschränkung einzuführen, die Beschränkungen von Anschlüssen, einer Ordnungsbeziehung und/oder einer Gleichheit entspricht,
· $\lambda$ ein Gewichtungskoeffizient ist, der ermöglicht, die Schnelligkeit der Rückkehr der geschätzten Eigenschaften der Konstituenten in einem durch die Anschlüsse definierten zulässigen Bereich einzustellen, und
· H diagonal ist, um die Konvergenzeigenschaften des Verfahrens sicherzustellen.

4. Verfahren nach Anspruch 1 oder 2, **dadurch gekennzeichnet, dass** die Modifikation der Matrix B dadurch erhalten wird, dass die anfängliche Gleichung (1) durch eine Gleichung ersetzt wird, die dem Adaptionsgesetz gemäß der folgenden Gleichung entspricht:

$$\boxed{\frac{d\hat{B}_j^t}{dt} = -\beta_j H \frac{1}{\delta t} \int_{t-\delta t}^{t} u(\hat{B}_j u - y_j^{mes})ds} \ \ (1.2)$$

wobei j, der Index der Eigenschaften des Gemisches, von 1 bis m läuft,
wobei $\delta t$ das Integrationszeitfenster ist und s die Zeitvariable unter dem Integral ist.

5. Verfahren nach Anspruch 1 oder 2, **dadurch gekennzeichnet, dass** die Modifikation der Matrix B durch Ersetzen der anfänglichen Gleichung (1) durch eine Gleichung, die dem Adaptionsgesetz gemäß der folgenden Gleichung entspricht, erhalten wird:

$$\boxed{\frac{d\hat{B}_j^t}{dt} = -\frac{\beta_j}{\delta t} H \int_{t-\Delta-\frac{\delta t}{2}}^{t-\Delta+\frac{\delta t}{2}} u(s)(\hat{B}_j u(s) - y_j^{mes})ds} \ (1.3)$$

wobei j, der Index der Eigenschaften des Gemisches, von 1 bis m läuft,
wobei $\delta t$ das Integrationszeitfenster ist und $\Delta$ die Messverzögerung ist und s die Zeitvariable unter dem Integral ist.

6. Verfahren nach einem der vorhergehenden Ansprüche, **dadurch gekennzeichnet, dass** die Modifikation der Matrix B durch Hinzufügung eines zusätzlichen Terms $\delta$ zu wenigstens einer der Gleichungen (1), (1.1), (1.2) oder (1.3) erhalten wird und der folgenden Gleichung entspricht:

$$\hat{B}complète_j = (\hat{B}_j + \delta^t)(1.4)$$

wobei der Vektor $\delta$ die Gleichung $\delta^t * u = 0$ erfüllt, damit die Vorhersagen kraft der folgenden Gleichung unverändert bleiben (ISO-Vorhersage):

$$y = \hat{B}_j * u = (\hat{B}_j + \delta^t) * u \ \ (1.5)$$

t

**7.** Verfahren nach Anspruch 6, **dadurch gekennzeichnet, dass** der Vektor $\delta$ entweder durch eine direkte algebraische Berechnung oder durch sequentielle Optimierung unter Beschränkung definiert ist.

**8.** Verfahren nach einem der vorhergehenden Ansprüche, wobei die Eigenschaften $y_{mes}$ des Gemisches, die während des Schrittes (ii) gemessen werden, mittels eines ununterbrochenen Messprozesses an dem entwickelten Gemisch gemessen werden.

**9.** Steuerverfahren nach einem der Ansprüche 1 bis 8, **dadurch gekennzeichnet, dass** dann, wenn wenigstens ein Vorgemisch aus wenigstens zwei Konstituenten vor der Zubereitung des Gemisches vorhanden ist, die Variable u, die während der Operation (3) des Schrittes (ii) bestimmt wird, modifiziert wird, um die Verzögerungen, die durch Totvolumen, die in der Anlage auf Höhe der Vormischzonen vorhanden sind, zu berücksichtigen.

**10.** Steuerverfahren nach Anspruch 9, **dadurch gekennzeichnet, dass** durch Korrigieren der Matrix B während des Schrittes (ii) die Variable u, die für die Ausführung des Adaptionsgesetzes gemäß einer der Gleichungen (1.1), (1.2), (1.3) und (1.4) verwendet wird, durch eine Variable U mit $U(t) = (U_1(t), ..., U_n(t))^t$ zum Zeitpunkt t ersetzt wird, wobei der Rezepturvektor die Totvolumina berücksichtigt.

**11.** Steuerverfahren nach einem der Ansprüche 1 bis 10, **dadurch gekennzeichnet, dass** die am Ende des Schrittes (ii) bestimmte Rezeptur u mittels eines Optimierungsverfahrens erhalten wird, das aufeinander folgende Schritte umfasst, in deren Verlauf die Lösung eines Minimalproblems, das ein Minimum an prioritären Beschränkungen berücksichtigt, gesucht wird, falls ein vollständiges Problem, das die Gesamtheit der Beschränkungen berücksichtigt, undurchführbar ist, wobei die Anzahl zu berücksichtigender prioritärer Beschränkungen in jedem Schritt zunimmt, bis eine Rezeptur u erhalten wird, die das Maximum prioritärer Beschränkungen berücksichtigt.

**12.** Steuerverfahren nach einem der Ansprüche 1 bis 11, das für eine Anlage zum Zubereiten eines Gemisches aus n Konstituenten und aus Additiven bestimmt ist, **dadurch gekennzeichnet, dass** für eine Eigenschaft j des Gemisches, die das Additiv beeinflusst, das Steuermodell die Wirkung d der Hinzufügung des Additivs während der Operationen (2) und (3) des Schrittes (ii) gemäß: $y_j = \hat{B}_j u + d$ berücksichtigt.

**13.** Vorrichtung zum Entwickeln und Steuern eines Gemisches von Konstituenten, die Wege (4, 5, 6) zum Transportieren der zu mischenden Konstituenten (1, 2, 3) zu einem Hauptweg (7), der mit dem Ort (9) der Herstellung des Gemisches nach Rezept verbunden ist, Mittel (10) zum Steuern der Durchsätze der Konstituenten auf jedem Transportweg, Mittel (11) zum ununterbrochenen Messen der repräsentativen Parameter des Gemisches während der Entwicklung in dem Hauptweg und Mittel (12) zum Berechnen der Anteile der verschiedenen Konstituenten, die in das Gemisch eingehen, eine Schätzeinrichtung (13), die mit den Rechenmitteln verbunden ist, wobei die Schätzeinrichtung programmierte Mittel umfasst, um eine Schätzung der Eigenschaften der Konstituenten unter Verwendung der Messwerte der Eigenschaften des Gemisches, die durch die Messmittel (11) gemessen werden, zu erzeugen, umfasst, wobei die Rechenmittel programmierte Mittel umfassen, um mittels dieser Schätzung die Anteile der verschiedenen Konstituenten, die in das Gemisch eingehen, zu berechnen, um daraus ein Gemisch zu erhalten, das die vorgegebenen Eigenschaften aufweist, wobei diese Vorrichtung **dadurch gekennzeichnet ist, dass** die Schätzeinrichtung (13) programmierte Mittel umfasst, um wenigstens eine Beschränkung, die Beschränkungen von Anschlüssen, einer Ordnungsbeziehung und/oder der Gleichheit entspricht, in wenigstens eine der Eigenschaften der Konstituenten einzuführen, um die Matrix B des Schrittes (ii) des Verfahrens nach einem der Ansprüche 1 bis 12 zu korrigieren.

**14.** Vorrichtung nach Anspruch 13, **dadurch gekennzeichnet, dass** die Schätzeinrichtung (13) programmierte Synchronisationsmittel umfasst, um die Verzögerungen, die durch Totvolumina auf Höhe der Vormischzonen bedingt sind, zu berücksichtigen, wobei die Synchronisationsmittel programmiert sind, um die Gleichung (2)

$$\frac{d\hat{B}_j^t}{dt} \; = \; -\beta_j H U(t)(y_j(t) \; - \; y_j^{mes}(t))$$

mit $U(t) = (U_1(t), ..., U_n(t))^t$ aus der Operation (3) des Schrittes (ii) dieses Verfahrens auszuführen.

**15.** Vorrichtung nach Anspruch 13 oder 14, **dadurch gekennzeichnet, dass** sie einen Optimierer (14) umfasst, der mit den Rechenmitteln (12) und mit einem Mittel (15) zum Speichern von Zielen des Gemisches verbunden ist, wobei der Optimierer programmierte Mittel umfasst, um die Rezeptur u der Anteile der Konstituenten, die durch die Rechenmittel (12) bestimmt wird, als Funktion der Ziele des Gemisches, die in dem Speichermittel (15) gespeichert sind, zu optimieren.

**16.** Vorrichtung nach Anspruch 15, **dadurch gekennzeichnet, dass** sie wenigstens einen Additiv-Einlass (16), der über einen Transportweg (17) mit dem Hauptweg (7) stromabseitig der Mischzone der Konstituenten (1, 2, 3) verbunden ist, ein Steuermittel (10) für den Durchsatz des dem Einlass (16) zugeordneten Additivs, das in dem Transportweg (17) vorgesehen ist, und eine Steuereinheit (18) zum Einleiten des Additivs, die mit den Steuermitteln (10), mit dem Optimierer (14) und mit den Mitteln (15) zum Speichern der Mischziele verbunden ist, umfasst, wobei die Additiveinleitungs-Steuereinheit (18) für eine Eigenschaft j des Gemisches, die ein Additiv beeinflusst, den Anteil des Additivs optimieren kann, um die entsprechende Eigenschaft j des Gemisches unter Berücksichtigung eines Ziels, das von den Mitteln zum Speichern von Mischzielen geliefert wird, zu regulieren.

## Claims

**1.** Method for controlling the production of a mixture M of n constituents, comprising:

at time t = 0 a step (i) of estimating a reference recipe $\overline{u}$ on the basis of the properties of the n constituents assembled in a matrix $\hat{\mathbf{B}}$ having an initial value B0 using an adaptation law corresponding to the following equation (1)

$$\frac{d\hat{B}_j^t}{dt} = -\beta_j Hu(y_j - y_j^{mes}) \quad (1)$$
,

where j is the mixture property index ranging from 1 to m in which

• $\beta_j$, a strictly positive real number, is a constant for setting the convergence time, allowing the rate of convergence of the estimate to be differentiated property by property;
• the matrix H is a positive definite symmetric matrix having the purpose of ensuring normalization in taking into account the measurement-prediction deviation, allowing constituent quality prediction deviation calculation, so as to provide the method convergence properties; and

• $\hat{B}_j^t$ is the transpose of $\hat{\mathbf{B}}_j$, where j is the mixture property index,

and such that the properties $\hat{\mathbf{B}}\overline{u}$ of the mixture lie between predetermined minimum and maximum thresholds and/or for at least some of them are equal to predetermined target values, and the application of said equation to a real mixture of the constituents,
at a time t' = t+Δt, Δt being the period of transition between two consecutive calculation iterations, a step (ii) of correcting the matrix $\hat{\mathbf{B}}$ on the basis of the measured properties $y^{mes}$ of the mixture M manufactured, in order to calculate a new recipe u corresponding to the corrected matrix $\hat{\mathbf{B}}$ of the estimated properties of the constituents of the mixture, followed by the application of this new recipe u to the constituents for manufacturing the mixture M, this step (ii) comprising the following operations:

(1) the properties $y^{mes}$ of the mixture M obtained by applying the recipe calculated at the previous time are measured,
(2) a corrected matrix **B** is established on the basis of the properties $y^{mes}$ in (1), this matrix representing the estimate of the properties of the constituents as in (i),
(3) a new recipe u is determined on the basis of the matrix **B** established in step (2) in such a way that the properties $\hat{\mathbf{B}}u$ of the mixture lie between said predetermined thresholds and/or, for m' of them, are equal to said predetermined target values,
(4) this new recipe u is applied to the constituents, at time t'' = t'+Δt in a step (iii) identical to step (ii), this step (ii) being repeated identically throughout the duration of production of mixtures of the constituents,

the method being **characterized in that** the matrix **B** of step (ii) is corrected by at least one additional correction operation introducing at least one constraint corresponding to limit, order relationship and/or equality constraints on at least one of the properties of the constituents.

2. Method according to Claim 1, **characterized in that**, to correct the matrix $\hat{\mathbf{B}}$, the initial value of $\hat{\mathbf{B}}$, i.e. $B_0$, is modified by replacing equation (1) with an equation corresponding to a new adaptation law and/or by adding an additional term $\delta$.

3. Method according to Claim 1 or 2, **characterized in that** the matrix $\hat{\mathbf{B}}$ is modified by replacing the initial equation (1) with an equation comprising the addition of an additional function to equation (1), namely:

$$\frac{d\hat{B}_j^t}{dt} = -\beta_j Hu(y_j - y_j^{mes}) + \lambda f(\hat{B}_j^t) \quad (1.1)$$

where j is the mixture property index ranging from 1 to m
in which

   • f is a non-zero function chosen according to a profile for introducing at least one constraint corresponding to limit, order relationship and/or equality constraints;
   • $\lambda$ is a weighting coefficient which allows the speed of return of the estimated properties of the constituents into a permissible field defined by limits to be adjusted; and
   • H is a diagonal matrix, so as to ensure the convergence properties of the method.

4. Method according to Claim 1 or 2, **characterized in that** the matrix $\hat{\mathbf{B}}$ is modified by replacing the initial equation (1) with an equation corresponding to the adaptation law according to the following equation:

$$\frac{d\hat{B}_j^t}{dt} = -\beta_j H \frac{1}{\delta t} \int_{t-\delta t}^{t} u(\hat{B}_j u - y_j^{mes}) ds \quad (1.2)$$

where j is the mixture property index ranging from 1 to m
where $\delta t$ is the integration time window and s is the time variable under the integral.

5. Method according to Claim 1 or 2, **characterized in that** the matrix $\hat{\mathbf{B}}$ is modified by replacing the initial equation (1) with an equation corresponding to the adaptation law according to the following equation:

$$\frac{d\hat{B}_j^t}{dt} = -\frac{\beta_j}{\delta t} H \int_{t-\Delta-\frac{\delta t}{2}}^{t-\Delta+\frac{\delta t}{2}} u(s)(\hat{B}_j u(s) - y_j^{mes}) ds \quad (1.3)$$

where j is the mixture property index ranging from 1 to m
in which $\delta t$ is the integration time window and $\Delta$ is the measurement delay and s is the time variable under the integral.

6. Method according to any one of the preceding claims, **characterized in that** the matrix $\hat{\mathbf{B}}$ is modified by adding an additional term $\delta$ to at least one of equations (1), (1.1), (1.2) and (1.3) and corresponds to the following calculation:

$$\hat{B}complete_j = (\hat{B}_j + \delta^t) \quad (1.4)$$

in which the vector $\delta$ satisfies the equation $\delta^t * u = 0$, so that the predictions are unchanged (iso-prediction) by virtue of the equation:

$$y = \hat{B}_j * u = (\hat{B}_j + \delta^t) * u \quad (1.5).$$

**7.** Method according to Claim 6, **characterized in that** the vector $\delta$ is defined either by a direct algebraic calculation or by constrained sequential optimization.

**8.** Method according to any one of the preceding claims, in which the properties $y^{mes}$ of the mixture, measured during step (ii), are measured by means of a continuous measurement process on the mixture produced.

**9.** Control method according to any one of Claims 1 to 8, **characterized in that**, when there is at least one premixing operation involving at least two of the constituents before production of the mixture, the variable u determined during operation (3) of step (ii) is modified in order to take into account the delays due to the dead volumes present in the plant in the premixing zones.

**10.** Control method according to Claim 9, **characterized in that**, by correcting the matrix **B** during step (ii), the variable u used for implementing the adaptation law according to one of the equations (1.1), (1.2), (1.3) and (1.4) is replaced with a variable U where U(t) = $(U_1(t) , ... U_n(t))^t$, at time t, the recipe vector taking into account the dead volume.

**11.** Control method according to any one of Claims 1 to 10, **characterized in that** the recipe u determined at the end of step (ii) is obtained by means of an optimization process comprising sequential steps during which the solution of a minimum problem respecting a minimum of priority constraints is sought if a complete problem respecting all of the constraints is unfeasible, the number of priority constraints to be respected increasing at each step, until a recipe u respecting the maximum number of priority constraints is obtained.

**12.** Control method according to any one of the preceding Claims 1 to 11, intended for a plant for producing a mixture of n constituents and of additives, **characterized in that**, for a property j of the mixture on which the additive has an influence, the control model takes into account the effect d of the additive addition during operations (2) and (3) of step (ii) according to: $\mathbf{y_j = \hat{B}_j u + d.}$

**13.** System for producing and controlling a mixture of constituents, comprising transport channels (4, 5, 6) for transporting the constituents (1, 2, 3) to be mixed into a main channel (7) connected to the place (9) for receiving the mixture, means (10) for controlling the flow rates of the constituents in each transport channel, means (11) for continuously measuring, in the main channel, representative parameters of the mixture being produced, and means for (12) calculating the proportions of the various constituents involved in the mixture, an estimator (13) connected to the calculation means, the estimator comprising programmed means for producing an estimate of the properties of the constituents using the measurements of the properties of the mixture that are measured by the measurement means (11), the calculation means comprising programmed means for calculating, by means of this estimate, the proportions of the various constituents involved in the mixture so as to obtain a mixture having predetermined properties, this system being **characterized in that** the estimator (13) comprises programmed means for introducing at least one constraint corresponding to limit, order relationship and/or equality constraints on at least one of the properties of the constituents for correcting the matrix $\hat{\mathbf{B}}$ of step (ii) of the method according to any one of Claims 1 to 12.

**14.** System according to Claim 13, **characterized in that** the estimator (13) includes programmed synchronization means for taking into account the delays due to the dead volumes in the zones for premixing, said synchronization means being programmed to implement equation (2)

$$\frac{d\hat{B}_j^t}{dt} = -\beta_j HU(t)(y_j(t) - y_j^{mes}(t)) \ \text{with} \ U(t) = (U_1(t),...,U_n(t))^t,$$ of operation (3) of step (ii) of said method.

**15.** System according to Claim 13 or 14, **characterized in that** it includes an optimizer (14) connected to the calculation means (12) and to a mixture-objectives storage means (15), the optimizer including programmed means for optimizing the recipe u of the proportions of the constituents and said recipe being determined by the calculation means (12) as a function of the mixture objectives stored in said storage means (15).

**16.** System according to Claim 15, **characterized in that** it includes at least one additive tank (16) connected via a transport channel (17) to the main channel (7), downstream of the zone for mixing the constituents (1, 2, 3), a means (10) for controlling the additive flow rate associated with the tank (16) provided in the transport channel (17), and an additive injection controller (18) connected to said control means (10), to the optimizer (14) and to the mixture-objectives storage means (15), the additive injection controller (18) being capable, for a property j of the mixture on which an additive has an influence, of optimizing the proportion of the additive so as to regulate said corresponding property j of the mixture, taking into account a target supplied by the mixture-objectives storage means.

**Fig. 1**

**Fig. 2**

**Fig. 3**

## fig. 4

Mélange
Seuil minimum
Seuil maximum

Teneur en Soufre (ppm)

Nombre de passages (1 passage toutes les 5 minutes)

## fig. 5

BASE 2
BASE 3
BASE 4

Pourcentage de base

Nombre de passages (1 passage toutes les 5 minutes)

## fig. 6a

**Nombre de passages (1 passage toutes les 5 minutes)**

## fig. 6b

**Nombre de passages (1 passage toutes les 5 minutes)**

## fig. 6c

## fig. 6d

Fig. 6e

Teneur en Benzène

0,95
0,9
0,85
0,8
0,75
0,7
0,65
0,6
0,55
0,5

—— Valeurs instantanées

- - - - Valeurs intégrées

—— Valeurs de fond de bac

—— Consigne

1    11    21    31    41    51    61    71    81    91

**Nombre de passages (1 passage toutes les 5 minutes)**

## Fig. 7a

## Fig 7b

## Fig 7c

**Fig 7d**

**Fig 7e**

**Fig. 7f**

Figure 8

Figure 9

Figure 10

Figure 11

Figure 12

**EP 2 310 925 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6120173 A
- US 2004221889 A1

- FR 2901894